(19) Europäisches Patentamt / European Patent Office / Office européen des brevets

(11) **EP 3 978 830 A1**

(12) **EUROPEAN PATENT APPLICATION**
published in accordance with Art. 153(4) EPC

(43) Date of publication:
**06.04.2022 Bulletin 2022/14**

(21) Application number: **20827424.1**

(22) Date of filing: **19.06.2020**

(51) International Patent Classification (IPC):
*F25B 1/00* (2006.01)    *C09K 5/04* (2006.01)

(52) Cooperative Patent Classification (CPC):
**C09K 5/04; F25B 1/00**

(86) International application number:
**PCT/JP2020/024132**

(87) International publication number:
**WO 2020/256100 (24.12.2020 Gazette 2020/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.06.2019  JP 2019114163
29.01.2020  JP 2020012937**

(71) Applicant: **Daikin Industries, Ltd.
Osaka-shi, Osaka 530-8323 (JP)**

(72) Inventors:
• **ITANO, Mitsushi**
  **Osaka-shi, Osaka 530-8323 (JP)**
• **OHKUBO, Shun**
  **Osaka-shi, Osaka 530-8323 (JP)**
• **KARUBE, Daisuke**
  **Osaka-shi, Osaka 530-8323 (JP)**

(74) Representative: **Hoffmann Eitle
Patent- und Rechtsanwälte PartmbB
Arabellastraße 30
81925 München (DE)**

(54) **COMPOSITION CONTAINING REFRIGERANT, USE OF SAME, REFRIGERATOR COMPRISING THE SAME, AND METHOD FOR OPERATING SAID REFRIGERATOR**

(57) An object of the present disclosure is to provide a novel low-GWP mixed refrigerant. The present disclosure provides a composition comprising a refrigerant, the refrigerant comprising trans-1,2-difluoroethylene (HFO-1132(E)), difluoromethane (R32), and 1,3,3,3-tetrafluoropropene (R1234ze).

Fig. 2

EP 3 978 830 A1

**Description**

Technical Field

The present disclosure relates to a composition comprising a refrigerant, use of the composition, a refrigerating machine having the composition, and a method for operating the refrigerating machine.

Background Art

R410A is currently used as an air conditioning refrigerant for home air conditioners etc. R410A is a twocomponent mixed refrigerant of difluoromethane ($CH_2F_2$: HFC-32 or R32) and pentafluoroethane ($C_2HF_5$: HFC-125 or R125), and is a pseudo-azeotropic composition.
However, the global warming potential (GWP) of R410A is 2088. Due to growing concerns about global warming, R32, which has a GWP of 675, has been increasingly used.
For this reason, various low-GWP mixed refrigerants that can replace R410A have been proposed (PTL 1).

Citation List

Patent Literature

PTL 1: WO2015/141678

Summary of Invention

Technical Problem

An object of the present disclosure is to provide a novel low-GWP mixed refrigerant.

Solution to Problem

Item 1.

A composition comprising a refrigerant, the refrigerant comprising trans-1,2-difluoroethylene (HFO-1132(E)), difluoromethane (R32), and 1,3,3,3-tetrafluoropropene (R1234ze).

Item 2.

The composition according to Item 1, wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LM, MN, NB", B"J, JI, IH, HG, and GK that connect the following 9 points:

point K (72.0, 0.0, 28.0),
point L (48.6, 18.1, 33.3),
point M (35.7, 36.7, 27.6),
point N (28.9, 51.6, 19.5),
point B" (0.0, 51.4, 48.6),
point J (0.0, 39.1, 60.9),
point I (2.7, 36.5, 60.8),
point H (24.3, 18.0, 57.7), and
point G (50.9, 0.0, 49.1),

or on the line segments KL, LM, MN, NB", JI, IH, and HG (excluding point B", point J, point G, and point K),

the line segments LM, MN, NB", B"J, JI, IH, and GK are straight lines,
coordinates (x,y,z) of the points on the line segment KL are represented by (x, $0.0114x^2-2.1454x+95.397$, $-0.0114x^2+1.1454x+4.603$), and

coordinates (x,y,z) of the points on the line segment HG are represented by (x, $0.00319x^2$-$0.9195x$+$38.567$, -$0.00319x^2$-$0.0805x$+$61.433$).

Item 3.

The composition according to Item 1, wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LM, MI, IH, HG, and GK that connect the following 6 points:

point K (72.0, 0.0, 28.0),
point L (48.6, 18.1, 33.3),
point M (35.7, 36.7, 27.6),
point I (2.7, 36.5, 60.8),
point H (24.3, 18.0, 57.7), and
point G (50.9, 0.0, 49.1),

or on the line segments KL, LM, MI, IH, and HG (excluding point G and point K),

the line segments LM, MI, IH, and GK are straight lines,
coordinates (x,y,z) of the points on the line segment KL are represented by (x, $0.0114x^2$-$2.1454x$+$95.397$, -$0.0114x^2$+$1.1454x$+$4.603$), and
coordinates (x,y,z) of the points on the line segment HG are represented by (x, $0.00319x^2$-$0.9195x$+$38.567$, -$0.00319x^2$-$0.0805x$+$61.433$).

Item 4.

The composition according to Item 1, wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LH, HG, and GK that connect the following 4 points:

point K (72.0, 0.0, 28.0),
point L (48.6, 18.1, 33.3),
point H (24.3, 18.0, 57.7), and
point G (50.9, 0.0, 49.1),

or on the line segments KL, LH, and HG (excluding point G and point K),

the line segments LH and GK are straight lines,
coordinates (x,y,z) of the points on the line segment KL are represented by (x, $0.0114x^2$-$2.1454x$+$95.397$, -$0.0114x^2$+$1.1454x$+$4.603$), and
coordinates (x,y,z) of the points on the line segment HG are represented by (x, $0.00319x^2$-$0.9195x$+$38.567$, -$0.00319x^2$-$0.0805x$+$61.433$).

Item 5.

The composition according to Item 1, wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LM, MN, NF, FE, ED, DC, and CK that connect the following 8 points:

point K (72.0, 0.0, 28.0),
point L (48.6, 18.1, 33.3),
point M (35.7, 36.7, 27.6),

point N (28.9, 51.6, 19.5),
point F (1.0, 51.5, 47.5),
point E (16.7, 36.5, 46.8),
point D (39.8, 18.1, 42.1), and
point C (67.6, 0.0, 32.4),

or on the line segments KL, LM, MN, NF, FE, ED, and DC (excluding point C and point K),

the line segments LM, MN, NF, FE, ED, and CK are straight lines,
coordinates (x,y,z) of the points on the line segment KL are represented by (x, $0.0114x^2$-2.1454x+95.397, -$0.0114x^2$+1.1454x+4.603), and
coordinates (x,y,z) of the points on the line segment DC are represented by (x, $0.00257x^2$-0.9261x+50.903, -$0.00257x^2$-0.0739x+49.097).

Item 6.

The composition according to Item 1, wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LM, ME, ED, DC, and CK that connect the following 6 points:

point K (72.0, 0.0, 28.0),
point L (48.6, 18.1, 33.3),
point M (35.7, 36.7, 27.6),
point E (16.7, 36.5, 46.8),
point D (39.8, 18.1, 42.1), and
point C (67.6, 0.0, 32.4),

or on the line segments KL, LM, ME, ED, and DC (excluding point C and point K),

the line segments LM, ME, ED, and CK are straight lines,
coordinates (x,y,z) of the points on the line segment KL are represented by (x, $0.0114x^2$-2.1454x+95.397, -$0.0114x^2$+1.1454x+4.603), and
coordinates (x,y,z) of the points on the line segment DC are represented by (x, $0.00257x^2$-0.9261x+50.903, -$0.00257x^2$-0.0739x+49.097).

Item 7.

The composition according to Item 1, wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LD, DC, and CK that connect the following 4 points:

point K (72.0, 0.0, 28.0),
point L (48.6, 18.1, 33.3),
point D (39.8, 18.1, 42.1), and
point C (67.6, 0.0, 32.4),

or on the line segments KL, LD, and DC (excluding point C and point K),

the line segments LD and CK are straight lines,
coordinates (x,y,z) of the points on the line segment KL are represented by (x, $0.0114x^2$-2.1454x+95.397, -$0.0114x^2$+1.1454x+4.603), and
coordinates (x,y,z) of the points on the line segment DC are represented by (x, $0.00257x^2$-0.9261x+50.903, -$0.00257x^2$-0.0739x+49.097).

Item 8.

The composition according to Item 1, wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by straight lines VR, RS, SB", B"J, JI, and IV that connect the following 6 points:

> point V (17.1, 24.2, 58.7),
> point R (16.1, 36.6, 47.3),
> point S (15.9, 51.4, 32.7),
> point B" (0.0, 51.4, 48.6),
> point J (0.0, 39.1, 60.9), and
> point I (2.7, 36.5, 60.8),

or on the straight lines VR, RS, SB", JI, and IV (excluding point B" and point J).

Item 9.

The composition according to Item 1, wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by straight lines US, SF, and FU that connect the following 3 points:

> point U (16.1, 37.1, 46.8),
> point S (15.9, 51.4, 32.7), and
> point F (1.0, 51.5, 47.5),

or on the straight lines US, SF, and FU.

Item 10.

The composition according to Item 1, wherein the refrigerant further comprises R1234yf.

Item 11.

The composition according to Item 10, wherein
when the mass% of HFO-1132(E) is x, the mass% of R32 is y, and the mass% of the sum of R1234ze and R1234yf is z, based on the sum of HFO-1132(E), R32, R1234ze, and R1234yf in the refrigerant, and when r=R1234yf/(R1234ze+R1234yf),

> (1) if $0.2 \geq r > 0$, coordinates (x,y,z) in a ternary composition diagram whose first vertex represents HFO-1132(E), second vertex represents R32, and third vertex represents the sum of 1234ze and R1234yf are within the range of a figure surrounded by line segments $K_rL_r$, $L_rM_r$, $M_rN_r$, $N_rB_r$", $B_r$" $J_r$, $J_rI_r$, $I_rH_r$, $H_rG_r$, and $G_rK_r$ that connect the following 9 points:

>> point $K_r$ (72.0, 0.0, 28.0),
>> point $L_r$ ($-0.0618r^2-0.0675r+48.612$, $0.0618r^2+0.0675r+18.088$, 33.3),
>> point $M_r$ ($-0.0618r^2-0.0675r+35.712$, $0.0618r^2+0.0675r+36.688$, 27.6),
>> point $N_r$ ($-0.0618r^2-0.0675r+28.912$, $0.0618r^2+0.0675r+51.588$, 19.5),
>> point $B_r$" (0, $-0.2268r^2+0.2922r+51.422$, $0.0083r^2-0.1392r+82.165$),
>> point $J_r$ (0, $0.9705r^2-13.268r+39.105$, $-0.9705r^2+13.268r+60.895$),
>> point $I_r$ ($-13.5r+2.7$, 36.5, $13.5r+60.8$),
>> point $H_r$ ($-0.4195r^2-12.988r+24.311$, $0.0618r^2+0.0675r+17.988$, $0.3577r^2+12.9205r+57.701$), and
>> point $G_r$ ($-0.1892r^2-11.155r+50.918$, 0.0, $0.1892r^2+11.155r+49.082$), or on the line segments $K_rL_r$, $L_rM_r$, $M_rN_r$, $N_rB_r$", $J_rI_r$, $I_rH_r$, and $H_rG_r$ (excluding point $B_r$", point $J_r$, point $G_r$, and point $K_r$),

the line segments $L_rM_r$, $M_rN_r$, $N_rB_r$", $B_r$" $J_r$, $J_rI_r$, $I_rH_r$, and $G_rK_r$ are straight lines,
coordinates (x,y,z) of the points on the line segment $K_rL_r$ are represented by (x, 100-x-z, -0.0114x$^2$+1.1454x+4.503), and
coordinates (x,y,z) of the points on the line segment $H_rG_r$ are represented by (x, 100-x-z, (0.00965r$^2$-0.0024r-0.00319)x$^2$+(-0.6153r$^2$+0.0221r-0.0805)x+(11.593r$^2$+10.251r+61.433)),

(2) if 1>r>0.2, coordinates (x,y,z) in the ternary composition diagram are within the range of a figure surrounded by line segments $K_rL_r$, $L_rM_r$, $M_rN_r$, $N_rB_r$", $B_r$" $J_r$, $J_rH_r$, $H_rG_r$, and $G_rK_r$ that connect the following 8 points:

point $K_r$ (72.0, 0.0, 28.0),
point $L_r$ (-0.0618r$^2$-0.0675r+48.612, 0.0618r$^2$+0.0675r+18.088, 33.3),
point $M_r$ (-0.0618r$^2$-0.0675r+35.712, 0.0618r$^2$+0.0675r+36.688, 27.6),
point $N_r$ (-0.0618r$^2$-0.0675r+28.912, 0.0618r$^2$+0.0675r+51.588, 19.5),
point $B_r$" (0, -0.2268r$^2$+0.2922r+51.422, 0.0083r$^2$-0.1392r+82.165),
point $J_r$ (0, 0.9705r$^2$-13.268r+39.105, -0.9705r$^2$+13.268r+60.895),
point $H_r$ (-0.4195r$^2$-12.988r+24.311, 0.0618r$^2$+0.0675r+17.988, 0.3577r$^2$+12.9205r+57.701), and
point $G_r$ (-0.1892r$^2$-11.155r+50.918, 0.0, 0.1892r$^2$+11.155r+49.082), or on the line segments $K_rL_r$, $L_rM_r$, $M_rN_r$, $N_rB_r$", $J_rH_r$, and $H_rG_r$ (excluding point $B_r$", point $J_r$, point $G_r$, and point $K_r$), and

the line segments $L_rM_r$, $M_rN_r$, $N_rB_r$", $B_r$" $J_r$, $J_rH_r$, and $G_rK_r$ are straight lines,
wherein
(2-1) if 0.27≥r>0.2,
coordinates (x,y,z) of the points on the line segment $K_rL_r$ are represented by (x, 100-x-z, -0.0114x$^2$+1.1454x+4.503), and
coordinates (x,y,z) of the points on the line segment $H_rG_r$ are represented by (x, 100-x-z, ((0.00965r$^2$-0.0024r-0.00319)x$^2$+(-0.6153r$^2$+0.0221r-0.0805)x+(11.593r$^2$+10.251r+61.433)), and
(2-2) if 0.64≥r>0.27,
coordinates (x,y,z) of the points on the line segment $K_rL_r$ are represented by (x, 100-x-z, (0.0003861r$^2$-0.0002973r-0.011348)x$^2$+(-0.050193r$^2$+0.038649r+1.1386)x+(1.583r$^2$-1.2189r+4.8167)), and
coordinates (x,y,z) of the points on the line segment $H_rG_r$ are represented by (x, 100-x-z, (0.011147r$^2$-0.010278r-0.00111674)x$^2$+(-0.8771r$^2$+0.6728r-0.2371)x+(12.661r$^2$+0.7382r+63.924)), and

(3) if 1>r>0.64,

coordinates (x,y,z) of the points on the line segment $K_rL_r$ are represented by (x, 100-x-z, -0.01138x$^2$+1.1428x+4.685), and
coordinates (x,y,z) of the points on the line segment $H_rG_r$ are represented by (x, 100-x-z, (0.0003r$^2$-0.0006r-0.0029)x$^2$+(0.0062r$^2$-0.1212r-0.0907)x+(2.1759r$^2$+15.588r+61.137)).

Item 12.

The composition according to Item 10, wherein
when the mass% of HFO-1132(E) is x, the mass% of R32 is y, and the mass% of the sum of R1234ze and R1234yf is z, based on the sum of HFO-1132(E), R32, R1234ze, and R1234yf in the refrigerant, and when r=R1234yf/(R1234ze+R1234yf), coordinates (x,y,z) in a ternary composition diagram whose first vertex represents HFO-1132(E), second vertex represents R32, and third vertex represents the sum of 1234ze and R1234yf are within the range of a figure surrounded by line segments $K_rL_r$, $L_rH_r$, $H_rG_r$, and $G_rK_r$ that connect the following 4 points:

point $K_r$ (72.0, 0.0, 28.0),
point $L_r$ (-0.0618r$^2$-0.0675r+48.612, 0.0618r$^2$+0.0675r+18.088, 33.3),
point $H_r$ (-0.4195r$^2$-12.988r+24.311, 0.0618r$^2$+0.0675r+17.988, 0.3577r$^2$+12.9205r+57.701), and
point $G_r$ (-0.1892r$^2$-11.155r+50.918, 0.0, 0.1892r$^2$+11.155r+49.082), or on the line segments $K_rL_r$, $L_rH_r$, and $H_rG_r$ (excluding point $G_r$ and point $K_r$), and

the line segments $L_rH_r$ and $G_rK_r$ are straight lines,
wherein
(2-1) if 0.27≥r>0.2,
coordinates (x,y,z) of the points on the line segment $K_rL_r$ are represented by (x, 100-x-z,

-0.0114x$^2$+1.1454x+4.503), and

coordinates (x,y,z) of the points on the line segment H$_r$G$_r$ are represented by (x, 100-x-z, ((0.00965r$^2$-0.0024r-0.00319)x$^2$+(-0.6153r$^2$+0.0221r-0.0805)x+(11.593r$^2$+10.251r+61.433)),

(2-2) if 0.64≥r>0.27,

coordinates (x,y,z) of the points on the line segment K$_r$L$_r$ are represented by (x, 100-x-z, (0.0003861r$^2$-0.0002973r-0.011348)x$^2$+(-0.050193r$^2$+0.038649r+1.1386)x+(1.583r$^2$-1.2189r+4.8167)), and

coordinates (x,y,z) of the points on the line segment H$_r$G$_r$ are represented by (x, 100-x-z, (0.011147r$^2$-0.010278r-0.00111674)x$^2$+(-0.8771r$^2$+0.6728r-0.2371)x+(12.661r$^2$+0.7382r+63.924)), and

(2-3) if 1>r>0.64,

coordinates (x,y,z) of the points on the line segment K$_r$L$_r$ are represented by (x, 100-x-z, -0.01138x$^2$+1.1428x+4.685), and

coordinates (x,y,z) of the points on the line segment H$_r$G$_r$ are represented by (x, 100-x-z, (0.0003r$^2$-0.0006r-0.0029)x$^2$+(0.0062r$^2$-0.1212r-0.0907)x+(2.1759r$^2$+15.588r+61.137)).

Item 13.

The composition according to Item 10, wherein
when the mass% of HFO-1132(E) is x, the mass% of R32 is y, and the mass% of the sum of R1234ze and R1234yf is z, based on the sum of HFO-1132(E), R32, R1234ze, and R1234yf in the refrigerant, and when r=R1234yf/(R1234ze+R1234yf),

(1) if 0.2≥r>0, coordinates (x,y,z) in a ternary composition diagram whose first vertex represents HFO-1132(E), second vertex represents R32, and third vertex represents the sum of 1234ze and R1234yf are within the range of a figure surrounded by line segments V$_r$R$_r$, R$_r$S$_r$, S$_r$B$_r$", B$_r$"J$_r$, J$_r$I$_r$, and I$_r$V$_r$ that connect the following 6 points:

point V$_r$ (-4.2328r$^2$+14.847r+17.1, 14.815r$^2$-26.963r+24.2, - 10.5822r$^2$+12.116r+58.7),
point R$_r$ (-1.3862r$^2$+7.8917r+16.089, 0.0937r$^2$+0.1466r+36.581, 1.2925r$^2$-8.0383r+47.33),
point S$_r$ (-0.3578r$^2$+4.1741r+15.894, -0.1332r$^2$+0.4388r+51.403, - 0.491r$^2$-4.6129r+32.703),
point B$_r$" (0, -0.2268r$^2$+0.2922r+51.422, 0.0083r$^2$-0.1392r+82.165),
point J$_r$ (0, 0.9705r$^2$-13.268r+39.105, -0.9705r$^2$+13.268r+60.895), and
point I$_r$ (-13.5r+2.7, 36.5, 13.5r+60.8),
or on the line segments V$_r$R$_r$, R$_r$S$_r$, S$_r$B$_r$", J$_r$I$_r$, and I$_r$V$_r$ (excluding point B$_r$" and point J$_r$), and
the line segments V$_r$R$_r$, R$_r$S$_r$, S$_r$B$_r$", B$_r$"J$_r$, J$_r$I$_r$, and I$_r$V$_r$ are straight lines,

(2) if 0.27≥r>0.2, coordinates (x,y,z) in the ternary composition diagram are within the range of a figure surrounded by line segments V$_r$R$_r$, R$_r$S$_r$, S$_r$B$_r$", B$_r$"J$_r$, and J$_r$V$_r$ that connect the following 5 points:

point V$_r$ (-4.2328r$^2$+14.847r+17.1, 14.815r$^2$-26.963r+24.2, - 10.5822r$^2$+12.116r+58.7),
point R$_r$ (-1.3862r$^2$+7.8917r+16.089, 0.0937r$^2$+0.1466r+36.581, 1.2925r$^2$-8.0383r+47.33),
point S$_r$ (-0.3578r$^2$+4.1741r+15.894, -0.1332r$^2$+0.4388r+51.403, 0.491r$^2$-4.6129r+32.703),
point B$_r$" (0, -0.2268r$^2$+0.2922r+51.422, 0.0083r$^2$-0.1392r+82.165), and
point J$_r$ (0, 0.9705r$^2$-13.268r+39.105, -0.9705r$^2$+13.268r+60.895), or on the line segments V$_r$R$_r$, R$_r$S$_r$, S$_r$B$_r$", and J$_r$V$_r$ (excluding point B$_r$" and point J$_r$), and
the line segments V$_r$R$_r$, R$_r$S$_r$, S$_r$B$_r$", B$_r$"J$_r$, , and J$_r$V$_r$ are straight lines,

(3) if 0.64≥r>0.27, coordinates (x,y,z) in the ternary composition diagram are within the range of a figure surrounded by line segments V$_r$Q$_r$, Q$_r$R$_r$, R$_r$S$_r$, S$_r$B$_r$", B$_r$"J$_r$, J$_r$H$_r$, and H$_r$V$_r$ that connect the following 7 points:

point V$_r$ (113.4r$^2$-64.271r+29.887, -64.63r$^2$+23.678r+16.318, - 48.77r$^2$+40.5931r +53.795),
point Q$_r$ (-6.2112r$^2$+15.652r+17.027, 0.7554r$^2$-0.1469r+17.985, 5.4558r$^2$-15.5051r+64.988),
point R$_r$ (-1.3862r$^2$+7.8917r+16.089, 0.0937r$^2$+0.1466r+36.581, 1.2925r$^2$-8.0383r+47.33),
point S$_r$ (-0.3578r$^2$+4.1741r+15.894, -0.1332r$^2$+0.4388r+51.403, 0.491r$^2$-4.6129r+32.703),
point B$_r$" (0, -0.2268r$^2$+0.2922r+51.422, 0.0083r$^2$-0.1392r+82.165),
point J$_r$ (0, 0.9705r$^2$-13.268r+39.105, -0.9705r$^2$+13.268r+60.895), and
point H$_r$ (-0.4195r$^2$-12.988r+24.311, 0.0618r$^2$+0.0675r+17.988, 0.3577r$^2$+12.9205r+57.701),
or on the line segments V$_r$Q$_r$, Q$_r$R$_r$, R$_r$S$_r$, S$_r$B$_r$", J$_r$H$_r$, and H$_r$V$_r$ (excluding point B$_r$" and point J$_r$), and
the line segments V$_r$R$_r$, Q$_r$R$_r$, R$_r$S$_r$, S$_r$B$_r$", B$_r$"J$_r$, J$_r$H$_r$, and H$_r$V$_r$ are straight lines, and

(4) if 1.0>r>0.64, coordinates (x,y,z) in the ternary composition diagram are within the range of a figure surrounded by line segments $O_rP_r$, $P_rQ_r$, $Q_rR_r$, $R_rS_r$, $S_rB_r''$, $B_r''J_r$, $J_rH_r$, $H_rG_r$, and GrKr that connect the following 9 points:

point $O_r$ $(-3.0864r^2+15.617r+40.069, 0.0, 3.0864r^2-15.617r+59.931)$,
point $P_r$ $(-6.1728r^2+21.235r+24.138, 5.0, 6.1728r^2-21.235r+70.862)$,
point $Q_r$ $(8.8889r+18.811, 18.2, -8.8889r+62.989)$,
point $R_r$ $(-1.3862r^2+7.8917r+16.089, 0.0937r^2+0.1466r+36.581, 1.2925r^2-8.0383r+47.33)$,
point $S_r$ $(-0.3578r^2+4.1741r+15.894, -0.1332r^2+0.4388r+51.403, 0.491r^2-4.6129r+32.703)$,
point $B_r''$ $(0, -0.2268r^2+0.2922r+51.422, 0.0083r^2-0.1392r+82.165)$,
point $J_r$ $(0, 0.9705r^2-13.268r+39.105, -0.9705r^2+13.268r+60.895)$,
point $H_r$ $(-0.4195r^2-12.988r+24.311, 0.0618r^2+0.0675r+17.988, 0.3577r^2+12.9205r+57.701)$, and
point $G_r$ $(-0.1892r^2-11.155r+50.918, 0.0, 0.1892r^2+11.155r+49.082)$, or on the line segments $O_rP_r$, $P_rQ_r$, $Q_rR_r$, $R_rS_r$, $S_rB_r''$, $J_rH_r$, and $H_rG_r$ (excluding point $O_r$, point $B_r''$, point $J_r$, and point $G_r$),

the line segments $Q_rR_r$, $R_rS_r$, $S_rB_r''$, $Br''J_r$, and $J_rH_r$ are straight lines,
coordinates (x,y,z) of the points on the line segment $O_rP_r$ are represented by $(x, 100-x-z, (0.0077r^2-0.014r-0.004)x^2+(-0.7731r^2+1.6132r-0.5209)x+(19.074r^2-47.72r+87.771))$,
coordinates (x,y,z) of the points on the line segment $P_rQ_r$ are represented by $(x, 100-x-z, (-0.179r^2+0.2997r-0.2085)x^2+(11.347r^2-17.461r+12.133)x+(-180.86r^2+243.12r-107.55))$, and
coordinates (x,y,z) of the points on the line segment $H_rG_r$ are represented by $(x, 100-x-z, (0.0003r^2-0.0006r-0.0029)x^2+(0.0062r^2-0.1212r-0.0907)x+(2.1759r^2+15.588r+61.137))$.

Item 14.

The composition according to any one of Items 1 to 13, for use as a working fluid for a refrigerating machine, wherein the composition further comprises a refrigeration oil.

Item 15.

The composition according to any one of Items 1 to 14, for use as an alternative refrigerant for R410A.

Item 16.

Use of the composition according to any one of Items 1 to 14 as an alternative refrigerant for R410A.

Item 17.

A refrigerating machine comprising the composition according to any one of Items 1 to 14 as a working fluid.

Item 18.

A method for operating a refrigerating machine, comprising the step of circulating the composition according to any one of Items 1 to 14 as a working fluid in a refrigerating machine.

Advantageous Effects of Invention

The refrigerant according to the present disclosure has a low GWP.

Brief Description of Drawings

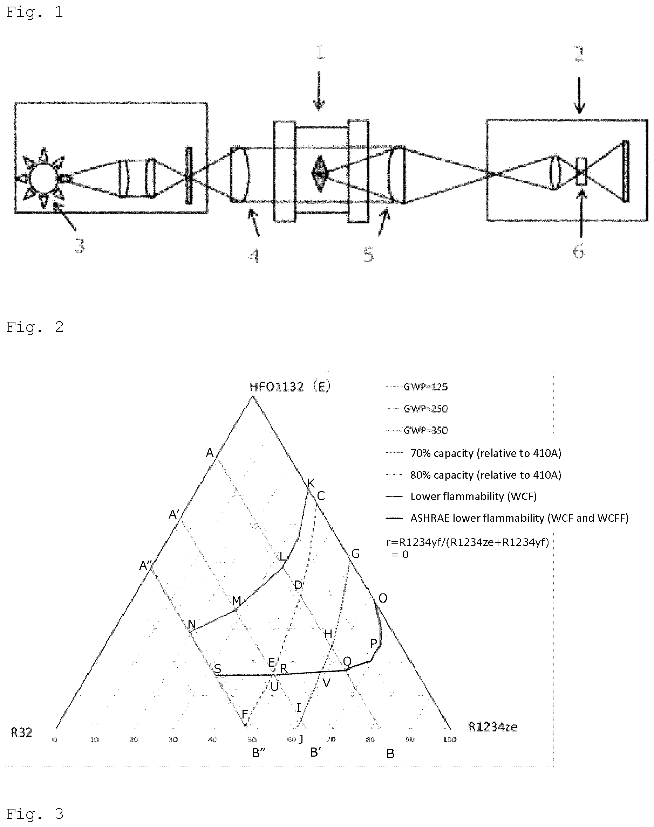

Fig. 1 is a schematic view of an apparatus used in a flammability test.
Fig. 2 is a diagram showing points A to S, U, and V, and line segments that connect these points to each other in a ternary composition diagram in which the sum of HFO-1132(E), R32, and R1234ze is 100 mass%.

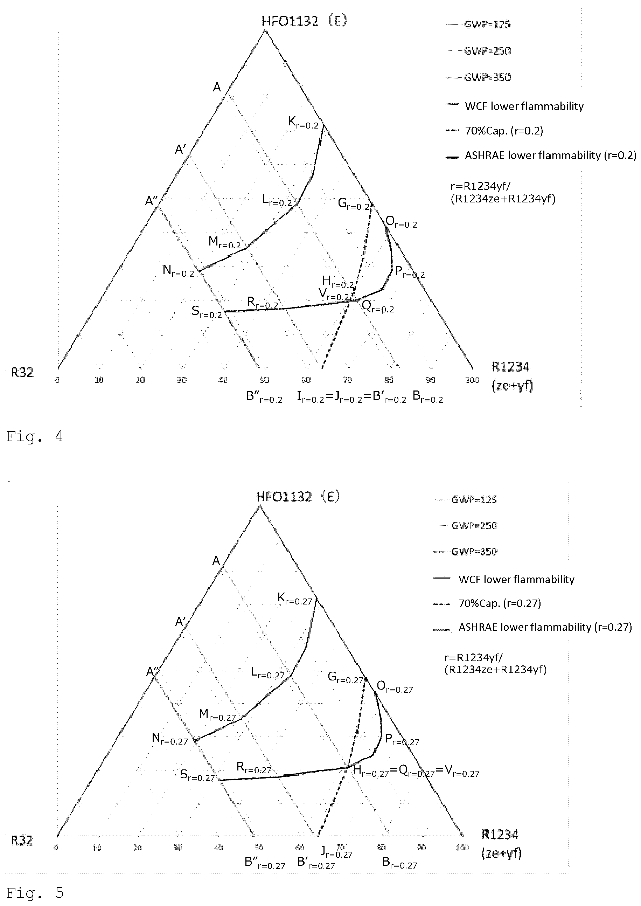

Fig. 3 is a diagram showing point $K_{r=0.2}$, point $L_{r=0.2}$, point $M_{r=0.2}$, point $N_{r=0.2}$, point $B''_{r=0.2}$, point $J_{r=0.2}$, point $I_{r=0.2}$, point $H_{r=0.2}$, point $G_{r=0.2}$, point $O_{r=0.2}$, point $P_{r=0.2}$, point $Q_{r=0.2}$, point $R_{r=0.2}$, point $S_{r=0.2}$, and point $V_{r=0.2}$, and line segments that connect these points to each other in a ternary composition diagram whose first vertex represents HFO-1132(E), second vertex represents R32, and third vertex represents the sum of 1234ze and R1234yf when the sum of HFO-1132(E), R32, R1234ze, and R1234yf is 100 mass%, and when r=R1234yf/(R1234ze+R1234yf)=0.2.

Fig. 4 is a diagram showing point $K_{r=0.27}$, point $L_{r=0.27}$, point $M_{r=0.27}$, point $N_{r=0.27}$, point $B''_{r=0.27}$, point $J_{r=0.27}$, point $H_{r=0.27}$, point $G_{r=0.27}$, point $O_{r=0.27}$, point $P_{r=0.27}$, point $Q_{r=0.27}$, point $R_{r=0.27}$, point $S_{r=0.27}$, and point $V_{r=0.27}$, and line segments that connect these points to each other in a ternary composition diagram whose first vertex represents HFO-1132(E), second vertex represents R32, and third vertex represents the sum of 1234ze and R1234yf when the sum of HFO-1132(E), R32, R1234ze, and R1234yf is 100 mass%, and when r=R1234yf/(R1234ze+R1234yf)=0.27.

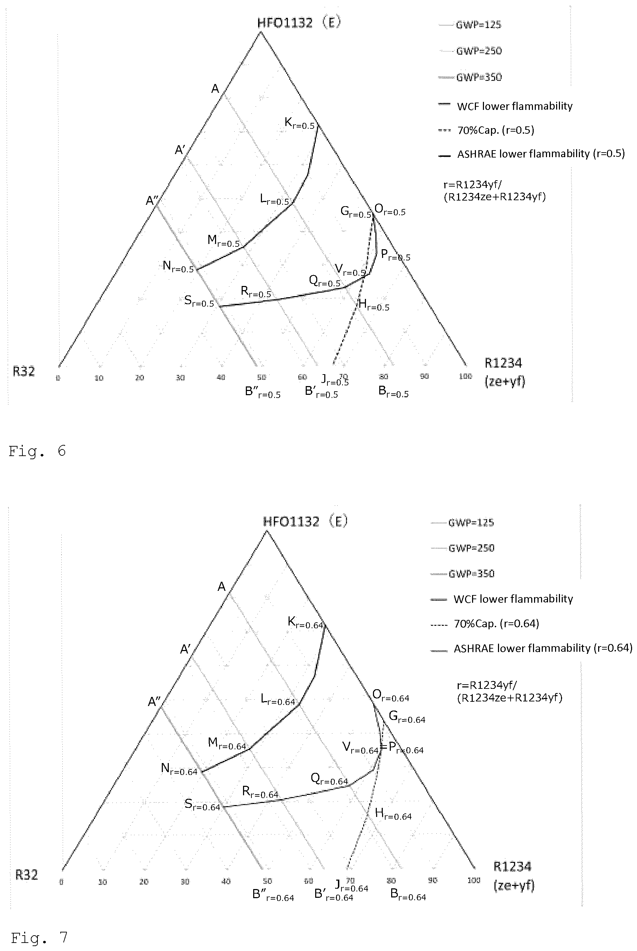

Fig. 5 is a diagram showing point $K_{r=0.5}$, point $L_{r=0.5}$, point $M_{r=0.5}$, point $N_{r=0.5}$, point $B''_{r=0.5}$, point $J_{r=0.5}$, point $H_{r=0.5}$, point $G_{r=0.5}$, point $O_{r=0.5}$, point $P_{r=0.5}$, point $Q_{r=0.5}$, point $R_{r=0.5}$, point $S_{r=0.5}$, and point $V_{r=0.5}$, and line segments that connect these points to each other in a ternary composition diagram whose first vertex represents HFO-1132(E), second vertex represents R32, and third vertex represents the sum of 1234ze and R1234yf when the sum of HFO-1132(E), R32, R1234ze, and R1234yf is 100 mass%, and when r=R1234yf/(R1234ze+R1234yf)=0.5.

Fig. 6 is a diagram showing point $K_{r=0.64}$, point $L_{r=0.64}$, point $M_{r=0.64}$, point $N_{r=0.64}$, point $B''_{r=0.64}$, point $J_{r=0.64}$, point $H_{r=0.64}$, point $G_{r=0.64}$, point $O_{r=0.64}$, point $P_{r=0.64}$, point $Q_{r=0.64}$, point $R_{r=0.64}$, point $S_{r=0.64}$, and point $V_{r=0.64}$, and line segments that connect these points to each other in a ternary composition diagram whose first vertex represents HFO-1132(E), second vertex represents R32, and third vertex represents the sum of 1234ze and R1234yf when the sum of HFO-1132(E), R32, R1234ze, and R1234yf is 100 mass%, and when r=R1234yf/(R1234ze+R1234yf)=0.64.

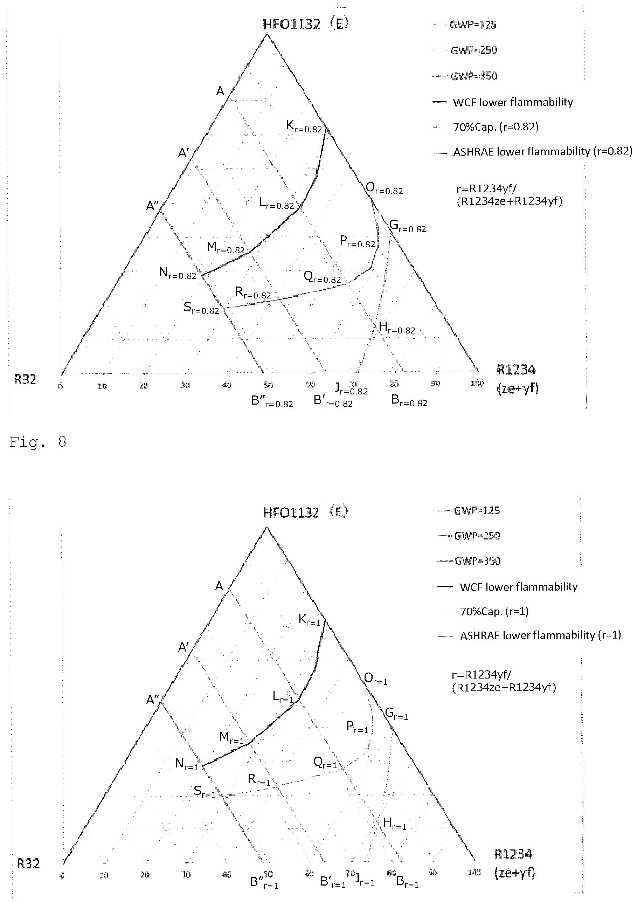

Fig. 7 is a diagram showing point $K_{r=0.82}$, point $L_{r=0.82}$, point $M_{r=0.82}$, point $N_{r=0.82}$, point $B''_{r=0.82}$, point $J_{r=0.82}$, point $H_{r=0.82}$, point $G_{r=0.82}$, point $O_{r=0.82}$, point $P_{r=0.82}$, point $Q_{r=0.82}$, point $R_{r=0.82}$, point $S_{r=0.82}$, and point $V_{r=0.82}$, and line segments that connect these points to each other in a ternary composition diagram whose first vertex represents HFO-1132(E), second vertex represents R32, and third vertex represents the sum of 1234ze and R1234yf when the sum of HFO-1132(E), R32, R1234ze, and R1234yf is 100 mass%, and when r=R1234yf/(R1234ze+R1234yf)=0.82.

Fig. 8 is a diagram showing point $K_{r=1.0}$, point $L_{r=1.0}$, point $M_{r=1.0}$, point $N_{r=1.0}$, point $B''_{r=1.0}$, point $J_{r=1.0}$, point $H_{r=1.0}$, point $G_{r=1.0}$, point $O_{r=1.0}$, point $P_{r=1.0}$, point $Q_{r=1.0}$, point $R_{r=1.0}$, point $S_{r=1.0}$, and point $V_{r=1.0}$, and line segments that connect these points to each other in a ternary composition diagram whose first vertex represents HFO-1132(E), second vertex represents R32, and third vertex represents the sum of 1234ze and R1234yf when the sum of HFO-1132(E), R32, R1234ze, and R1234yf is 100 mass%, and when r=R1234yf/(R1234ze+R1234yf)=1.0.

Description of Embodiments

The present inventors conducted intensive studies to solve the above problems, and consequently found that a mixed refrigerant comprising trans-1,2-difluoroethylene (HFO-1132(E)), difluoromethane (R32), and 1,3,3,3-tetrafluoropropene (R1234ze) has the above properties.

The present disclosure has been completed as a result of further research based on this finding. The present disclosure includes the following embodiments.

Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Non-fluorocarbon compounds include propane (R290), propylene (R1270), butane (R600), isobutane (R600a), carbon dioxide (R744), ammonia (R717), and the like.

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oilcontaining working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, a refrigerant having "WCF lower flammability" means that the most flammable composition (worst case of formulation for flammability: WCF) has a burning velocity of 10 cm/s or less according to the US ANSI/ASHRAE Standard 34-2013. Further, in the present specification, a refrigerant having "ASHRAE lower flammability" means that the burning velocity of WCF is 10 cm/s or less, that the most flammable fraction composition (worst case of fractionation for flammability: WCFF), which is specified by performing a leakage test during storage, shipping, or use based on ANSI/ASHRAE 34-2013 using WCF, has a burning velocity of 10 cm/s or less, and that the flammability classification according to the US ANSI/ASHRAE Standard 34-2013 is determined to be classified as "Class 2L."

1. Refrigerant

1.1 Refrigerant Component

The refrigerant according to the present disclosure comprises trans-1,2-difluoroethylene (HFO-1132(E)), difluoromethane (R32), and 1,3,3,3-tetrafluoropropene (R1234ze).

The refrigerant according to the present disclosure has a low GWP.

The refrigerant according to the present disclosure is preferably a refrigerant wherein
when the mass% of HFO-1132(E), R32, and R1234ze based on their sum is respectively represented by x, y, and z, coordinates (x,y,z) in a ternary composition diagram in which the sum of HFO-1132(E), R32, and R1234ze is 100 mass% are within the range of a figure surrounded by line segments KL, LM, MN, NB", B"J, JI, IH, HG, and GK that connect the following 9 points:

point K (72.0, 0.0, 28.0),
point L (48.6, 18.1, 33.3),
point M (35.7, 36.7, 27.6),
point N (28.9, 51.6, 19.5),
point B" (0.0, 51.4, 48.6),
point J (0.0, 39.1, 60.9),
point I (2.7, 36.5, 60.8),
point H (24.3, 18.0, 57.7), and
point G (50.9, 0.0, 49.1),

or on the line segments KL, LM, MN, NB", JI, IH, and HG (excluding point B", point J, point G, and point K),

the line segments LM, MN, NB", B"J, JI, IH, and GK are straight lines,
coordinates (x,y,z) of the points on the line segment KL are represented by (x, $0.0114x^2-2.1454x+95.397$, $-0.0114x^2+1.1454x+4.603$), and
coordinates (x,y,z) of the points on the line segment HG are represented by (x, $0.00319x^2-0.9195x+38.567$, $-0.00319x^2-0.0805x+61.433$). When the requirements above are satisfied, the refrigerant according to the present disclosure has a refrigerating capacity ratio of 70% or more relative to that of R410A, and a GWP of 350 or less, and further ensures a WCF lower flammability.

The refrigerant according to the present disclosure is preferably a refrigerant wherein
when the mass% of HFO-1132(E), R32, and R1234ze based on their sum is respectively represented by x, y, and z, coordinates (x,y,z) in a ternary composition diagram in which the sum of HFO-1132(E), R32, and R1234ze is 100 mass% are within the range of a figure surrounded by line segments KL, LM, MI, IH, HG, and GK that connect the following 6 points:

point K (72.0, 0.0, 28.0),
point L (48.6, 18.1, 33.3),
point M (35.7, 36.7, 27.6),
point I (2.7, 36.5, 60.8),
point H (24.3, 18.0, 57.7), and
point G (50.9, 0.0, 49.1),

or on the line segments KL, LM, MI, IH, and HG (excluding point G and point K),

the line segments LM, MI, IH, and GK are straight lines,
coordinates (x,y,z) of the points on the line segment KL are represented by (x, $0.0114x^2-2.1454x+95.397$, $-0.0114x^2+1.1454x+4.603$), and
coordinates (x,y,z) of the points on the line segment HG are represented by (x, $0.00319x^2-0.9195x+38.567$, $-0.00319x^2-0.0805x+61.433$). When the requirements above are satisfied, the refrigerant according to the present disclosure has a refrigerating capacity ratio of 70% or more relative to that of R410A, and a GWP of 250 or less, and further ensures a WCF lower flammability.

The refrigerant according to the present disclosure is preferably a refrigerant wherein
when the mass% of HFO-1132(E), R32, and R1234ze based on their sum is respectively represented by x, y, and z, coordinates (x,y,z) in a ternary composition diagram in which the sum of HFO-1132(E), R32, and R1234ze is 100 mass% are within the range of a figure surrounded by line segments KL, LH, HG, and GK that connect the following 4 points:

point K (72.0, 0.0, 28.0),
point L (48.6, 18.1, 33.3),
point H (24.3, 18.0, 57.7), and
point G (50.9, 0.0, 49.1),

or on the line segments KL, LH, and HG (excluding point G and point K),

the line segments LH and GK are straight lines,
coordinates (x,y,z) of the points on the line segment KL are represented by (x, $0.0114x^2-2.1454x+95.397$, $-0.0114x^2+1.1454x+4.603$), and
coordinates (x,y,z) of the points on the line segment HG are represented by(x, $0.00319x^2-0.9195x+38.567$, $-0.00319x^2-0.0805x+61.433$). When the requirements above are satisfied, the refrigerant according to the present disclosure has a refrigerating capacity ratio of 70% or more relative to that of R410A, and a GWP of 125 or less, and further ensures a WCF lower flammability.

The refrigerant according to the present disclosure is preferably a refrigerant wherein
when the mass% of HFO-1132(E), R32, and R1234ze based on their sum is respectively represented by x, y, and z, coordinates (x,y,z) in a ternary composition diagram in which the sum of HFO-1132(E), R32, and R1234ze is 100 mass% are within the range of a figure surrounded by line segments KL, LM, MN, NF, FE, ED, DC, and CK that connect the following 8 points:

point K (72.0, 0.0, 28.0),
point L (48.6, 18.1, 33.3),
point M (35.7, 36.7, 27.6),
point N (28.9, 51.6, 19.5),
point F (1.0, 51.5, 47.5),
point E (16.7, 36.5, 46.8),
point D (39.8, 18.1, 42.1), and
point C (67.6, 0.0, 32.4),

or on the line segments KL, LM, MN, NF, FE, ED, and DC (excluding point C and point K),

the line segments LM, MN, NF, FE, ED, and CK are straight lines,
coordinates (x,y,z) of the points on the line segment KL are represented by (x, $0.0114x^2-2.1454x+95.397$, -

0.0114x$^2$+1.1454x+4.603), and

coordinates (x,y,z) of the points on the line segment DC are represented by (x, 0.00257x$^2$-0.9261x+50.903, -0.00257x$^2$-0.0739x+49.097). When the requirements above are satisfied, the refrigerant according to the present disclosure has a refrigerating capacity ratio of 80% or more relative to that of R410A, and a GWP of 350 or less, and further ensures a WCF lower flammability.

The refrigerant according to the present disclosure is preferably a refrigerant wherein

when the mass% of HFO-1132(E), R32, and R1234ze based on their sum is respectively represented by x, y, and z, coordinates (x,y,z) in a ternary composition diagram in which the sum of HFO-1132(E), R32, and R1234ze is 100 mass% are within the range of a figure surrounded by line segments KL, LM, ME, ED, DC, and CK that connect the following 6 points:

point K (72.0, 0.0, 28.0),
point L (48.6, 18.1, 33.3),
point M (35.7, 36.7, 27.6),
point E (16.7, 36.5, 46.8),
point D (39.8, 18.1, 42.1), and
point C (67.6, 0.0, 32.4),

or on the line segments KL, LM, ME, ED, and DC (excluding point C and point K),

the line segments LM, ME, ED, and CK are straight lines,
coordinates (x,y,z) of the points on the line segment KL are represented by (x, 0.0114x$^2$-2.1454x+95.397, -0.0114x$^2$+1.1454x+4.603), and
coordinates (x,y,z) of the points on the line segment DC are represented by (x, 0.00257x$^2$-0.9261x+50.903, -0.00257x$^2$-0.0739x+49.097). When the requirements above are satisfied, the refrigerant according to the present disclosure has a refrigerating capacity ratio of 80% or more relative to that of R410A, and a GWP of 250 or less, and further ensures a WCF lower flammability.

The refrigerant according to the present disclosure is preferably a refrigerant wherein

when the mass% of HFO-1132(E), R32, and R1234ze based on their sum is respectively represented by x, y, and z, coordinates (x,y,z) in a ternary composition diagram in which the sum of HFO-1132(E), R32, and R1234ze is 100 mass% are within the range of a figure surrounded by line segments KL, LD, DC, and CK that connect the following 4 points:

point K (72.0, 0.0, 28.0),
point L (48.6, 18.1, 33.3),
point D (39.8, 18.1, 42.1), and
point C (67.6, 0.0, 32.4),

or on the line segments KL, LD, and DC (excluding point C and point K),

the line segments LD and CK are straight lines,
coordinates (x,y,z) of the points on the line segment KL are represented by (x, 0.0114x$^2$-2.1454x+95.397, -0.0114x$^2$+1.1454x+4.603), and
coordinates (x,y,z) of the points on the line segment DC are represented by (x, 0.00257x$^2$-0.9261x+50.903, -0.00257x$^2$-0.0739x+49.097). When the requirements above are satisfied, the refrigerant according to the present disclosure has a refrigerating capacity ratio of 80% or more relative to that of R410A, and a GWP of 125 or less, and further ensures a WCF lower flammability.

The refrigerant according to the present disclosure is preferably a refrigerant wherein

when the mass% of HFO-1132(E), R32, and R1234ze based on their sum is respectively represented by x, y, and z, coordinates (x,y,z) in a ternary composition diagram in which the sum of HFO-1132(E), R32, and R1234ze is 100 mass% are within the range of a figure surrounded by straight lines VR, RS, SB", B"J, JI, and IV that connect the following 6 points:

point V (17.1, 24.2, 58.7),
point R (16.1, 36.6, 47.3),
point S (15.9, 51.4, 32.7),
point B" (0.0, 51.4, 48.6),

point J (0.0, 39.1, 60.9), and
point I (2.7, 36.5, 60.8),

or on the straight lines VR, RS, SB", JI, and IV (excluding point B" and point J). When the requirements above are satisfied, the refrigerants according to the present disclosure have a refrigerating capacity ratio of 70% or more relative to that of R410A, and further ensures an ASHRAE lower flammability.

The refrigerant according to the present disclosure is preferably a refrigerant wherein

when the mass% of HFO-1132(E), R32, and R1234ze based on their sum is respectively represented by x, y, and z, coordinates (x,y,z) in a ternary composition diagram in which the sum of HFO-1132(E), R32, and R1234ze is 100 mass% are within the range of a figure surrounded by straight lines US, SF, and FU that connect the following 3 points:

point U (16.1, 37.1, 46.8),
point S (15.9, 51.4, 32.7), and
point F (1.0, 51.5, 47.5),

or on the straight lines US, SF, and FU. When the requirements above are satisfied, the refrigerants according to the present disclosure have a refrigerating capacity ratio of 80% or more relative to that of R410A, and further ensures an ASHRAE lower flammability.

The refrigerant according to the present disclosure comprises HFO-1132(E) in an amount of preferably 1 mass% or more, more preferably 5 mass% or more, and still more preferably 10 mass% or more.

The refrigerant according to the present disclosure comprises R32 in an amount of preferably 1 mass% or more, more preferably 5 mass% or more, and still more preferably 10 mass% or more.

The refrigerant according to the present disclosure comprises R1234ze in an amount of preferably 1 mass% or more, more preferably 5 mass% or more, and still more preferably 10 mass% or more.

The refrigerant according to the present disclosure may further comprise R1234yf.

The refrigerant according to the present disclosure is preferably a refrigerant wherein

when the mass% of HFO-1132(E) is x, the mass% of R32 is y, and the mass% of the sum of R1234ze and R1234yf is z, based on the sum of HFO-1132(E), R32, R1234ze, and R1234yf in the refrigerant, and when $r=R1234yf/(R1234ze+R1234yf)$,

(1) if $0.2 \geq r > 0$, coordinates (x,y,z) in a ternary composition diagram whose first vertex represents HFO-1132(E), second vertex represents R32, and third vertex represents the sum of 1234ze and R1234yf are within the range of a figure surrounded by line segments $K_rL_r$, $L_rM_r$, $M_rN_r$, $N_rB_r''$, $B_r''J_r$, $J_rI_r$, $I_rH_r$, $H_rG_r$, and GrKr that connect the following 9 points:

point $K_r$ (72.0, 0.0, 28.0),
point $L_r$ ($-0.0618r^2-0.0675r+48.612$, $0.0618r^2+0.0675r+18.088$, 33.3),
point $M_r$ ($-0.0618r^2-0.0675r+35.712$, $0.0618r^2+0.0675r+36.688$, 27.6),
point $N_r$ ($-0.0618r^2-0.0675r+28.912$, $0.0618r^2+0.0675r+51.588$, 19.5),
point B" (0, $-0.2268r^2+0.2922r+51.422$, $0.0083r^2-0.1392r+82.165$),
point $J_r$ (0, $0.9705r^2-13.268r+39.105$, $-0.9705r^2+13.268r+60.895$),
point $I_r$ ($-13.5r+2.7$, 36.5, $13.5r+60.8$),
point $H_r$ ($-0.4195r^2-12.988r+24.311$, $0.0618r^2+0.0675r+17.988$, $0.3577r^2+12.9205r+57.701$), and
point $G_r$ ($-0.1892r^2-11.155r+50.918$, 0.0, $0.1892r^2+11.155r+49.082$), or on the line segments $K_rL_r$, $L_rM_r$, $M_rN_r$, $N_rB_r''$, $J_rI_r$, $I_rH_r$, and $H_rG_r$ (excluding point $B_r''$, point $J_r$, point $G_r$, and point $K_r$),

the line segments $L_rM_r$, $M_rN_r$, $N_rB_r''$, Br" $J_r$, $J_rI_r$, $I_rH_r$, and $G_rK_r$ are straight lines,
coordinates (x,y,z) of the points on the line segment $K_rL_r$ are represented by (x, 100-x-z, $-0.0114x^2+1.1454x+4.503$), and
coordinates (x,y,z) of the points on the line segment $H_rG_r$ are represented by (x, 100-x-z, $(0.00965r^2-0.0024r-0.00319)x^2+(-0.6153r^2+0.0221r-0.0805)x+(11.593r^2+10.251r+61.433)$),

(2) if $1 > r > 0.2$, coordinates (x,y,z) in the ternary composition diagram are within the range of a figure surrounded by line segments $K_rL_r$, $L_rM_r$, $M_rN_r$, $N_rB_r''$, $B_r''J_r$, $J_rH_r$, $H_rG_r$, and $G_rK_r$ that connect the following 8 points:

point $K_r$ (72.0, 0.0, 28.0),
point $L_r$ ($-0.0618r^2-0.0675r+48.612$, $0.0618r^2+0.0675r+18.088$, 33.3),
point $M_r$ ($-0.0618r^2-0.0675r+35.712$, $0.0618r^2+0.0675r+36.688$, 27.6),

point $N_r$ (-0.0618$r^2$-0.0675r+28.912, 0.0618$r^2$+0.0675r+51.588, 19.5),
point B" (0, -0.2268$r^2$+0.2922r+51.422, 0.0083$r^2$-0.1392r+82.165),
point $J_r$ (0, 0.9705$r^2$-13.268r+39.105, -0.9705$r^2$+13.268r+60.895),
point $H_r$ (-0.4195$r^2$-12.988r+24.311, 0.0618$r^2$+0.0675r+17.988, 0.3577$r^2$+12.9205r+57.701), and
point $G_r$ (-0.1892$r^2$-11.155r+50.918, 0.0, 0.1892$r^2$+11.155r+49.082), or on the line segments $K_rL_r$, $L_rM_r$, $M_rN_r$, $N_rB_r$", $J_rH_r$, and $H_rG_r$ (excluding point $B_r$", point $J_r$, point $G_r$, and point $K_r$), and

the line segments $L_rM_r$, $M_rN_r$, $N_rB_r$", Br" $J_r$, $J_rH_r$, and $G_rK_r$ are straight lines,
wherein
(2-1) if 0.27≥r>0.2,
coordinates (x,y,z) of the points on the line segment $K_rL_r$ are represented by (x, 100-x-z, -0.0114$x^2$+1.1454x+4.503), and
coordinates (x,y,z) of the points on the line segment $H_rG_r$ are represented by (x, 100-x-z, ((0.00965$r^2$-0.0024r-0.00319)$x^2$+(-0.6153$r^2$+0.0221r-0.0805)x+(11.593$r^2$+10.251r+61.433)),
(2-2) if 0.64≥r>0.27,
coordinates (x,y,z) of the points on the line segment $K_rL_r$ are represented by (x, 100-x-z, (0.0003861$r^2$-0.0002973r-0.011348)$x^2$+(-0.050193$r^2$+0.038649r+1.1386)x+(1.583$r^2$-1.2189r+4.8167)), and
coordinates (x,y,z) of the points on the line segment $H_rG_r$ are represented by (x, 100-x-z, (0.011147$r^2$-0.010278r-0.00111674)$x^2$+(-0.8771$r^2$+0.6728r-0.2371)x+(12.661$r^2$+0.7382r+63.924)), and

(3) if 1>r>0.64,

coordinates (x,y,z) of the points on the line segment $K_rL_r$ are represented by (x, 100-x-z, -0.01138$x^2$+1.1428x+4.685), and
coordinates (x,y,z) of the points on the line segment $H_rG_r$ are represented by (x, 100-x-z, (0.0003$r^2$-0.0006r-0.0029)$x^2$+(0.0062$r^2$-0.1212r-0.0907)x+ (2.1759$r^2$+15.588r+61.137)) . When the requirements above are satisfied, the refrigerant according to the present disclosure has a refrigerating capacity ratio of 70% or more relative to that of R410A, and a GWP of 350 or less, and further ensures a WCF lower flammability.

The refrigerant according to the present disclosure is preferably a refrigerant wherein
when the mass% of HFO-1132(E) is x, the mass% of R32 is y, and the mass% of the sum of R1234ze and R1234yf is z, based on the sum of HFO-1132(E), R32, R1234ze, and R1234yf in the refrigerant, and when r=R1234yf/(R1234ze+R1234yf), coordinates (x,y,z) in a ternary composition diagram whose first vertex represents HFO-1132(E), second vertex represents R32, and third vertex represents the sum of 1234ze and R1234yf are within the range of a figure surrounded by line segments $K_rL_r$, $L_rH_r$, $H_rG_r$, and $G_rK_r$ that connect the following 4 points:

point $K_r$ (72.0, 0.0, 28.0),
point $L_r$ (-0.0618$r^2$-0.0675r+48.612, 0.0618$r^2$+0.0675r+18.088, 33.3),
point $H_r$ (-0.4195$r^2$-12.988r+24.311, 0.0618$r^2$+0.0675r+17.988, 0.3577$r^2$+12.9205r+57.701), and
point $G_r$ (-0.1892$r^2$-11.155r+50.918, 0.0, 0.1892$r^2$+11.155r+49.082), or on the line segments $K_rL_r$, $L_rH_r$, and $H_rG_r$ (excluding point $G_r$ and point $K_r$), and

the line segments $L_rH_r$ and $G_rK_r$ are straight lines,
wherein
(2-1) if 0.27≥r>0.2,
coordinates (x,y,z) of the points on the line segment $K_rL_r$ are represented by (x, 100-x-z, -0.0114$x^2$+1.1454x+4.503), and
coordinates (x,y,z) of the points on the line segment $H_rG_r$ are represented by (x, 100-x-z, (0.0003861$r^2$-0.0002973r-0.011348)$x^2$+(-0.050193r2+0.038649r+1.1386)x+(1.583$r^2$-1.2189r+4.8167)),
(2-2) if 0.64≥r>0.27,
coordinates (x,y,z) of the points on the line segment $K_rL_r$ are represented by (x, 100-x-z, (0.0003861$r^2$-0.0002973r-0.011348)$x^2$+(-0.050193$r^2$+0.038649r+1.1386)x+(1.583$r^2$-1.2189r+4.8167)), and
coordinates (x,y,z) of the points on the line segment $H_rG_r$ are represented by (x, 100-x-z, (0.011147$r^2$-0.010278r-0.00111674)$x^2$+(-0.8771$r^2$+0.6728r-0.2371)x+(12.661$r^2$+0.7382r+63.924)),
(2-3) if 1>r>0.64,
coordinates (x,y,z) of the points on the line segment $K_rL_r$ are represented by (x, 100-x-z, -0.01138$x^2$+1.1428x+4.685), and
coordinates (x,y,z) of the points on the line segment $H_rG_r$ are represented by (x, 100-x-z, (0.0003$r^2$-0.0006r-

$0.0029)x^2+(0.0062r^2-0.1212r-0.0907)x+(2.1759r^2+15.588r+61.137))$. When the requirements above are satisfied, the refrigerant according to the present disclosure has a refrigerating capacity ratio of 70% or more relative to that of R410A, and a GWP of 125 or less, and further ensures a WCF lower flammability.

The refrigerant according to the present disclosure is preferably a refrigerant wherein
when the mass% of HFO-1132(E) is x, the mass% of R32 is y, and the mass% of the sum of R1234ze and R1234yf is z, based on the sum of HFO-1132(E), R32, R1234ze, and R1234yf in the refrigerant, and when r=R1234yf/(R1234ze+R1234yf),

(1) if $0.2 \geq r > 0$, coordinates (x,y,z) in a ternary composition diagram whose first vertex represents HFO-1132(E), second vertex represents R32, and third vertex represents the sum of 1234ze and R1234yf are within the range of a figure surrounded by line segments $V_rR_r$, $R_rS_r$, $S_rB_r''$, $B_r''J_r$, $J_rI_r$, and $I_rV_r$ that connect the following 6 points:

point $V_r$ ($-4.2328r^2+14.847r+17.1$, $14.815r^2-26.963r+24.2$, $-10.5822r^2+12.116r+58.7$),
point $R_r$ ($-1.3862r^2+7.8917r+16.089$, $0.0937r^2+0.1466r+36.581$, $1.2925r^2-8.0383r+47.33$),
point $S_r$ ($-0.3578r^2+4.1741r+15.894$, $-0.1332r^2+0.4388r+51.403$, $-0.491r^2-4.6129r+32.703$),
point $B''$ (0, $-0.2268r^2+0.2922r+51.422$, $0.0083r^2-0.1392r+82.165$),
point $J_r$ (0, $0.9705r^2-13.268r+39.105$, $-0.9705r^2+13.268r+60.895$), and
point $I_r$ ($-13.5r+2.7$, 36.5, $13.5r+60.8$),
or on the line segments $V_rR_r$, $R_rS_r$, $S_rB_r''$, $J_rI_r$, and $I_rV_r$ (excluding point $B_r''$ and point $J_r$), and
the line segments $V_rR_r$, $R_rS_r$, $S_rB_r''$, $B_r''J_r$, $J_rI_r$, and $I_rV_r$ are straight lines,

(2) if $0.27 \geq r > 0.2$, coordinates (x,y,z) in the ternary composition diagram are within the range of a figure surrounded by line segments $V_rR_r$, $R_rS_r$, $S_rB_r''$, $B_r''J_r$, and $J_rV_r$ that connect the following 5 points:

point $V_r$ ($-4.2328r^2+14.847r+17.1$, $14.815r^2-26.963r+24.2$, $-10.5822r^2+12.116r+58.7$),
point $R_r$ ($-1.3862r^2+7.8917r+16.089$, $0.0937r^2+0.1466r+36.581$, $1.2925r^2-8.0383r+47.33$),
point $S_r$ ($-0.3578r^2+4.1741r+15.894$, $-0.1332r^2+0.4388r+51.403$, $0.491r^2-4.6129r+32.703$),
point $B''$ (0, $-0.2268r^2+0.2922r+51.422$, $0.0083r^2-0.1392r+82.165$), and
point $J_r$ (0, $0.9705r^2-13.268r+39.105$, $-0.9705r^2+13.268r+60.895$),
or on the line segments $V_rR_r$, $R_rS_r$, $S_rB_r''$, and $J_rV_r$ (excluding point $B_r''$ and point $J_r$), and
the line segments $V_rR_r$, $R_rS_r$, $S_rB_r''$, $B_r''J_r$, and $J_rV_r$ are straight lines,

(3) if $0.64 \geq r > 0.27$, coordinates (x,y,z) in the ternary composition diagram are within the range of a figure surrounded by line segments $V_rQ_r$, $Q_rR_r$, $R_rS_r$, $S_rB_r''$, $B_r''J_r$, $J_rH_r$, and $H_rV_r$ that connect the following 7 points:

point $V_r$ ($113.4r^2-64.271r+29.887$, $-64.63r^2+23.678r+16.318$, $-48.77r^2+40.5931r+53.795$),
point $Q_r$ ($-6.2112r^2+15.652r+17.027$, $0.7554r^2-0.1469r+17.985$, $5.4558r^2-15.5051r+64.988$),
point $R_r$ ($-1.3862r^2+7.8917r+16.089$, $0.0937r^2+0.1466r+36.581$, $1.2925r^2-8.0383r+47.33$),
point $S_r$ ($-0.3578r^2+4.1741r+15.894$, $-0.1332r^2+0.4388r+51.403$, $0.491r^2-4.6129r+32.703$),
point $B''$ (0, $-0.2268r^2+0.2922r+51.422$, $0.0083r^2-0.1392r+82.165$), point $J_r$ (0, $0.9705r^2-13.268r+39.105$, $-0.9705r^2+13.268r+60.895$), and
point $H_r$ ($-0.4195r^2-12.988r+24.311$, $0.0618r^2+0.0675r+17.988$, $0.3577r^2+12.9205r+57.701$),
or on the line segments $V_rQ_r$, $Q_rR_r$, $R_rS_r$, $S_rB_r''$, $J_rH_r$, and $H_rV_r$ (excluding point $B_r''$, and point $J_r$), and
the line segments $V_rR_r$, $Q_rR_r$, $R_rS_r$, $S_rB_r''$, $B_r''J_r$, $J_rH_r$, and $H_rV_r$ are straight lines,

(4) if $1.0 > r > 0.64$, coordinates (x,y,z) in the ternary composition diagram are within the range of a figure surrounded by line segments $O_rP_r$, $P_rQ_r$, $Q_rR_r$, $R_rS_r$, $S_rB_r''$, $B_r''J_r$, $J_rH_r$, $H_rG_r$, and GrKr that connect the following 9 points:

point $O_r$ ($-3.0864r^2+15.617r+40.069$, 0.0, $3.0864r^2-15.617r+59.931$),
point $P_r$ ($-6.1728r^2+21.235r+24.138$, 5.0, $6.1728r^2-21.235r+70.862$),
point $Q_r$ ($8.8889r+18.811$, 18.2, $-8.8889r+62.989$),
point $R_r$ ($-1.3862r^2+7.8917r+16.089$, $0.0937r^2+0.1466r+36.581$, $1.2925r^2-8.0383r+47.33$),
point $S_r$ ($-0.3578r^2+4.1741r+15.894$, $-0.1332r^2+0.4388r+51.403$, $0.491r^2-4.6129r+32.703$),
point $B''$ (0, $-0.2268r^2+0.2922r+51.422$, $0.0083r^2-0.1392r+82.165$),
point $J_r$ (0, $0.9705r^2-13.268r+39.105$, $-0.9705r^2+13.268r+60.895$),
point $H_r$ ($-0.4195r^2-12.988r+24.311$, $0.0618r^2+0.0675r+17.988$, $0.3577r^2+12.9205r+57.701$), and
point $G_r$ ($-0.1892r^2-11.155r+50.918$, 0.0, $0.1892r^2+11.155r+49.082$), or on the line segments $O_rP_r$, $P_rQ_r$, $Q_rR_r$,

$R_rS_r$, $S_rB_r''$, $J_rH_r$, and $H_rG_r$ (excluding point $O_r$, point $B_r''$, point $J_r$, and point $G_r$),

the line segments $Q_rR_r$, $R_rS_r$, $S_rB_r''$, $Br'' J_r$, and $J_rH_r$ are straight lines,
coordinates (x,y,z) of the points on the line segment $O_rP_r$ are represented by (x, 100-x-z, $(0.0077r^2-0.014r-0.004)x^2+(-0.7731r^2+1.6132r-0.5209)x+(19.074r^2-47.72r+87.771)$),
coordinates (x,y,z) of the points on the line segment $P_rQ_r$ are represented by (x, 100-x-z, $(-0.179r^2+0.2997r-0.2085)x^2+(11.347r^2-17.461r+12.133)x+(-180.86r^2+243.12r-107.55)$), and
coordinates (x,y,z) of the points on the line segment $H_rG_r$ are represented by (x, 100-x-z, $(0.0003r^2-0.0006r-0.0029)x^2+(0.0062r^2-0.1212r-0.0907)x+(2.1759r^2+15.588r+61.137)$). When the requirements above are satisfied, the refrigerant according to the present disclosure has a refrigerating capacity ratio of 70% or more relative to that of R410A, and a GWP of 350 or less, and further ensures an ASHRAE lower flammability.

The refrigerant according to the present disclosure may further comprise other additional refrigerants in addition to HFO-1132(E), R32, R1234ze, and R1234yf, as long as the above properties and effects are not impaired. In this respect, the refrigerant according to the present disclosure preferably comprises HFO-1132(E), R32, and R1234ze in a total amount of 99.5 mass% or more, more preferably 99.75 mass% or more, and even more preferably 99.9 mass% or more, based on the entire refrigerant. In another embodiment, the refrigerant according to the present disclosure preferably comprises HFO-1132(E), R32, R1234ze, and R1234yf in a total amount of 99.5 mass% or more, more preferably 99.75 mass% or more, and even more preferably 99.9 mass% or more, based on the entire refrigerant.

Such additional refrigerants are not limited, and can be selected from a wide range of refrigerants. The mixed refrigerant may comprise a single additional refrigerant, or two or more additional refrigerants.

1.2. Use

The refrigerant according to the present disclosure can be preferably used as a working fluid in a refrigerating machine.

The refrigerant according to the present disclosure is suitable for use as an alternative refrigerant for R410A.

2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 0 to 1 mass%, and more preferably 0 to 0.1 mass%.

2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

2.2. Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as tracers.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3Cl$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143a (1,1,1-trifluoroethane, $CF_3CH_3$)
HFC-143 (1,1,2-trifluoroethane, $CHF_2CH_2F$)
HFC-152a (1,1-difluoroethane, $CHF_2CH_3$)
HFC-152 (1,2-difluoroethane, $CH_2FCH_2F$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
CFC-1113 (chlorotrifluoroethylene, $CF_2=CClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The refrigerant composition according to the present disclosure may contain one or more tracers at a total concentration of about 10 parts per million by weight (ppm) to about 1000 ppm based on the entire refrigerant composition. The refrigerant composition according to the present disclosure may preferably contain one or more tracers at a total concentration of about 30 ppm to about 500 ppm, and more preferably about 50 ppm to about 300 ppm, based on the entire refrigerant composition.

2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 to 5 mass%, and more preferably 0.05 to 2 mass%, based on the entire refrigerant.

2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 to 5 mass%, and more preferably 0.05 to 2 mass%, based on the entire refrigerant.

3. Refrigeration Oil-Containing Working Fluid

The refrigeration oil-containing working fluid according to the present disclosure comprises at least the refrigerant or refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 to 50 mass% of refrigeration oil.

3.1. Refrigeration Oil

The refrigeration oil-containing working fluid according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 to 400 cSt at 40°C is preferable from the standpoint of lubrication.

The refrigeration oil-containing working fluid according to the present disclosure may further optionally contain at least one additive. Examples of additives include the compatibilizing agents described below.

3.2. Compatibilizing Agent

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

The embodiments are described above; however, it will be understood that various changes in forms and details can be made without departing from the spirit and scope of the claims.

Examples

The present disclosure is described in more detail below with reference to Examples. However, the present disclosure is not limited to the Examples.

Example A

Mixed refrigerants were prepared by mixing HFO-1132(E), R32, R1234ze, and $CO_2$ at a mass% based on their sum as shown in Tables 1 to 5.

The GWP of R410A (R32 = 50%/R125 = 50%) and the mixed refrigerants was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in PTL 1). The refrigerating capacity of R410A and the mixed refrigerants was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

The COP ratio and the refrigerating capacity ratio of the mixed refrigerants relative to those of R410 were determined. The calculation conditions were as follows.

Evaporating temperature: 5°C
Condensation temperature: 45°C
Degree of superheating: 5 K
Degree of subcooling: 5 K
Compressor efficiency: 70%

Table 1 shows these values together with the GWP of each mixed refrigerant. The COP and refrigerating capacity are ratios relative to R410A.

The coefficient of performance (COP) was determined according to the following formula.

```
COP = (refrigerating capacity or heating capacity)/power
consumption
```

Table 1

| Item | Unit | Com Ex1 | Com Ex2 | Com Ex3 | Com Ex4 | Com Ex5 | Com Ex6 | Com Ex7 | Com Ex8 |
|---|---|---|---|---|---|---|---|---|---|
| | | | A | B | A' | B' | A" | B" | C |
| HFO-1132 (E) | mass% | | 81.6 | 0.0 | 63.1 | 0.0 | 48.2 | 0.0 | 67.6 |
| R32 | mass% | R410A | 18.4 | 17.8 | 36.9 | 36.5 | 51.8 | 51.4 | 0.0 |
| R1234ze | mass% | | 0.0 | 82.2 | 0.0 | 63.5 | 0.0 | 48.6 | 32.4 |
| GWP | - | 2088 | 125 | 125 | 250 | 250 | 350 | 350 | 3 |
| COP ratio | % (relative to R410A) | 100 | 98.7 | 107.8 | 98.7 | 106.2 | 99.2 | 104.6 | 101.4 |
| Refrigerating capacity ratio | % (relative to R410A) | 100 | 105.3 | 52.1 | 109.9 | 68.0 | 112.1 | 79.2 | 80.0 |

| Item | Unit | Example1 | Example2 | Example 3 | Example4 | Example5 | Com Ex9 | Example6 | Example7 |
|---|---|---|---|---|---|---|---|---|---|
| | | C' | D | E | U | F | G | G' | H |
| HFO-1132 (E) | mass% | 51.5 | 39.8 | 16.7 | 16.1 | 1.0 | 50.9 | 35.4 | 24.3 |
| R32 | mass% | 10.0 | 18.1 | 36.5 | 37.1 | 51.5 | 0.0 | 10.0 | 18.0 |
| R1234ze | mass% | 38.5 | 42.1 | 46.8 | 46.8 | 47.5 | 49.1 | 54.6 | 57.7 |
| GWP | - | 70 | 125 | 250 | 253 | 350 | 3 | 71 | 125 |
| COP ratio | % (relative to R410A) | 101.8 | 102.3 | 103.5 | 103.6 | 104.5 | 103.2 | 103.9 | 104.6 |
| Refrigerating capacity ratio | % (relative to R410A) | 80.0 | 80.0 | 80.0 | 80.0 | 80.0 | 70.0 | 70.0 | 70.0 |

| Item | Unit | Example8 | Example9 | Com Ex10 | Com Ex11 | Example10 | Example11 | Example12 | Example13 |
|---|---|---|---|---|---|---|---|---|---|
| | | V | I | J | K | K' | L | M | N |
| HFO-1132 (E) | mass% | 17.1 | 2.7 | 0.0 | 72.0 | 57.2 | 48.6 | 35.7 | 28.9 |
| R32 | mass% | 24.2 | 36.5 | 39.1 | 0.0 | 10.0 | 18.1 | 36.7 | 51.6 |
| R1234ze | mass% | 58.7 | 60.8 | 60.9 | 28.0 | 32.8 | 33.3 | 27.6 | 19.5 |
| GWP | - | 167 | 250 | 268 | 2 | 70 | 125 | 250 | 350 |
| COP ratio | % (relative to R410A) | 104.9 | 105.7 | 105.9 | 101.1 | 101.2 | 101.2 | 101.0 | 100.9 |
| Refrigerating capacity ratio | % (relative to R410A) | 70.4 | 70.0 | 70.0 | 82.6 | 83.4 | 85.5 | 92.8 | 99.7 |

| Item | Unit | Com Ex12 | Com Ex13 | Com Ex14 | Com Ex15 | Com Ex16 | Example14 | Example15 |
|---|---|---|---|---|---|---|---|---|
| | | O | O' | P | P' | Q | R | S |
| HFO-1132 (E) | mass% | 38.4 | 30.3 | 25.4 | 20.4 | 17.6 | 16.1 | 15.9 |
| R32 | mass% | 0.0 | 2.5 | 5.0 | 10.0 | 17.9 | 36.6 | 51.4 |
| R1234ze | mass% | 61.6 | 67.2 | 69.6 | 69.6 | 64.5 | 47.3 | 32.7 |
| GWP | - | 4 | 21 | 38 | 72 | 125 | 250 | 350 |
| COP ratio | % (relative to R410A) | 104.8 | 105.6 | 106.0 | 106.1 | 105.6 | 103.6 | 102.4 |
| Refrigerating capacity ratio | % (relative to R410A) | 62.2 | 59.5 | 58.6 | 60.1 | 65.4 | 79.7 | 90.6 |

The composition of each mixture was defined as WCF. A leak simulation was performed using NIST Standard Reference Data Base Refleak Version 4.0 under the conditions of Equipment, Storage, Shipping, Leak, and Recharge according to the ASHRAE Standard 34-2013. The most flammable fraction was defined as WCFF.

For the flammability, the burning velocity was measured according to the ANSI/ASHRAE Standard 34-2013. Both WCF and WCFF having a burning velocity of 10 cm/s or less were determined to be "Class 2L (lower flammability)."

A burning velocity test was performed using the apparatus shown in Fig. 1 in the following manner. First, the mixed refrigerants used had a purity of 99.5% or more, and were degassed by repeating a cycle of freezing, pumping, and thawing until no traces of air were observed on the vacuum gauge. The burning velocity was measured by the closed method. The initial temperature was ambient temperature. Ignition was performed by generating an electric spark between the electrodes in the center of a sample cell. The duration of the discharge was 1.0 to 9.9 ms, and the ignition energy was typically about 0.1 to 1.0 J. The spread of the flame was visualized using schlieren photographs. A cylindrical container (inner diameter: 155 mm, length: 198 mm) equipped with two light transmission acrylic windows was used as the sample cell, and a xenon lamp was used as the light source. The propagation state of the flame was recorded using a schlieren system with a collimating lens and a high-speed digital video camera (frame rate: 600 fps), and stored on a PC as video data. The flame propagation velocity Sb (cm/sec) was measured using the video image. The burning velocity (Su) is the volume of unburned gas in which the flame surface of the unit area is consumed in the unit time, and was calculated according to the following equation.

$$Su = Sb * \rho u / \rho b$$

$\rho u$: Adiabatic flame temperature (unburned)
$\rho b$: Adiabatic flame temperature (already burned)
$\rho u$ was the measured temperature, and $\rho b$ was calculated from the heat of the combustion of the combustion gas and the specific heat of constant pressure.

Table 2 shows the results.

Table 2

| | Item | Unit | K | K' | L | M | L |
|---|---|---|---|---|---|---|---|
| WCF | HFO-1132(E) | mass% | 72.0 | 57.2 | 48.6 | 35.7 | 28.9 |
| | R32 | mass% | 0.0 | 10.0 | 18.1 | 36.7 | 51.6 |
| | R1234ze | mass% | 28.0 | 32.8 | 33.3 | 27.6 | 19.5 |
| Burning velocity (WCF) | | cm/s | 10 | 10 | 10 | 10 | 10 |

| | Item | Unit | O | O' | P | P' | Q | R | S |
|---|---|---|---|---|---|---|---|---|---|
| WCF | HFO-1132 (E) | mass% | 38.4 | 30.3 | 25.4 | 20.4 | 17.6 | 16.1 | 15.9 |
| | R32 | mass% | 0.0 | 2.5 | 5.0 | 10.0 | 17.9 | 36.6 | 51.4 |
| | R1234ze | mass% | 61.6 | 67.2 | 69.6 | 69.6 | 64.5 | 47.3 | 32.7 |
| Leak conditions for achieving WCFF | | | Storage and transport at 34.8° C and 0% release, gas phase side | Storage and transport at 34.1° C and 0% release, gas phase side | Storage and transport at 33.9° C and 0% release, gas phase side | Storage and transport at 34.7° C and 0% release, gas phase side | Storage and transport at 36.6° C and 0% release, gas phase side | Storage and transport at 39.7° C and 0% release, gas phase side | Storage and transport at 40.0° C and 0% release, gas phase side |
| WCFF | HFO-1132 (E) | mass% | 72.0 | 62.2 | 54.5 | 44.2 | 35.8 | 27.8 | 25.0 |
| | R32 | mass% | 0.0 | 6.1 | 12.3 | 23.4 | 36.4 | 54.4 | 63.2 |
| | R1234ze | mass% | 28.0 | 31.7 | 33.2 | 32.4 | 27.8 | 17.8 | 11.8 |
| Burning velocity (WCF) | | cm/s | 5 or less | 5 or less | 5 or less | 5 or less | 5 or less | 5.2 | 6.5 |
| Burning velocity (WCFF) | | cm/s | 10 | 10 | 10 | 10 | 10 | 10 | 10 |

The results indicate that a mixed refrigerant has a refrigerating capacity ratio of 70% or more relative to that of R410A, and a GWP of 350 or less, and further ensures a WCF lower flammability when the following requirements are satisfied. Specifically, when the mass% of HFO-1132(E), R32, and R1234ze based on their sum in the mixed refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LM, MN, NB", B" J, JI, IH, HG, and GK that connect the following 9 points:

point K (72.0, 0.0, 28.0),
point L (48.6, 18.1, 33.3),
point M (35.7, 36.7, 27.6),
point N (28.9, 51.6, 19.5),
point B" (0.0, 51.4, 48.6),
point J (0.0, 39.1, 60.9),
point I (2.7, 36.5, 60.8),
point H (24.3, 18.0, 57.7), and
point G (50.9, 0.0, 49.1),

or on the line segments KL, LM, MN, NB", JI, IH, and HG (excluding point B", point J, point G, and point K),

the line segments LM, MN, NB", B" J, JI, IH, and GK are straight lines,
coordinates (x,y,z) of the points on the line segment KL are represented by (x, $0.0114x^2$-2.1454x+95.397, -$0.0114x^2$+1.1454x+4.603), and
coordinates (x,y,z) of the points on the line segment HG are represented by (x, $0.00319x^2$-0.9195x+38.567,

-0.00319x$^2$-0.0805x+61.433) .

The results also indicate that a mixed refrigerant has a refrigerating capacity ratio of 70% or more relative to that of R410A, and a GWP of 250 or less, and further ensures a WCF lower flammability when the following requirements are satisfied. Specifically, when the mass% of HFO-1132(E), R32, and R1234ze based on their sum in the mixed refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LM, MI, IH, HG, and GK that connect the following 6 points:

point K (72.0, 0.0, 28.0),
point L (48.6, 18.1, 33.3),
point M (35.7, 36.7, 27.6),
point I (2.7, 36.5, 60.8),
point H (24.3, 18.0, 57.7), and
point G (50.9, 0.0, 49.1),

or on the line segments KL, LM, MI, IH, and HG (excluding point G and point K),

the line segments LM, MI, IH, and GK are straight lines,
coordinates (x,y,z) of the points on the line segment KL are represented by (x, 0.0114x$^2$-2.1454x+95.397, -0.0114x$^2$+1.1454x+4.603), and
coordinates (x,y,z) of the points on the line segment HG are represented by (x, 0.00319x$^2$-0.9195x+38.567, -0.00319x$^2$-0.0805x+61.433) .

The results also indicate that a mixed refrigerant has a refrigerating capacity ratio of 70% or more relative to that of R410A, and a GWP of 125 or less, and further ensures a WCF lower flammability when the following requirements are satisfied. Specifically, when the mass% of HFO-1132(E), R32, and R1234ze based on their sum in the mixed refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LH, HG, and GK that connect the following 4 points:

point K (72.0, 0.0, 28.0),
point L (48.6, 18.1, 33.3),
point H (24.3, 18.0, 57.7), and
point G (50.9, 0.0, 49.1),

or on the line segments KL, LH, and HG (excluding point G and point K),

the line segments LH and GK are straight lines,
coordinates (x,y,z) of the points on the line segment KL are represented by (x, 0.0114x$^2$-2.1454x+95.397, -0.0114x$^2$+1.1454x+4.603), and
coordinates (x,y,z) of the points on the line segment HG are represented by (x, 0.00319x$^2$-0.9195x+38.567, -0.00319x$^2$-0.0805x+61.433) .

The results also indicate that a mixed refrigerant has a refrigerating capacity ratio of 80% or more relative to that of R410A, and a GWP of 350 or less, and further ensures a WCF lower flammability when the following requirements are satisfied. Specifically, when the mass% of HFO-1132(E), R32, and R1234ze based on their sum in the mixed refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LM, MN, NF, FE, ED, DC, and CK that connect the following 8 points:

point K (72.0, 0.0, 28.0),
point L (48.6, 18.1, 33.3),
point M (35.7, 36.7, 27.6),
point N (28.9, 51.6, 19.5),
point F (1.0, 51.5, 47.5),
point E (16.7, 36.5, 46.8),
point D (39.8, 18.1, 42.1), and

point C (67.6, 0.0, 32.4),

or on the line segments KL, LM, MN, NF, FE, ED, and DC (excluding point C and point K),

the line segments LM, MN, NF, FE, ED, and CK are straight lines,
coordinates (x,y,z) of the points on the line segment KL are represented by (x, $0.0114x^2$-2.1454x+95.397, -$0.0114x^2$+1.1454x+4.603), and
coordinates (x,y,z) of the points on the line segment DC are represented by (x, $0.00257x^2$-0.9261x+50.903, -$0.00257x^2$-0.0739x+49.097) .

The results also indicate that a mixed refrigerant has a refrigerating capacity ratio of 80% or more relative to that of R410A, and a GWP of 250 or less, and further ensures a WCF lower flammability when the following requirements are satisfied. Specifically, when the mass% of HFO-1132(E), R32, and R1234ze based on their sum in the mixed refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LM, ME, ED, DC, and CK that connect the following 6 points:

point K (72.0, 0.0, 28.0),
point L (48.6, 18.1, 33.3),
point M (35.7, 36.7, 27.6),
point E (16.7, 36.5, 46.8),
point D (39.8, 18.1, 42.1), and
point C (67.6, 0.0, 32.4),

or on the line segments KL, LM, ME, ED, and DC (excluding point C and point K),

the line segments LM, ME, ED, and CK are straight lines,
coordinates (x,y,z) of the points on the line segment KL are represented by (x, $0.0114x^2$-2.1454x+95.397, -$0.0114x^2$+1.1454x+4.603), and
coordinates (x,y,z) of the points on the line segment DC are represented by (x, $0.00257x^2$-0.9261x+50.903, -$0.00257x^2$-0.0739x+49.097) .

The results also indicate that a mixed refrigerant has a refrigerating capacity ratio of 80% or more relative to that of R410A, and a GWP of 125 or less, and further ensures a WCF lower flammability when the following requirements are satisfied. Specifically, when the mass% of HFO-1132(E), R32, and R1234ze based on their sum in the mixed refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LD, DC, and CK that connect the following 4 points:

point K (72.0, 0.0, 28.0),
point L (48.6, 18.1, 33.3),
point D (39.8, 18.1, 42.1), and
point C (67.6, 0.0, 32.4),

or on the line segments KL, LD, and DC (excluding point C and point K),

the line segments LD and CK are straight lines,
coordinates (x,y,z) of the points on the line segment KL are represented by (x, $0.0114x^2$-2.1454x+95.397, -$0.0114x^2$+1.1454x+4.603), and
coordinates (x,y,z) of the points on the line segment DC are represented by (x, $0.00257x^2$-0.9261x+50.903, -$0.00257x^2$-0.0739x+49.097) .

The results also indicate that a mixed refrigerant has a refrigerating capacity ratio of 70% or more relative to that of R410A, and has ASHRAE lower flammability when the following requirements are satisfied. Specifically, when the mass% of HFO-1132(E), R32, and R1234ze based on their sum in the mixed refrigerant is respectively represented by x, y, and z, coordinates (x,y,z) in a ternary composition diagram in which the sum of HFO-1132(E), R32, and R1234ze is 100 mass% are within the range of a figure surrounded by straight lines VR, RS, SB", B"J, JI, and IV that connect the following 6 points:

point V (17.1, 24.2, 58.7),
point R (16.1, 36.6, 47.3),
point S (15.9, 51.4, 32.7),
point B" (0.0, 51.4, 48.6),
point J (0.0, 39.1, 60.9), and
point I (2.7, 36.5, 60.8),

or on the straight lines VR, RS, SB", JI, and IV (excluding point B" and point J).

The results also indicate that a mixed refrigerant has a refrigerating capacity ratio of 80% or more relative to that of R410A, and has ASHRAE lower flammability when the following requirements are satisfied. Specifically, when the mass% of HFO-1132(E), R32, and R1234ze based on their sum in the mixed refrigerant is respectively represented by x, y, and z, coordinates (x,y,z) in a ternary composition diagram in which the sum of HFO-1132(E), R32, and R1234ze is 100 mass% are within the range of a figure surrounded by straight lines US, SF, and FU that connect the following 3 points:

point U (16.1, 37.1, 46.8),
point S (15.9, 51.4, 32.7), and
point F (1.0, 51.5, 47.5),

or on the straight lines US, SF, and FU.

The approximate expressions representing the coordinates of each point were obtained as shown below.

Table 3

| Item | Unit | C | C' | D | G | G' | H | K | K' | L |
|---|---|---|---|---|---|---|---|---|---|---|
| HFO-1132 (E) | mass% | 67.6 | 51.5 | 39.8 | 50.9 | 35.4 | 24.3 | 72.0 | 57.2 | 48.6 |
| R32 | mass% | 0.0 | 10.0 | 18.1 | 0.0 | 10.0 | 18.1 | 0.0 | 10.0 | 18.1 |
| R1234ze | mass% | 32.4 | 38.5 | 42.1 | 49.1 | 54.6 | 57.6 | 28.0 | 32.8 | 33.3 |
| x=HFO-1132 (E) | | x | | | x | | | x | | |
| R32 approximate expression | | $0.00257x^2-0.9261x+50.903$ | | | $0.00319x^2-0.9195x+38.567$ | | | $0.0114x^2-2.1454x+95.397$ | | |
| R1234ze approximate expression | | $-0.00257x^2-0.0739x49.097$ | | | $-0.00319x^2-0.0805x+61.433$ | | | $-0.0114x^2+1.1454x+4.603$ | | |

| Item | Unit | O | O' | P | P | P' | Q |
|---|---|---|---|---|---|---|---|
| HFO-1132 (E) | mass% | 38.4 | 30.3 | 25.4 | 25.4 | 20.4 | 17.6 |
| R32 | mass% | 0.0 | 2.5 | 5.0 | 5.0 | 10.0 | 17.9 |
| R1234ze | mass% | 61.6 | 67.2 | 69.6 | 69.6 | 69.6 | 64.5 |
| x=HFO-1132 (E) | | x | | | x | | |
| R32 approximate expression | | $0.0155x^2-1.3738x+29.892$ | | | $0.2335x^2-11.695x+151.4$ | | |
| R1234ze approximate expression | | $-0.0155x^2+0.3738x+70.108$ | | | $-0.2335x^2+10.695x2-51.4$ | | |

Example B

Mixed refrigerants were prepared so that the mass% of HFO-1132(E), the mass% of R32, the mass% of R1234ze, and the mass% of the sum of R1234ze and R1234yf, based on the sum of HFO-1132(E), R32, R1234ze, and R1234yf were as shown in Tables 4 to 9. Then, evaluation was performed in the same manner as in Example A. Tables 4 to 9 also show the results. r represents R1234yf/(R1234ze+R1234yf) .

Table 4

| Item | Unit | Com Ex1 | Com Ex17 $B_{r=0.2}$ | Com Ex18 $B'_{r=0.2}$ | Com Ex19 $B''_{r=0.2}$ | Com Ex20 $G_{r=0.2}$ | Example16 $G'_{r=0.2}$ | Example17 $H_{r=0.2}$ | Example18 $V_{r=0.2}$ |
|---|---|---|---|---|---|---|---|---|---|
| HFO-1132 (E) | mass% | R410A | 0.0 | 0.0 | 0.0 | 48.7 | 32.9 | 21.8 | 19.9 |
| R32 | mass% | | 17.9 | 36.5 | 51.5 | 0.0 | 10.0 | 18.0 | 19.4 |
| R1234(ze+yf) | mass% | | 82.1 | 63.5 | 48.5 | 51.3 | 57.1 | 60.2 | 60.7 |
| GWP | - | 2088 | 125 | 250 | 350 | 3 | 71 | 125 | 135 |
| COP ratio | % (relative to R410A) | 100 | 107.0 | 105.3 | 104.1 | 102.9 | 103.6 | 104.2 | 104.3 |
| Refrigerating capacity ratio | % (relative to R410A) | 100 | 54.4 | 70.0 | 80.9 | 70.0 | 70.0 | 70.0 | 70.0 |

| Item | Unit | Com Ex21 $J_{r=0.2}$ | Com Ex22 $K_{r=0.2}$ | Example19 $K'_{r=0.2}$ | Example20 $L_{r=0.2}$ | Example21 $M_{r=0.2}$ | Example22 $N_{r=0.2}$ | Com Ex23 $O_{r=0.2}$ | Com Ex24 $O'_{r=0.2}$ |
|---|---|---|---|---|---|---|---|---|---|
| HFO-1132 (E) | mass% | 0.0 | 72.0 | 57.2 | 48.6 | 35.7 | 28.9 | 42.3 | 34.3 |
| R32 | mass% | 36.5 | 0.0 | 10.0 | 18.1 | 36.7 | 51.6 | 0.0 | 2.5 |
| R1234(ze+yf) | mass% | 63.5 | 28.0 | 32.8 | 33.3 | 27.6 | 19.5 | 57.7 | 63.2 |
| GWP | - | 250 | 2 | 70 | 125 | 250 | 350 | 4 | 21 |
| COP ratio | % (relative to R410A) | 105.3 | 100.9 | 100.8 | 100.8 | 100.7 | 100.8 | 103.6 | 104.3 |
| Refrigerating capacity ratio | % (relative to R410A) | 70.0 | 83.4 | 84.5 | 86.6 | 93.8 | 100.4 | 66.1 | 63.7 |

| Item | Unit | Com Ex25 $P_{r=0.2}$ | Com Ex26 $P'_{r=0.2}$ | Com Ex27 $Q_{r=0.2}$ | Example23 $R_{r=0.2}$ | Example24 $S_{r=0.2}$ |
|---|---|---|---|---|---|---|
| HFO-1132 (E) | mass% | 29.1 | 23.5 | 20.1 | 17.6 | 16.7 |
| R32 | mass% | 5.0 | 10.0 | 18.0 | 36.6 | 51.5 |
| R1234(ze+yf) | mass% | 65.9 | 66.5 | 61.9 | 45.8 | 31.8 |
| GWP | - | 38 | 71 | 125 | 250 | 350 |
| COP ratio | % (relative to R410A) | 104.7 | 104.8 | 104.4 | 102.8 | 102.0 |
| Refrigerating capacity ratio | % (relative to R410A) | 62.8 | 64.0 | 68.9 | 82.2 | 92.5 |

Table 5

| Item | Unit | Com Ex1 | Com Ex28 $B_{r=0.27}$ | Com Ex29 $B'_{r=0.27}$ | Com Ex30 $B''_{r=0.27}$ | Com Ex31 $G_{r=0.27}$ | Example25 $G'_{r=0.27}$ | Example26 $H_{r=0.27}=Q_{r=27}=V_{r=0.27}$ | Example27 $J_{r=0.27}$ |
|---|---|---|---|---|---|---|---|---|---|
| HFO-1132 (E) | mass% | R410A | 0.0 | 0.0 | 0.0 | 47.9 | 32.0 | 20.8 | 0.0 |
| R32 | mass% | | 17.9 | 36.5 | 51.5 | 0.0 | 10.0 | 18.0 | 35.7 |
| R1234(ze+yf) | mass% | | 82.1 | 63.5 | 48.5 | 52.1 | 58.0 | 61.2 | 64.3 |
| GWP | - | 2088 | 125 | 250 | 350 | 3 | 71 | 125 | 244 |
| COP ratio | % (relative to R410A) | 100 | 106.7 | 105.1 | 103.9 | 102.7 | 103.4 | 104.0 | 105.1 |
| Refrigerating capacity ratio | % (relative to R410A) | 100 | 55.2 | 70.6 | 81.5 | 70.0 | 70.0 | 70.0 | 70.0 |

| Item | Unit | Com Ex32 $K_{r=0.27}$ | Example28 $K'_{r=0.27}$ | Example29 $L_{r=0.27}$ | Example30 $M_{r=0.27}$ | Example31 $N_{r=0.27}$ | Com Ex33 $O_{r=0.27}$ | Com Ex34 $O'_{r=0.27}$ | Com Ex35 $P_{r=0.27}$ |
|---|---|---|---|---|---|---|---|---|---|
| HFO-1132 (E) | mass% | 72.0 | 57.2 | 48.6 | 35.7 | 28.9 | 43.5 | 35.5 | 30.2 |
| R32 | mass% | 0.0 | 10.0 | 18.1 | 36.7 | 51.6 | 0.0 | 2.5 | 5.0 |
| R1234(ze+yf) | mass% | 28.0 | 32.8 | 33.3 | 27.6 | 19.5 | 56.5 | 62.0 | 64.8 |
| GWP | - | 2 | 70 | 125 | 250 | 350 | 4 | 21 | 38 |
| COP ratio | % (relative to R410A) | 100.8 | 100.7 | 100.7 | 100.6 | 100.7 | 103.2 | 103.9 | 104.2 |
| Refrigerating capacity ratio | % (relative to R410A) | 83.7 | 84.8 | 87.0 | 94.1 | 100.7 | 67.4 | 65.0 | 64.1 |

| Item | Unit | Com Ex36 $P'_{r=0.27}$ | Example32 $R_{r=0.27}$ | Example33 $S_{r=0.27}$ |
|---|---|---|---|---|
| HFO-1132 (E) | mass% | 24.5 | 18.1 | 17.0 |
| R32 | mass% | 10.0 | 36.6 | 51.5 |
| R1234(ze+yf) | mass% | 65.5 | 45.3 | 31.5 |
| GWP | - | 71 | 250 | 350 |
| COP ratio | % (relative to R410A) | 104.4 | 102.6 | 101.9 |
| Refrigerating capacity ratio | % (relative to R410A) | 65.2 | 83.1 | 93.1 |

Table 6

| Item | Unit | Com Ex1 | Com Ex38 $B_{r=0.5}$ | Com Ex39 $B'_{r=0.5}$ | Com Ex40 $B''_{r=0.5}$ | Com Ex41 $G_{r=0.5}$ | Example34 $G'_{r=0.5}$ | Example35 $V_{r=0.5}$ | Example36 $H_{r=0.5}$ |
|---|---|---|---|---|---|---|---|---|---|
| HFO-1132 (E) | mass% | R410A | 0.0 | 0.0 | 0.0 | 45.3 | 29.0 | 26.1 | 17.7 |
| R32 | mass% | | 17.9 | 36.5 | 51.5 | 0.0 | 10.0 | 12.0 | 18.0 |
| R1234(ze+yf) | mass% | | 82.1 | 63.5 | 48.5 | 54.7 | 61.0 | 61.9 | 64.3 |
| GWP | - | 2088 | 125 | 250 | 350 | 3 | 71 | 84 | 125 |
| COP ratio | % (relative to R410A) | 100 | 105.7 | 104.2 | 103.3 | 102.3 | 103.0 | 103.0 | 103.5 |
| Refrigerating capacity ratio | % (relative to R410A) | 100 | 57.6 | 72.8 | 83.4 | 70.0 | 70.0 | 70.0 | 70.0 |

| Item | Unit | Com Ex42 $J_{r=0.5}$ | Com Ex43 $K_{r=0.5}$ | Example37 $K'_{r=0.5}$ | Example38 $L_{r=0.5}$ | Example39 $M_{r=0.5}$ | Example40 $N_{r=0.5}$ | Com Ex44 $O_{r=0.5}$ | Com Ex45 $O'_{r=0.5}$ |
|---|---|---|---|---|---|---|---|---|---|
| HFO-1132 (E) | mass% | 0.0 | 72.0 | 57.2 | 48.6 | 35.7 | 28.9 | 47.0 | 38.9 |
| R32 | mass% | 32.8 | 0.0 | 10.0 | 18.1 | 36.7 | 51.6 | 0.0 | 2.5 |
| R1234(ze+yf) | mass% | 67.2 | 28.0 | 32.8 | 33.3 | 27.6 | 19.5 | 53.0 | 58.6 |
| GWP | - | 225 | 2 | 70 | 125 | 250 | 350 | 3 | 20 |
| COP ratio | % (relative to R410A) | 104.5 | 100.5 | 100.3 | 100.3 | 100.3 | 100.5 | 102.2 | 102.7 |
| Refrigerating capacity ratio | % (relative to R410A) | 70.0 | 84.6 | 86.0 | 88.2 | 95.3 | 101.5 | 71.0 | 68.8 |

| Item | Unit | Com Ex46 $P_{r=0.5}$ | Com Ex47 $P'_{r=0.5}$ | Example41 $Q_{r=0.5}$ | Example42 $R_{r=0.5}$ | Example43 $S_{r=0.5}$ |
|---|---|---|---|---|---|---|
| HFO-1132 (E) | mass% | 33.6 | 27.4 | 23.3 | 19.7 | 17.9 |
| R32 | mass% | 5.0 | 10.0 | 18.1 | 36.7 | 51.6 |
| R1234(ze+yf) | mass% | 61.4 | 62.6 | 58.6 | 43.6 | 30.5 |
| GWP | - | 37 | 71 | 125 | 250 | 350 |
| COP ratio | % (relative to R410A) | 103.0 | 103.2 | 102.8 | 101.8 | 101.5 |
| Refrigerating capacity ratio | % (relative to R410A) | 68.0 | 69.0 | 73.6 | 85.8 | 95.0 |

Table 7

| Item | Unit | Com Ex1 | Com Ex48 $B_{r=0.64}$ | Com Ex49 $B'_{r=0.64}$ | Com Ex50 $B''_{r=0.64}$ | Com Ex51 $G_{r=0.64}$ | Example44 $G'_{r=0.64}$ | Example45 $H_{r=0.64}$ | Com Ex52 $J_{r=0.64}$ |
|---|---|---|---|---|---|---|---|---|---|
| HFO-1132 (E) | mass% | R410A | 0.0 | 0.0 | 0.0 | 43.7 | 27.3 | 15.8 | 0.0 |
| R32 | mass% | | 17.9 | 36.6 | 51.5 | 0.0 | 10.0 | 18.1 | 31.0 |
| R1234(ze+yf) | mass% | | 82.1 | 63.4 | 48.5 | 56.3 | 62.7 | 66.1 | 69.0 |
| GWP | - | 2088 | 125 | 250 | 350 | 3 | 71 | 125 | 213 |
| COP ratio | % (relative to R410A) | 100 | 105.1 | 103.6 | 103.0 | 102.1 | 102.7 | 103.2 | 104.1 |
| Refrigerating capacity ratio | % (relative to R410A) | 100 | 59.0 | 74.2 | 84.5 | 70.0 | 70.0 | 70.0 | 70.0 |

| Item | Unit | Com Ex53 $K_{r=0.64}$ | Example46 $K'_{r=0.64}$ | Example47 $L_{r=0.64}$ | Example48 $M_{r=0.64}$ | Example49 $N_{r=0.64}$ | Com Ex54 $O_{r=0.64}$ | Com Ex55 $O'_{r=0.64}$ | Example50 $P_{r=0.64}= V_{r=0.64}$ |
|---|---|---|---|---|---|---|---|---|---|
| HFO-1132 (E) | mass% | 72.0 | 57.2 | 48.5 | 35.6 | 28.8 | 48.8 | 40.8 | 35.2 |
| R32 | mass% | 0.0 | 10.0 | 18.2 | 36.8 | 51.7 | 0.0 | 2.5 | 5.0 |
| R1234(ze+yf) | mass% | 28.0 | 32.8 | 33.3 | 27.6 | 19.5 | 51.2 | 56.7 | 59.8 |
| GWP | - | 2 | 70 | 125 | 250 | 350 | 3 | 20 | 37 |
| COP ratio | % (relative to R410A) | 100.3 | 100.1 | 100.0 | 100.1 | 100.4 | 101.7 | 102.1 | 102.3 |
| Refrigerating capacity ratio | % (relative to R410A) | 85.2 | 86.7 | 89.0 | 96.0 | 102.0 | 72.9 | 70.9 | 70.0 |

| Item | Unit | Example51 $P'_{r=0.64}$ | Example52 $Q_{r=0.64}$ | Example53 $R_{r=0.64}$ | Example54 $S_{r=0.64}$ |
|---|---|---|---|---|---|
| HFO-1132 (E) | mass% | 29.2 | 24.5 | 20.6 | 18.4 |
| R32 | mass% | 10.0 | 18.2 | 36.7 | 51.6 |
| R1234(ze+yf) | mass% | 60.8 | 57.3 | 42.7 | 30.0 |
| GWP | - | 71 | 126 | 101 | 350 |
| COP ratio | % (relative to R410A) | 102.5 | 102.2 | 87.4 | 101.2 |
| Refrigerating capacity ratio | % (relative to R410A) | 71.2 | 75.5 | 87.5 | 96.1 |

Table 8

| Item | Unit | Com Ex1 | Com Ex56 $B_{r=0.82}$ | Com Ex57 $B'_{r=0.82}$ | Com Ex58 $B''_{r=0.82}$ | Com Ex59 $G_{r=0.82}$ | Example55 $G'_{r=0.82}$ | Example56 $H_{r=0.82}$ | Com Ex60 $J_{r=0.82}$ |
|---|---|---|---|---|---|---|---|---|---|
| HFO-1132 (E) | mass% | | 0.0 | 0.0 | 0.0 | 41.6 | 25.0 | 13.4 | 0.0 |
| R32 | mass% | R410A | 17.9 | 36.6 | 51.5 | 0.0 | 10.0 | 18.1 | 28.8 |
| R1234(ze+yf) | mass% | | 82.1 | 63.4 | 48.5 | 58.4 | 65.0 | 68.5 | 71.2 |
| GWP | - | 2088 | 125 | 250 | 350 | 3 | 71 | 125 | 198 |
| COP ratio | % (relative to R410A) | 100 | 104.3 | 103.0 | 102.6 | 101.7 | 102.3 | 102.8 | 103.5 |
| Refrigerating capacity ratio | % (relative to R410A) | 100 | 60.7 | 75.9 | 86.0 | 70.0 | 70.0 | 70.0 | 70.0 |

| Item | Unit | Com Ex61 $K_{r=0.82}$ | Example57 $K'_{r=0.82}$ | Example58 $L_{r=0.82}$ | Example59 $M_{r=0.82}$ | Example60 $N_{r=0.82}$ | Com Ex62 $O_{r=0.82}$ | Example61 $O'_{r=0.82}$ | Example62 $P_{r=0.82}$ |
|---|---|---|---|---|---|---|---|---|---|
| HFO-1132 (E) | mass% | 72.0 | 57.2 | 48.5 | 35.6 | 28.8 | 50.8 | 42.9 | 37.4 |
| R32 | mass% | 0.0 | 10.0 | 18.2 | 36.8 | 51.7 | 0.0 | 2.5 | 5.0 |
| R1234(ze+yf) | mass% | 28.0 | 32.8 | 33.3 | 27.6 | 19.5 | 49.2 | 54.6 | 57.6 |
| GWP | - | 2 | 70 | 125 | 250 | 350 | 3 | 20 | 37 |
| COP ratio | % (relative to R410A) | 100.1 | 99.8 | 99.7 | 99.9 | 100.3 | 101.1 | 101.4 | 101.6 |
| Refrigerating capacity ratio | % (relative to R410A) | 85.9 | 87.5 | 89.9 | 96.8 | 102.6 | 75.1 | 73.3 | 72.6 |

| Item | Unit | Example63 $P'_{r=0.82}$ | Example64 $Q_{r=0.82}$ | Example65 $R_{r=0.82}$ | Example66 $S_{r=0.82}$ |
|---|---|---|---|---|---|
| HFO-1132 (E) | mass% | 30.9 | 26.1 | 21.6 | 19.1 |
| R32 | mass% | 10.0 | 18.2 | 36.8 | 51.7 |
| R1234(ze+yf) | mass% | 59.1 | 55.7 | 41.6 | 29.2 |
| GWP | - | 70 | 126 | 250 | 350 |
| COP ratio | % (relative to R410A) | 101.7 | 101.4 | 100.9 | 100.9 |
| Refrigerating capacity ratio | % (relative to R410A) | 73.5 | 77.8 | 89.3 | 97.4 |

Table 9

| Item | Unit | Com Ex1 | Com Ex62 $B_{r=1}$ | Com Ex63 $B'_{r=1}$ | Com Ex64 $B''_{r=1}$ | Com Ex65 $G_{r=1}$ | Com Ex66 $G'_{r=1}$ | Com Ex67 $H_{r=1}$ | Com Ex68 $J_{r=1}$ |
|---|---|---|---|---|---|---|---|---|---|
| HFO-1132 (E) | mass% | | 0.0 | 0.0 | 0.0 | 39.6 | 22.8 | 10.9 | 0.0 |
| R32 | mass% | R410A | 18.0 | 36.6 | 51.5 | 0.0 | 10.0 | 18.1 | 26.8 |
| R1234(ze+yf) | mass% | | 82.0 | 63.4 | 48.5 | 60.4 | 67.2 | 71.0 | 73.2 |
| GWP | - | 2088 | 125 | 250 | 350 | 3 | 70 | 125 | 184 |
| COP ratio | % (relative to R410A) | 100 | 103.6 | 102.3 | 102.2 | 101.4 | 101.8 | 102.4 | 102.9 |
| Refrigerating capacity ratio | % (relative to R410A) | 100 | 62.4 | 77.4 | 87.3 | 70.0 | 70.0 | 70.0 | 70.0 |

| Item | Unit | Com Ex69 $K_{r=1}$ | Com Ex70 $K'_{r=1}$ | Com Ex71 $L_{r=1}$ | Com Ex72 $M_{r=1}$ | Com Ex73 $N_{r=1}$ | Com Ex74 $O_{r=0.64}$ | Com Ex75 $O'_{r=1}$ | Com Ex76 $P_{r=1}$ |
|---|---|---|---|---|---|---|---|---|---|
| HFO-1132 (E) | mass% | 72.0 | 57.2 | 48.5 | 35.6 | 28.8 | 52.6 | 44.7 | 39.2 |
| R32 | mass% | 0.0 | 10.0 | 18.2 | 36.8 | 51.7 | 0.0 | 2.5 | 5.0 |
| R1234(ze+yf) | mass% | 28.0 | 32.8 | 33.3 | 27.6 | 19.5 | 47.4 | 52.8 | 55.8 |
| GWP | - | 2 | 69 | 125 | 250 | 350 | 2 | 19 | 36 |
| COP ratio | % (relative to R410A) | 99.9 | 99.5 | 99.4 | 99.6 | 100.1 | 100.5 | 100.7 | 100.9 |
| Refrigerating capacity ratio | % (relative to R410A) | 86.6 | 88.4 | 90.8 | 97.7 | 103.2 | 77.1 | 75.3 | 74.8 |

| Item | Unit | Com Ex77 $P'_{r=1}$ | Com Ex78 $Q_{r=1}$ | Com Ex79 $R_{r=1}$ | Com Ex80 $S_{r=1}$ |
|---|---|---|---|---|---|
| HFO-1132 (E) | mass% | 32.4 | 27.7 | 22.6 | 19.7 |
| R32 | mass% | 10.0 | 18.2 | 36.8 | 51.7 |
| R1234(ze+yf) | mass% | 57.6 | 54.1 | 40.6 | 28.6 |
| GWP | - | 70 | 125 | 250 | 350 |
| COP ratio | % (relative to R410A) | 100.9 | 100.7 | 100.4 | 100.7 |
| Refrigerating capacity ratio | % (relative to R410A) | 75.6 | 80.0 | 91.0 | 98.7 |

These mixed refrigerants were subjected to the burning velocity test in the same manner as in Example A. Tables 10 to 15 show the results.

Table 10

| | Item | Unit | $K_{r=0.2}$ | $K'_{r=0.2}$ | $L_{r=0.2}$ | $M_{r=0.2}$ | $L_{r=0.2}$ |
|---|---|---|---|---|---|---|---|
| | HFO-1132(E) | mass% | 72.0 | 57.2 | 48.6 | 35.7 | 28.9 |
| WCF | R32 | mass% | 0.0 | 10.0 | 18.1 | 36.7 | 51.6 |
| | R1234(ze+yf) | mass% | 28.0 | 32.8 | 33.3 | 27.6 | 19.5 |
| Burning velocity (WCF) | | cm/s | 10 | 10 | 10 | 10 | 10 |

| | Item | Unit | $O_{r=0.2}$ | $O'_{r=0.2}$ | $P_{r=0.2}$ | $P'_{r=0.2}$ | $Q_{r=0.2}$ | $R_{r=0.2}$ | $S_{r=0.2}$ |
|---|---|---|---|---|---|---|---|---|---|
| | HFO-1132 (E) | mass% | 42.3 | 34.3 | 29.1 | 23.5 | 20.1 | 17.6 | 16.7 |
| WCF | R32 | mass% | 0.0 | 2.5 | 5.0 | 10.0 | 18.0 | 36.6 | 51.5 |
| | R1234(ze+yf) | mass% | 57.7 | 63.2 | 65.9 | 66.5 | 61.9 | 45.8 | 31.8 |
| Leak conditions for achieving WCFF | | | Storage and transport at 36.1° C and 0% release, gas phase side | Storage and transport at 35.6° C and 0% release, gas phase side | Storage and transport at 35.6° C and 0% release, gas phase side | Storage and transport at 36.2° C and 0% release, gas phase side | Storage and transport at 37.7° C and 0% release, gas phase side | Storage and transport at 40.0° C and 0% release, gas phase side | Storage and transport at 40.0° C and 0% release, gas phase side |
| | HFO-1132 (E) | mass% | 72.0 | 62.8 | 55.6 | 45.6 | 37.2 | 28.7 | 25.4 |
| WCFF | R32 | mass% | 0.0 | 5.7 | 11.3 | 21.6 | 34.0 | 51.9 | 61.5 |
| | R1234ze | mass% | 19.6 | 22.0 | 23.0 | 22.7 | 19.8 | 13.3 | 9.0 |
| | R1234yf | mass% | 8.4 | 9.5 | 10.1 | 10.1 | 9.0 | 6.1 | 4.1 |
| Burning velocity (WCF) | | cm/s | 5 or less | 5 or less | 5 or less | 5 or less | 5 or less | 6.4 | 6.7 |
| Burning velocity (WCFF) | | cm/s | 10 | 10 | 10 | 10 | 10 | 10 | 10 |

Table 11

| Item | | Unit | $K_{r=0.27}$ | $K'_{r=0.27}$ | $L_{r=0.27}$ | $M_{r=0.27}$ | $L_{r=0.27}$ |
|------|------|------|------|------|------|------|------|
| WCF | HFO-1132(E) | mass% | 72.0 | 57.2 | 48.6 | 35.7 | 28.9 |
| | R32 | mass% | 0.0 | 10.0 | 18.1 | 36.7 | 51.6 |
| | R1234(ze+yf) | mass% | 28.0 | 32.8 | 33.3 | 27.6 | 19.5 |
| Burning velocity (WCF) | | cm/s | 10 | 10 | 10 | 10 | 10 |

| Item | | Unit | $O_{r=0.27}$ | $O'_{r=0.27}$ | $P_{r=0.27}$ | $P'_{r=0.27}$ | $Q_{r=0.27}$ | $R_{r=0.27}$ | $S_{r=0.27}$ |
|------|------|------|------|------|------|------|------|------|------|
| WCF | HFO-1132 (E) | mass% | 43.5 | 35.5 | 30.2 | 24.5 | 20.8 | 18.1 | 17.0 |
| | R32 | mass% | 0.0 | 2.5 | 5.0 | 10.0 | 18.0 | 36.6 | 51.5 |
| | R1234(ze+yf) | mass% | 56.5 | 62.0 | 64.8 | 65.5 | 61.2 | 45.3 | 31.5 |
| Leak conditions for achieving WCFF | | | Storage and transport at 36.5° C and 0% release, gas phase side | Storage and transport at 36.1° C and 0% release, gas phase side | Storage and transport at 36.0° C and 0% release, gas phase side | Storage and transport at 36.6° C and 0% release, gas phase side | Storage and transport at -38° C and 0% release, gas phase side | Storage and transport at 40.0° C and 0% release, gas phase side | Storage and transport at 40.0° C and 0% release, gas phase side |
| WCFF | HFO-1132 (E) | mass% | 72.0 | 63.0 | 55.8 | 46.0 | 37.5 | 29.0 | 25.6 |
| | R32 | mass% | 0.0 | 5.6 | 11.1 | 21.1 | 33.3 | 51.2 | 60.9 |
| | R1234ze | mass% | 17.1 | 19.2 | 20.2 | 19.9 | 17.6 | 11.9 | 8.1 |
| | R1234yf | mass% | 10.9 | 12.2 | 12.9 | 13.0 | 11.6 | 7.9 | 5.4 |
| Burning velocity (WCF) | | cm/s | 5 or less | 5 or less | 5 or less | 5 or less | 5 or less | 5.6 | 6.8 |
| Burning velocity (WCFF) | | cm/s | 10 | 10 | 10 | 10 | 10 | 10 | 10 |

Table 12

| | Item | Unit | $K_{r=0.5}$ | $K'_{r=0.5}$ | $L_{r=0.5}$ | $M_{r=0.5}$ | $L_{r=0.5}$ |
|---|---|---|---|---|---|---|---|
| WCF | HFO-1132(E) | mass% | 72.0 | 57.2 | 48.5 | 35.6 | 28.8 |
| | R32 | mass% | 0.0 | 10.0 | 18.2 | 36.8 | 51.7 |
| | R1234(ze+yf) | mass% | 28.0 | 32.8 | 33.3 | 27.6 | 19.5 |
| Burning velocity (WCF) | | cm/s | 10 | 10 | 10 | 10 | 10 |

| | Item | Unit | $O_{r=0.5}$ | $O'_{r=0.5}$ | $P_{r=0.5}$ | $P'_{r=0.5}$ | $Q_{r=0.5}$ | $R_{r=0.5}$ | $S_{r=0.5}$ |
|---|---|---|---|---|---|---|---|---|---|
| WCF | HFO-1132 (E) | mass% | 47.0 | 38.9 | 33.6 | 27.4 | 23.3 | 19.7 | 17.9 |
| | R32 | mass% | 0.0 | 2.5 | 5.0 | 10.0 | 18.1 | 36.7 | 51.6 |
| | R1234(ze+yf) | mass% | 53.0 | 58.6 | 61.4 | 62.6 | 58.6 | 43.6 | 30.5 |
| Leak conditions for achieving WCFF | | | Storage and transport at 37.6° C and 0% release, gas phase side | Storage and transport at 37.3° C and 0% release, gas phase side | Storage and transport at 37.3° C and 0% release, gas phase side | Storage and transport at 37.3° C and 0% release, gas phase side | Storage and transport at 39.0° C and 0% release, gas phase side | Storage and transport at 40.0° C and 0% release, gas phase side | Storage and transport at 40.0° C and 0% release, gas phase side |
| WCFF | HFO-1132 (E) | mass% | 72.0 | 63.4 | 56.6 | 47.1 | 38.7 | 29.9 | 26.1 |
| | R32 | mass% | 0.0 | 5.2 | 10.4 | 19.8 | 31.5 | 49.0 | 59.3 |
| | R1234ze | mass% | 10.5 | 11.7 | 12.3 | 12.2 | 10.9 | 7.6 | 5.3 |
| | R1234yf | mass% | 17.5 | 19.7 | 20.7 | 20.9 | 18.9 | 13.5 | 9.3 |
| Burning velocity (WCF) | | cm/s | 5 or less | 5 or less | 5 or less | 5 or less | 5 or less | 6.0 | 7.0 |
| Burning velocity (WCFF) | | cm/s | 10 | 10 | 10 | 10 | 10 | 10 | 10 |

Table 13

| Item | | Unit | $K_{r=0.64}$ | $K'_{r=0.64}$ | $L_{r=0.64}$ | $M_{r=0.64}$ | $L_{r=0.64}$ |
|---|---|---|---|---|---|---|---|
| WCF | HFO-1132(E) | mass% | 72.0 | 57.2 | 48.5 | 35.6 | 28.8 |
| | R32 | mass% | 0.0 | 10.0 | 18.2 | 36.8 | 51.7 |
| | R1234(ze+yf) | mass% | 28.0 | 32.8 | 33.3 | 27.6 | 19.5 |
| Burning velocity (WCF) | | cm/s | 10 | 10 | 10 | 10 | 10 |

| Item | | Unit | $O_{r=0.64}$ | $O'_{r=0.64}$ | $P_{r=0.64}$ | $P'_{r=0.64}$ | $Q_{r=0.64}$ | $R_{r=0.64}$ | $S_{r=0.64}$ |
|---|---|---|---|---|---|---|---|---|---|
| WCF | HFO-1132 (E) | mass% | 48.8 | 40.8 | 35.2 | 29.1 | 24.5 | 20.6 | 18.4 |
| | R32 | mass% | 0.0 | 2.5 | 5.0 | 10.0 | 18.2 | 36.7 | 51.6 |
| | R1234(ze+yf) | mass% | 51.2 | 56.7 | 59.8 | 60.9 | 57.3 | 42.7 | 30.0 |
| Leak conditions for achieving WCFF | | | Storage and transport at 38.2° C and 0% release, gas phase side | Storage and transport at 38.0° C and 0% release, gas phase side | Storage and transport at 37.9° C and 0% release, gas phase side | Storage and transport at 38.5° C and 0% release, gas phase side | Storage and transport at 39.5° C and 0% release, gas phase side | Storage and transport at 40.0° C and 0% release, gas phase side | Storage and transport at 40.0° C and 0% release, gas phase side |
| WCFF | HFO-1132 (E) | mass% | 72.0 | 63.7 | 56.9 | 47.7 | 39.1 | 30.4 | 26.4 |
| | R32 | mass% | 0.0 | 5.1 | 10.1 | 19.2 | 30.7 | 47.9 | 58.4 |
| | R1234ze | mass% | 7.1 | 7.9 | 8.3 | 8.3 | 7.5 | 5.3 | 3.7 |
| | R1234yf | mass% | 20.9 | 23.3 | 24.7 | 24.8 | 22.7 | 16.4 | 11.5 |
| Burning velocity (WCF) | | cm/s | 5 or less | 5 or less | 5 or less | 5 or less | 5 or less | 6.2 | 7.1 |
| Burning velocity (WCFF) | | cm/s | 10 | 10 | 10 | 10 | 10 | 10 | 10 |

Table 14

| Item | | Unit | $K_{r=0.82}$ | $K'_{r=0.82}$ | $L_{r=0.82}$ | $M_{r=0.82}$ | $L_{r=0.82}$ |
|---|---|---|---|---|---|---|---|
| WCF | HFO-1132(E) | mass% | 72.0 | 57.2 | 48.5 | 35.6 | 28.8 |
| | R32 | mass% | 0.0 | 10.0 | 18.2 | 36.8 | 51.7 |
| | R1234(ze+yf) | mass% | 28.0 | 32.8 | 33.3 | 27.6 | 19.5 |
| Burning velocity (WCF) | | cm/s | 10 | 10 | 10 | 10 | 10 |

| Item | | Unit | $O_{r=0.82}$ | $O'_{r=0.82}$ | $P_{r=0.82}$ | $P'_{r=0.82}$ | $Q_{r=0.82}$ | $R_{r=0.82}$ | $S_{r=0.82}$ |
|---|---|---|---|---|---|---|---|---|---|
| WCF | HFO-1132 (E) | mass% | 50.8 | 42.9 | 37.4 | 30.9 | 26.1 | 21.6 | 19.1 |
| | R32 | mass% | 0.0 | 2.5 | 5.0 | 10.0 | 18.2 | 36.8 | 51.7 |
| | R1234(ze+yf) | mass% | 49.2 | 54.6 | 57.6 | 59.1 | 55.7 | 41.6 | 29.2 |
| Leak conditions for achieving WCFF | | | Storage and transport at 38.8° C and 0% release, gas phase side | Storage and transport at 38.7° C and 0% release, gas phase side | Storage and transport at 38.7° C and 0% release, gas phase side | Storage and transport at 39.2° C and 0% release, gas phase side | Storage and transport at 40.0° C and 0% release, gas phase side | Storage and transport at 40.0° C and 0% release, gas phase side | Storage and transport at 40.0° C and 0% release, gas phase side |
| WCFF | HFO-1132 (E) | mass% | 72.0 | 63.9 | 57.4 | 48.3 | 39.8 | 30.9 | 26.8 |
| | R32 | mass% | 0.0 | 4.9 | 9.8 | 18.5 | 29.6 | 46.7 | 57.4 |
| | R1234ze | mass% | 3.3 | 3.7 | 3.9 | 3.9 | 3.6 | 2.6 | 1.8 |
| | R1234yf | mass% | 24.7 | 27.5 | 28.9 | 29.3 | 27.0 | 19.8 | 14.0 |
| Burning velocity (WCF) | | cm/s | 5 or less | 5 or less | 5 or less | 5 or less | 5 or less | 6.4 | 7.3 |
| Burning velocity (WCFF) | | cm/s | 10 | 10 | 10 | 10 | 10 | 10 | 10 |

Table 15

| | Item | Unit | $K_{r=1}$ | $K'_{r=1}$ | $L_{r=1}$ | $M_{r=1}$ | $L_{r=1}$ |
|---|---|---|---|---|---|---|---|
| WCF | HFO−1132(E) | mass% | 72.0 | 57.2 | 48.5 | 35.6 | 28.8 |
| | R32 | mass% | 0.0 | 10.0 | 18.2 | 36.8 | 51.7 |
| | R1234(ze+yf) | mass% | 28.0 | 32.8 | 33.3 | 27.6 | 19.5 |
| Burning velocity (WCF) | | cm/s | 10 | 10 | 10 | 10 | 10 |

| | Item | Unit | $O_{r=1}$ | $O'_{r=1}$ | $P_{r=1}$ | $P'_{r=1}$ | $Q_{r=1}$ | $R_{r=1}$ | $S_{r=1}$ |
|---|---|---|---|---|---|---|---|---|---|
| WCF | HFO-1132 (E) | mass% | 52.6 | 44.7 | 39.2 | 32.4 | 27.7 | 22.6 | 19.7 |
| | R32 | mass% | 0.0 | 2.5 | 5.0 | 10.0 | 18.2 | 36.8 | 51.7 |
| | R1234(ze+yf) | mass% | 47.4 | 52.8 | 55.8 | 57.6 | 54.1 | 40.6 | 28.6 |
| Leak conditions for achieving WCFF | | | Storage and transport at 39.4° C and 0% release, gas phase side | Storage and transport at 39.3° C and 0% release, gas phase side | Storage and transport at 39.4° C and 0% release, gas phase side | Storage and transport at 39.8° C and 0% release, gas phase side | Storage and transport at 40.0° C and 0% release, gas phase side | Storage and transport at 40.0° C and 0% release, gas phase side | Storage and transport at 40.0° C and 0% release, gas phase side |
| WCFF | HFO-1132 (E) | mass% | 72.0 | 64.1 | 57.8 | 48.7 | 40.6 | 31.4 | 27.1 |
| | R32 | mass% | 0.0 | 4.8 | 9.5 | 17.9 | 28.7 | 45.7 | 56.4 |
| | R1234ze | mass% | 0.0 | 0.0 | 0.0 | 0.0 | 0.0 | 0.0 | 0.0 |
| | R1234yf | mass% | 28.0 | 31.1 | 32.7 | 33.4 | 30.7 | 22.9 | 16.5 |
| Burning velocity (WCF) | | cm/s | 5 or less | 5 or less | 5 or less | 5 or less | 5.1 | 6.6 | 7.5 |
| Burning velocity (WCFF) | | cm/s | 10 | 10 | 10 | 10 | 10 | 10 | 10 |

The results indicate that a mixed refrigerant has a refrigerating capacity ratio of 70% or more relative to that of R410A, and a GWP of 350 or less, and further ensures a WCF lower flammability when the following requirements are satisfied. Specifically, when the mass% of HFO-1132(E) is x, the mass% of R32 is y, and the mass% of the sum of R1234ze and R1234yf is z, based on the sum of HFO-1132(E), R32, R1234ze, and R1234yf in the mixed refrigerant, and when r=R1234yf/(R1234ze+R1234yf),

(1) if $0.2 \geq r > 0$, coordinates (x,y,z) in a ternary composition diagram whose first vertex represents HFO-1132(E), second vertex represents R32, and third vertex represents the sum of 1234ze and R1234yf are within the range of a figure surrounded by line segments $K_rL_r$, $L_rM_r$, $M_rN_r$, $N_rB_r''$, $Br''J_r$, $J_rI_r$, $I_rH_r$, $H_rG_r$, and $G_rK_r$ that connect the following 9 points:

point $K_r$ (72.0, 0.0, 28.0),
point $L_r$ ($-0.0618r^2-0.0675r+48.612$, $0.0618r^2+0.0675r+18.088$, 33.3),
point $M_r$ ($-0.0618r^2-0.0675r+35.712$, $0.0618r^2+0.0675r+36.688$, 27.6),
point $N_r$ ($-0.0618r^2-0.0675r+28.912$, $0.0618r^2+0.0675r+51.588$, 19.5),
point $B''$ (0, $-0.2268r^2+0.2922r+51.422$, $0.0083r^2-0.1392r+82.165$),
point $J_r$ (0, $0.9705r^2-13.268r+39.105$, $-0.9705r^2+13.268r+60.895$),
point $I_r$ ($-13.5r+2.7$, 36.5, $13.5r+60.8$),
point $H_r$ ($-0.4195r^2-12.988r+24.311$, $0.0618r^2+0.0675r+17.988$, $0.3577r^2+12.9205r+57.701$), and
point $G_r$ ($-0.1892r^2-11.155r+50.918$, 0.0, $0.1892r^2+11.155r+49.082$), or on the line segments $K_rL_r$, $L_rM_r$, $M_rN_r$, $N_rB_r''$, $J_rI_r$, $I_rH_r$, and $H_rG_r$ (excluding point $B_r''$, point $J_r$, point $G_r$, and point $K_r$) ,

the line segments $L_rM_r$, $M_rN_r$, $N_rB_r''$, $B_r''$ Jr, $J_rI_r$, $I_rH_r$, and $G_rK_r$ are straight lines,
coordinates (x,y,z) of the points on the line segment $K_rL_r$ are represented by (x, 100-x-z, $-0.0114x^2+1.1454x+4.503$), and
coordinates (x,y,z) of the points on the line segment $H_rG_r$ are represented by (x, 100-x-z, ($0.00965r^2-0.0024r-$

$0.00319)x^2+(-0.6153r^2+0.0221r-0.0805)x+(11.593r^2+10.251r+61.433))$,

(2) if 1>r>0.2, coordinates (x,y,z) in the ternary composition diagram are within the range of a figure surrounded by line segments $K_rL_r$, $L_rM_r$, $M_rN_r$, $N_rB_r''$, $B_r''J_r$, $J_rH_r$, $H_rG_r$, and $G_rK_r$ that connect the following 8 points:

point $K_r$ (72.0, 0.0, 28.0),
point $L_r$ ($-0.0618r^2-0.0675r+48.612$, $0.0618r^2+0.0675r+18.088$, 33.3),
point $M_r$ ($-0.0618r^2-0.0675r+35.712$, $0.0618r^2+0.0675r+36.688$, 27.6),
point $N_r$ ($-0.0618r^2-0.0675r+28.912$, $0.0618r^2+0.0675r+51.588$, 19.5),
point B" ($0$, $-0.2268r^2+0.2922r+51.422$, $0.0083r^2-0.1392r+82.165$),
point $J_r$ ($0$, $0.9705r^2-13.268r+39.105$, $-0.9705r^2+13.268r+60.895$),
point $H_r$ ($-0.4195r^2-12.988r+24.311$, $0.0618r^2+0.0675r+17.988$,
$0.3577r^2+12.9205r+57.701$), and
point $G_r$ ($-0.1892r^2-11.155r+50.918$, 0.0, $0.1892r^2+11.155r+49.082$), or on the line segments $K_rL_r$, $L_rM_r$, $M_rN_r$, $N_rB_r''$, $J_rH_r$, and $H_rG_r$ (excluding point $B_r''$, point $J_r$, point $G_r$, and point $K_r$) , and
the line segments $L_rM_r$, $M_rN_r$, $N_rB_r''$, $B_r''J_r$, $J_rH_r$, and $G_rK_r$ are straight lines,
wherein

(2-1) if 0.27≥r>0.2,
coordinates (x,y,z) of the points on the line segment $K_rL_r$ are represented by (x, 100-x-z, $-0.0114x^2+1.1454x+4.503$), and
coordinates (x,y,z) of the points on the line segment $H_rG_r$ are represented by (x, 100-x-z, $((0.00965r^2-0.0024r-0.00319)x^2+(-0.6153r^2+0.0221r-0.0805)x+(11.593r^2+10.251r+61.433))$), and
(2-2) if 0.64≥r>0.27,
coordinates (x,y,z) of the points on the line segment $K_rL_r$ are represented by (x, 100-x-z, $(0.0003861r^2-0.0002973r-0.011348)x^2+(-0.050193r^2+0.038649r+1.1386)x+(1.583r^2-1.2189r+4.8167)$), and
coordinates (x,y,z) of the points on the line segment $H_rG_r$ are represented by (x, 100-x-z, $(0.011147r^2-0.010278r-0.00111674)x^2+(-0.8771r^2+0.6728r-0.2371)x+(12.661r^2+0.7382r+63.924)$), and

(3) if 1>r>0.64,

coordinates (x,y,z) of the points on the line segment $K_rL_r$ are represented by (x, 100-x-z, $-0.01138x^2+1.1428x+4.685$), and
coordinates (x,y,z) of the points on the line segment $H_rG_r$ are represented by (x, 100-x-z, $(0.0003r^2-0.0006r-0.0029)x^2+(0.0062r^2-0.1212r-0.0907)x+(2.1759r^2+15.588r+61.137)$).

The results also indicate that a mixed refrigerant has a refrigerating capacity ratio of 70% or more relative to that of R410A, and a GWP of 125 or less, and further ensures a WCF lower flammability when the following requirements are satisfied. Specifically, when the mass% of HFO-1132(E) is x, the mass% of R32 is y, and the mass% of the sum of R1234ze and R1234yf is z, based on the sum of HFO-1132(E), R32, R1234ze, and R1234yf in the mixed refrigerant, and when r=R1234yf/(R1234ze+R1234yf), coordinates (x,y,z) in a ternary composition diagram whose first vertex represents HFO-1132(E), second vertex represents R32, and third vertex represents the sum of 1234ze and R1234yf are within the range of a figure surrounded by line segments $K_rL_r$, $L_rH_r$, $H_rG_r$, and $G_rK_r$ that connect the following 4 points:

point $K_r$ (72.0, 0.0, 28.0),
point $L_r$ ($-0.0618r^2-0.0675r+48.612$, $0.0618r^2+0.0675r+18.088$, 33.3),
point $H_r$ ($-0.4195r^2-12.988r+24.311$, $0.0618r^2+0.0675r+17.988$, $0.3577r^2+12.9205r+57.701$), and
point $G_r$ ($-0.1892r^2-11.155r+50.918$, 0.0, $0.1892r^2+11.155r+49.082$), or on the line segments $K_rL_r$, $L_rH_r$, and $H_rG_r$ (excluding point $G_r$ and point $K_r$) , and

the line segments $L_rH_r$ and $G_rK_r$ are straight lines, wherein
(2-1) if 0.27≥r>0.2,
coordinates (x,y,z) of the points on the line segment $K_rL_r$ are represented by (x, 100-x-z, $-0.0114x^2+1.1454x+4.503$), and
coordinates (x,y,z) of the points on the line segment $H_rG_r$ are represented by coordinates (x,y,z) of the points on the line segment (x, 100-x-z, $(0.0003861r^2-0.0002973r-0.011348)x^2+(-0.050193r^2+0.038649r+1.1386)x+(1.583r^2-1.2189r+4.8167)$),
(2-2) if 0.64≥r>0.27,

coordinates (x,y,z) of the points on the line segment $K_rL_r$ are represented by (x, 100-x-z, (0.0003861r$^2$-0.0002973r-0.011348) x$^2$+ (-0.050193r$^2$+0.038649r+1.1386)x+(1.583r$^2$-1.2189r+4.8167)), and

coordinates (x,y,z) of the points on the line segment $H_rG_r$ are represented by (x, 100-x-z, (0.011147r$^2$-0.010278r-0.00111674)x$^2$+(-0.8771r$^2$+0.6728r-0.2371)x+(12.661r$^2$+0.7382r+63.924)), and

(2-3) if 1> r> 0.64,

coordinates (x,y,z) of the points on the line segment $K_rL_r$ are represented by (x, 100-x-z, -0.01138x$^2$+1.1428x+4.685), and

coordinates (x,y,z) of the points on the line segment $H_rG_r$ are represented by (x, 100-x-z, (0.0003r$^2$-0.0006r-0.0029) x$^2$+ (0.0062r$^2$-0.1212r-0.0907) x+ (2.1759r$^2$+15.588r+61.137)).

The results also indicate that a mixed refrigerant has a refrigerating capacity ratio of 70% or more relative to that of R410A, and a GWP of 350 or less, and further has an ASHRAE lower flammability when the following requirements are satisfied. Specifically, when the mass% of HFO-1132(E) is x, the mass% of R32 is y, and the mass% of the sum of R1234ze and R1234yf is z, based on the sum of HFO-1132(E), R32, R1234ze, and R1234yf in the mixed refrigerant, and when r=R1234yf/(R1234ze+R1234yf),

(1) if 0.2≥r>0, coordinates (x,y,z) in a ternary composition diagram whose first vertex represents HFO-1132(E), second vertex represents R32, and third vertex represents the sum of 1234ze and R1234yf are within the range of a figure surrounded by line segments $V_rR_r$, $R_rS_r$, $S_rB_r''$, $B_r''$ $J_r$, $J_rI_r$, and $I_rV_r$ that connect the following 6 points:

point $V_r$ (-4.2328r$^2$+14.847r+17.1, 14.815r$^2$-26.963r+24.2, - 10.5822r$^2$+12.116r+58.7),
point $R_r$ (-1.3862r$^2$+7.8917r+16.089, 0.0937r$^2$+0.1466r+36.581, 1.2925r$^2$-8.0383r+47.33),
point $S_r$ (-0.3578r$^2$+4.1741r+15.894, -0.1332r$^2$+0.4388r+51.403, - 0.491r$^2$-4.6129r+32.703),
point B" (0, -0.2268r$^2$+0.2922r+51.422, 0.0083r$^2$-0.1392r+82.165),
point $J_r$ (0, 0.9705r$^2$-13.268r+39.105, -0.9705r$^2$+13.268r+60.895), and
point $I_r$ (-13.5r+2.7, 36.5, 13.5r+60.8),
or on the line segments $V_rR_r$, $R_rS_r$, $S,B''$, $J_rI_r$, and $I_rV$ (excluding point $B_r''$ and point $J_r$), and
the line segments $V_rR_r$, $R_rS_r$, $S_rB_r''$, $B_r''$ $J_r$, $J_rI_r$, and $I_rV_r$ are straight lines,

(2) if 0.27≥r>0.2, coordinates (x,y,z) in the ternary composition diagram are within the range of a figure surrounded by line segments $V_rR_r$, $R_rS_r$, $S_rB_r''$, $B_r''$ $J_r$, and $J_rV_r$ that connect the following 5 points:

point $V_r$ (-4.2328r$^2$+14.847r+17.1, 14.815r$^2$-26.963r+24.2, - 10.5822r$^2$+12.116r+58.7),
point $R_r$ (-1.3862r$^2$+7.8917r+16.089, 0.0937r$^2$+0.1466r+36.581, 1.2925r$^2$-8.0383r+47.33),
point $S_r$ (-0.3578r$^2$+4.1741r+15.894, -0.1332r$^2$+0.4388r+51.403, 0.491r$^2$-4.6129r+32.703),
point B" (0, -0.2268r$^2$+0.2922r+51.422, 0.0083r$^2$-0.1392r+82.165), and
point $J_r$ (0, 0.9705r$^2$-13.268r+39.105, -0.9705r$^2$+13.268r+60.895),
or on the line segments $V_rR_r$, $R_rS_r$, $S_rB_r''$, and $J_rV$ (excluding point $B_r''$ and point $J_r$), and
the line segments $V_rR_r$, $R_rS_r$, $S_rB_r''$, $B_r''$ $J_r$, and $J_rV_r$ are straight lines,

(3) if 0.64≥r>0.27, coordinates (x,y,z) in the ternary composition diagram are within the range of a figure surrounded by line segments $V_rQ_r$, $Q_rR_r$, $R_rS_r$, $S_rB_r''$, $B_r''$ $J_r$, $J_rH_r$, and $H_rV_r$ that connect the following 7 points:

point $V_r$ (113.4r$^2$-64.271r+29.887, -64.63r$^2$+23.678r+16.318, - 48.77r$^2$+40.5931r +53.795),
point $Q_r$ (-6.2112r$^2$+15.652r+17.027, 0.7554r$^2$-0.1469r+17.985, 5.4558r$^2$-15.5051r+64.988),
point $R_r$ (-1.3862r$^2$+7.8917r+16.089, 0.0937r$^2$+0.1466r+36.581, 1.2925r$^2$-8.0383r+47.33),
point $S_r$ (-0.3578r$^2$+4.1741r+15.894, -0.1332r$^2$+0.4388r+51.403, 0.491r$^2$-4.6129r+32.703),
point B" (0, -0.2268r$^2$+0.2922r+51.422, 0.0083r$^2$-0.1392r+82.165),
point $J_r$ (0, 0.9705r$^2$-13.268r+39.105, -0.9705r$^2$+13.268r+60.895), and
point $H_r$ (-0.4195r$^2$-12.988r+24.311, 0.0618r$^2$+0.0675r+17.988, 0.3577r$^2$+12.9205r+57.701),
or on the line segments $V_rQ_r$, $Q_rR_r$, $R_rS_r$, $S_rB_r''$ , $J_rH_r$, and $H_rV_r$ (excluding point $B_r''$ and point $J_r$), and
the line segments $V_rR_r$, $Q_rR_r$, $R_rS_r$, $S_rB_r''$, $B_r''$ $J_r$, $J_rH_r$, and $H_rV_r$ are straight lines,

(4) if 1.0>r>0.64, coordinates (x,y,z) in the ternary composition diagram are within the range of a figure surrounded by line segments coordinates (x,y,z) in the ternary composition diagram are within the range of a figure surrounded by line segments $O_rP_r$, $P_rQ_r$, $Q_rR_r$, $R_rS_r$, $S_rB_r''$, $B_r''$ $J_r$, $J_rH_r$, $H_rG_r$, and $G_rK_r$ that connect the following 9 points:

point $O_r$ (-3.0864$r^2$+15.617r+40.069, 0.0, 3.0864$r^2$-15.617r+59.931),
point $P_r$ (-6.1728$r^2$+21.235r+24.138, 5.0, 6.1728$r^2$-21.235r+70.862),
point $Q_r$ (8.8889r+18.811, 18.2, -8.8889r+62.989),
point $R_r$ (-1.3862$r^2$+7.8917r+16.089, 0.0937$r^2$+0.1466r+36.581, 1.2925$r^2$-8.0383r+47.33),
point $S_r$ (-0.3578$r^2$+4.1741r+15.894, -0.1332$r^2$+0.4388r+51.403, 0.491$r^2$-4.6129r+32.703),
point B" (0, -0.2268$r^2$+0.2922r+51.422, 0.0083$r^2$-0.1392r+82.165),
point $J_r$ (0, 0.9705$r^2$-13.268r+39.105, -0.9705$r^2$+13.268r+60.895),
point $H_r$ (-0.4195$r^2$-12.988r+24.311, 0.0618$r^2$+0.0675r+17.988, 0.3577$r^2$+12.9205r+57.701), and
point $G_r$ (-0.1892$r^2$-11.155r+50.918, 0.0, 0.1892$r^2$+11.155r+49.082), or on the line segments $O_rP_r$, $P_rQ_r$, $Q_rR_r$, $R_rS_r$, $S_rB_r$", $J_rH_r$, and $H_rG_r$ (excluding point $O_r$, point $B_r$", point $J_r$, and point $G_r$),

the line segments $Q_rR_r$, $R_rS_r$, $S_rB_r$", $B_r$" $J_r$, and $J_rH_r$ are straight lines,
coordinates (x,y,z) of the points on the line segment $O_rP_r$ are represented by (x, 100-x-z, (0.0077$r^2$-0.014r-0.004) $x^2$+ (-0.7731$r^2$+1.6132r-0.5209) x+ (19.074$r^2$-47.72r+87.771)),
coordinates (x,y,z) of the points on the line segment $P_rQ_r$ are represented by (x, 100-x-z, (-0.179$r^2$+0.2997r-0.2085) $x^2$+ (11.347$r^2$-17.461r+12.133) x+ (-180.86$r^2$+243.12r-107.55)), and
coordinates (x,y,z) of the points on the line segment $H_rG_r$ are represented by (x, 100-x-z, (0.0003$r^2$-0.0006r-0.0029) $x^2$+ (0.0062$r^2$-0.1212r-0.0907) x+ (2.1759$r^2$+15.588r+61.137)).

The coordinates of each point were obtained using approximate expressions as shown below.

Table 16

| Point B | | | | | | | | |
|---|---|---|---|---|---|---|---|---|
| Item | Unit | Point Br (r = R1234yf/(R1234ze + R12434yf)) | | | | | | |
| | | 0.00 | 0.20 | 0.27 | 0.50 | 0.64 | 0.82 | 1.00 |
| HFO-1132 (E) | mass% | 0.0 | 0.0 | 0.0 | 0.0 | 0.0 | 0.0 | 0.0 |
| R32 | mass% | 17.8 | 17.9 | 17.9 | 17.9 | 17.9 | 17.9 | 18.0 |
| R1234(ze+yf) | mass% | 82.2 | 82.1 | 82.1 | 82.1 | 82.1 | 82.1 | 82.0 |
| x = HFO-1132(E) approximate expression | | 0.0 | | | | | | |
| y = R32 approximate expression | | -0.0083$r^2$ + 0.1392r + 17.835 | | | | | | |
| z = R1234(ze+yf) approximate expression | | 0.0083$r^2$-0.1392r+82.165 | | | | | | |
| Point B' | | | | | | | | |
| Item | Unit | Point B'r (r = R1234yf/(R1234ze + R12434yf)) | | | | | | |
| | | 0.00 | 0.20 | 0.27 | 0.50 | 0.64 | 0.82 | 1.00 |
| HFO-1132 (E) | mass% | 0.0 | 0.0 | 0.0 | 0.0 | 0.0 | 0.0 | 0.0 |
| R32 | mass% | 36.5 | 36.5 | 36.5 | 36.5 | 36.6 | 36.6 | 36.6 |
| R1234(ze+yf) | mass% | 63.5 | 63.5 | 63.5 | 63.5 | 63.4 | 63.4 | 63.4 |
| x = HFO-1132(E) approximate expression | | 0.0 | | | | | | |
| y = R32 approximate expression | | 00618$r^2$+00675r+36488 | | | | | | |
| z = R1234(ze+yf) approximate expression | | 0.0083$r^2$-0.1392r+82.165 | | | | | | |
| Point B" | | | | | | | | |
| Item | Unit | Point B"r (r = R1234yf/(R1234ze + R12434yf)) | | | | | | |
| | | 0.00 | 0.20 | 0.27 | 0.50 | 0.64 | 0.82 | 1.00 |
| HFO-1132 (E) | mass% | 0.0 | 0.0 | 0.0 | 0.0 | 0.0 | 0.0 | 0.0 |

(continued)

| Point B" | | | | | | | | |
|---|---|---|---|---|---|---|---|---|
| Item | Unit | Point B"r (r = R1234yf/(R1234ze + R12434yf)) | | | | | | |
| | | 0.00 | 0.20 | 0.27 | 0.50 | 0.64 | 0.82 | 1.00 |
| R32 | mass% | 51.4 | 51.5 | 51.5 | 51.5 | 51.5 | 51.5 | 51.5 |
| R1234(ze+yf) | mass% | 48.6 | 48.5 | 48.5 | 48.5 | 48.5 | 48.5 | 48.5 |
| x = HFO-1132(E) approximate expression | | 0.0 | | | | | | |
| y = R32 approximate expression | | $-0.2268r^2+0.2922r+51.422$ | | | | | | |
| z = R1234(ze+yf) approximate expression | | $0.0083r^2-0.1392r+82.165$ | | | | | | |

| Point G | | | | | | | | |
|---|---|---|---|---|---|---|---|---|
| Item | Unit | Point Gr (r= R1234yf/(R1234ze + R12434yf)) | | | | | | |
| | | 0.00 | 0.20 | 0.27 | 0.50 | 0.64 | 0.82 | 1.00 |
| HFO-1132 (E) | mass% | 50.9 | 48.7 | 47.9 | 45.3 | 43.7 | 41.6 | 39.6 |
| R32 | mass% | 0.0 | 0.0 | 0.0 | 0.0 | 0.0 | 0.0 | 0.0 |
| R1234(ze+yf) | mass% | 49.1 | 51.3 | 52.1 | 54.7 | 56.3 | 58.4 | 60.4 |
| x = HFO-1132(E) approximate expression | | $-0.1892r^2-11.155r+50.918$ | | | | | | |
| y = R32 approximate expression | | 0.0 | | | | | | |
| z = R1234(ze+yf) approximate expression | | $01892r^2 + 11.155r+49082$ | | | | | | |

| Point H | | | | | | | | |
|---|---|---|---|---|---|---|---|---|
| Item | Unit | Point Hr (r=R1234yf/(R1234ze+R12434yf)) | | | | | | |
| | | 0.00 | 0.20 | 0.27 | 0.50 | 0.64 | 0.82 | 1.00 |
| HFO-1132 (E) | mass% | 24.3 | 21.7 | 20.8 | 17.7 | 15.8 | 13.4 | 10.9 |
| R32 | mass% | 18.0 | 18.0 | 18.0 | 18.0 | 18.1 | 18.1 | 18.1 |
| R1234(ze+yf) | mass% | 57.7 | 60.2 | 61.2 | 64.3 | 66.1 | 68.5 | 71.0 |
| x = HFO-1132(E) approximate expression | | $-0.4195r^2 - 12.988r + 24.311$ | | | | | | |
| y = R32 approximate expression | | $00618r^2+00675r+17988$ | | | | | | |
| z = R1234(ze+yf) approximate expression | | $0.3577r^2 + 12.9205r + 57.701$ | | | | | | |

| Point J | | | | | | | | |
|---|---|---|---|---|---|---|---|---|
| Item | Unit | Point Jr (r=R1234yf/(R1234ze+R12434yf)) | | | | | | |
| | | 0.00 | 0.20 | 0.27 | 0.50 | 0.64 | 0.82 | 1.00 |
| HFO-1132 (E) | mass% | 0.0 | 0.0 | 0.0 | 0.0 | 0.0 | 0.0 | 0.0 |
| R32 | mass% | 39.1 | 36.5 | 35.6 | 32.7 | 31.0 | 28.9 | 26.8 |
| R1234(ze+yf) | mass% | 60.9 | 63.5 | 64.4 | 67.3 | 69.0 | 71.1 | 73.2 |
| x = HFO-1132(E) approximate expression | | 0.0 | | | | | | |
| y = R32 approximate expression | | $0.9705r^2-13.268r+39.105$ | | | | | | |

(continued)

| Point J | | | | | | | | |
|---|---|---|---|---|---|---|---|---|
| Item | Unit | Point Jr (r=R1234yf/(R1234ze+R12434yf)) | | | | | | |
| | | 0.00 | 0.20 | 0.27 | 0.50 | 0.64 | 0.82 | 1.00 |
| z = R1234(ze+yf) approximate expression | | $-0.9705r^2 + 13.268r + 60.895$ | | | | | | |
| | | | | | | | | |
| Item | Unit | K | $K_{r=0.2}$ | $K_{r=0.27}$ | $K_{r=0.5}$ | $K_{r=0.64}$ | $K_{r=0.82}$ | $K_{r=1}$ |
| HFO-1132 (E) | mass% | 72.0 | 72.0 | 72.0 | 72.0 | 72.0 | 72.0 | 72.0 |
| R32 | mass% | 0.0 | 0.0 | 0.0 | 0.0 | 0.0 | 0.0 | 0.0 |
| R1234(ze+yf) | mass% | 28.0 | 28.0 | 28.0 | 28.0 | 28.0 | 28.0 | 28.0 |
| | | | | | | | | |
| Item | Unit | K' | $K'_{r=0.2}$ | $K'_{r=0.27}$ | $K'_{r=0.5}$ | $K'_{r=0.64}$ | $K'_{r=0.82}$ | $K'_{r=1}$ |
| HFO-1132 (E) | mass% | 57.2 | 57.2 | 57.2 | 57.2 | 57.2 | 57.2 | 57.2 |
| R32 | mass% | 10.0 | 10.0 | 10.0 | 10.0 | 10.0 | 10.0 | 10.0 |
| R1234(ze+yf) | mass% | 32.8 | 32.8 | 32.8 | 32.8 | 32.8 | 32.8 | 32.8 |
| Point L | | | | | | | | |
| Item | Unit | Point Lr (r = R1234yf/(R1234ze + R12434yf)) | | | | | | |
| | | 0 | 0.2 | 0.27 | 0.5 | 0.64 | 0.82 | 1 |
| HFO-1132 (E) | mass% | 48.6 | 48.6 | 48.6 | 48.6 | 48.5 | 48.5 | 48.5 |
| R32 | mass% | 18.1 | 18.1 | 18.1 | 18.1 | 18.2 | 18.2 | 18.2 |
| R1234(ze+yf) | mass% | 33.3 | 33.3 | 33.3 | 33.3 | 33.3 | 33.3 | 33.3 |
| x = HFO-1132(E) approximate expression | | $-0.0618r^2 - 0.0675r + 48.612$ | | | | | | |
| y = R32 approximate expression | | $00618r^2 + 00675r + 18088$ | | | | | | |
| z = R1234(ze+yf) approximate expression | | 33.3 | | | | | | |

Table 18

| Point M | | | | | | | | |
|---|---|---|---|---|---|---|---|---|
| Item | Unit | Point Mr (r = R1234yf/(R1234ze + R12434yf)) | | | | | | |
| | | 0.00 | 0.20 | 0.27 | 0.50 | 0.64 | 0.82 | 1.00 |
| HFO-1132 (E) | mass% | 35.7 | 35.7 | 35.7 | 35.7 | 35.6 | 35.6 | 35.6 |
| R32 | mass% | 36.7 | 36.7 | 36.7 | 36.7 | 36.8 | 36.8 | 36.8 |
| R1234(ze+yf) | mass% | 27.6 | 27.6 | 27.6 | 27.6 | 27.6 | 27.6 | 27.6 |
| x = HFO-1132(E) approximate expression | | $-0.0618r^2 - 0.0675r + 35.712$ | | | | | | |
| y = R32 approximate expression | | $0.0618r^2 + 0.0675r + 36.688$ | | | | | | |
| z = R1234(ze+yf) approximate expression | | 27.6 | | | | | | |

(continued)

| Point N | | | | | | | | |
|---|---|---|---|---|---|---|---|---|
| Item | Unit | Point Nr (r = R1234yf/(R1234ze + R12434yf)) | | | | | | |
| | | 0.00 | 0.20 | 0.27 | 0.50 | 0.64 | 0.82 | 1.00 |
| HFO-1132 (E) | mass% | 28.9 | 28.9 | 28.9 | 28.9 | 28.8 | 28.8 | 28.8 |
| R32 | mass% | 51.6 | 51.6 | 51.6 | 51.6 | 51.7 | 51.7 | 51.7 |
| R1234(ze+yf) | mass% | 19.5 | 19.5 | 19.5 | 19.5 | 19.5 | 19.5 | 19.5 |
| x = HFO-1132(E) approximate expression | | $-0.0618r^2-0.0675r+28.912$ | | | | | | |
| y = R32 approximate expression | | $0.0618r^2 + 0.0675r + 51.588$ | | | | | | |
| z = R1234(ze+yf) approximate expression | | 19.5 | | | | | | |

| Point O | | | | | | | | | | |
|---|---|---|---|---|---|---|---|---|---|---|
| Item | Unit | Point Or (r = R1234yf/(R1234ze + R12434yf)) | | | | | | | | |
| | | 0.00 | 0.20 | 0.27 | 0.27 | 0.50 | 0.64 | 0.64 | 0.82 | 1.00 |
| HFO-1132 (E) | mass% | 38.4 | 42.3 | 43.5 | 43.5 | 47.0 | 48.8 | 48.8 | 50.8 | 52.6 |
| R32 | mass% | 0.0 | 0.0 | 0.0 | 0.0 | 0.0 | 0.0 | 0.0 | 0.0 | 0.0 |
| R1234(ze+yf) | mass% | 61.6 | 57.7 | 56.5 | 56.5 | 53.0 | 51.2 | 51.2 | 49.2 | 47.4 |
| x = HFO-1132(E) approximate expression | | $-8.7302r^2 + 21.246r + 38.4$ | | | $-6.379r^2 + 20.129r + 38.53$ | | | $-3.0864r^2 + 15.617r+40.069$ | | |
| y = R32 approximate expression | | 0.0 | | | 0.0 | | | 0.0 | | |
| z = R1234(ze+yf) approximate expression | | $8.7302r^2-21.246r+61.6$ | | | $6.379r^2 - 20.129r + 61.47$ | | | $3.0864r^2 - 15.617r + 59.931$ | | |

| Point P | | | | | | | | | | |
|---|---|---|---|---|---|---|---|---|---|---|
| Item | Unit | Point Pr (r = R1234yf/(R1234ze + R12434yf)) | | | | | | | | |
| | | 0 | 0.2 | 0.27 | 0.27 | 0.5 | 0.64 | 0.64 | 0.82 | 1 |
| HFO-1132 (E) | mass% | 25.4 | 29.1 | 30.2 | 30.2 | 33.6 | 35.2 | 35.2 | 37.4 | 39.2 |
| R32 | mass% | 5.0 | 5.0 | 5.0 | 5.0 | 5.0 | 5.0 | 5.0 | 5.0 | 5.0 |
| R1234(ze+yf) | mass% | 69.6 | 65.9 | 64.8 | 64.8 | 61.4 | 59.8 | 59.8 | 57.6 | 55.8 |
| x = HFO-1132(E) approximate expression | | $-10.317r^2 + 20.563r + 25.4$ | | | $-9.065r^2 + 21.763r + 24.985$ | | | $-6.1728r^2 + 21.235r + 24.138$ | | |
| y = R32 approximate expression | | 5.0 | | | 5.0 | | | 5.0 | | |
| z = R1234(ze+yf) approximate expression | | $10.317r^2-20.563r + 69.6$ | | | $9.065r^2 - 21.763r + 70.015$ | | | $6.1728r^2 - 21.235r+70.862$ | | |

Table 19

**Point Q**

| Item | Unit | Point Qr ($r=R1234yf/(R1234ze+R12434yf)$) | | | | | | | | |
|---|---|---|---|---|---|---|---|---|---|---|
| | | 0 | 0.2 | 0.27 | 0.27 | 0.5 | 0.64 | 0.64 | 0.82 | 1 |
| HFO-1132 (E) | mass% | 17.6 | 20.1 | 20.8 | 20.8 | 23.3 | 24.5 | 24.5 | 26.1 | 27.7 |
| R32 | mass% | 17.9 | 18.0 | 18.0 | 18.0 | 18.1 | 18.2 | 18.2 | 18.2 | 18.2 |
| R1234(ze+yf) | mass% | 64.5 | 61.9 | 61.2 | 61.2 | 58.6 | 57.3 | 57.3 | 55.7 | 54.1 |
| x=HFO-1132(E) approximate expression | | $-9.2593r^2+14.352r+17.6$ | | | $-6.2112r^2+15.652r+17.027$ | | | $8.8889r+18.811$ | | |
| y=R32 approximate expression | | $-1.8519r^2+0.8704r+17.9$ | | | $0.7554r^2-0.1469r+17.985$ | | | 18.2 | | |
| z=R1234(ze+yf) approximate expression | | $11.1112r^2-15.2224r+64.5$ | | | $5.4558r^2-15.5051r+64.988$ | | | $-8.8889r+62.989$ | | |

**Point R**

| Item | Unit | Point Rr ($r=R1234yf/(R1234ze+R12434yf)$) | | | | | | |
|---|---|---|---|---|---|---|---|---|
| | | 0 | 0.2 | 0.27 | 0.5 | 0.64 | 0.82 | 1 |
| HFO-1132 (E) | mass% | 16.1 | 17.6 | 18.1 | 19.7 | 20.6 | 21.6 | 22.6 |
| R32 | mass% | 36.6 | 36.6 | 36.6 | 36.7 | 36.7 | 36.8 | 36.8 |
| R1234(ze+yf) | mass% | 47.3 | 45.8 | 45.3 | 43.6 | 42.7 | 41.6 | 40.6 |
| x=HFO-1132(E) approximate expression | | $-1.3862r^2+7.8917r+16.089$ | | | | | | |
| y=R32 approximate expression | | $0.0937r^2+0.1466r+36.581$ | | | | | | |
| z=R1234(ze+yf) approximate expression | | $1.2925r^2-8.0383r+47.33$ | | | | | | |

(continued)

| Point S | | | | | | | | |
|---|---|---|---|---|---|---|---|---|
| Item | Unit | Point Sr (r=R1234yf/(R1234ze+R12434yf)) | | | | | | |
| | | 0 | 0.2 | 0.27 | 0.5 | 0.64 | 0.82 | 1 |
| HFO-1132 (E) | mass% | 15.9 | 16.7 | 17.0 | 17.9 | 18.4 | 19.1 | 19.7 |
| R32 | mass% | 51.4 | 51.5 | 51.5 | 51.6 | 51.6 | 51.7 | 51.7 |
| R1234(ze+yf) | mass% | 32.7 | 31.8 | 31.5 | 30.5 | 30.0 | 29.2 | 28.6 |
| x=HFO-1132(E) approximate expression | | $-0.3578r^2+4.1741r+15.894$ | | | | | | |
| y=R32 approximate expression | | $-0.1332r^2+0.4388r+51.403$ | | | | | | |
| z=R1234(ze+yf) approximate expression | | $0.491r^2-4.6129r+32.703$ | | | | | | |

| Point I | | | |
|---|---|---|---|
| Item | Unit | Point Ir | |
| | | 0 | 0.2 |
| HFO-1132 (E) | mass% | 2.7 | 0.0 |
| R32 | mass% | 36.5 | 36.5 |
| R1234(ze+yf) | mass% | 60.8 | 63.5 |
| x=HFO-1132(E) approximate expression | | $-13.5r+2.7$ | |
| y=R32 approximate expression | | 36.5 | |
| z=R1234(ze+yf) approximate expression | | $13.5r+60.8$ | |

Table 20

| Point V | | | | | | | |
|---|---|---|---|---|---|---|---|
| Item | Unit | Point Vr (r=R1234yf/(R1234ze+R12434yf)) | | | | | |
| | | 0 | 0.2 | 0.27 | 0.27 | 0.5 | 0.64 |
| HFO-1132 (E) | mass% | 17.1 | 19.9 | 20.8 | 20.8 | 26.1 | 35.2 |
| R32 | mass% | 24.2 | 19.4 | 18.0 | 18.0 | 12.0 | 5.0 |
| R1234(ze+yf) | mass% | 58.7 | 60.7 | 61.2 | 61.2 | 61.9 | 59.8 |
| x=HFO-1132(E) approximate expression | | $-4.2328r^2+14.847r+17.1$ | | | $113.4r^2-64.271r+29.887$ | | |
| y=R32 approximate expression | | $14.815r^2-26.963r+24.2$ | | | $-64.63r^2+23.678r+16.318$ | | |
| z=R1234(ze+yf) approximate expression | | =D245 | | | $-48.77r^2+40.5931\ r+53.795$ | | |

The coordinates of the points on each line segment were obtained using the approximate expressions as shown below.

Table 21

**Line segment GrHr**

Panel 1

| Item | Unit | $r=0$ $G_r$ | $r=0$ $G'_r$ | $r=0$ $H_r$ | $r=0.2$ $G_r$ | $r=0.2$ $G'_r$ | $r=0.2$ $H_r$ | $r=0.27$ $G_r$ | $r=0.27$ $G'_r$ | $r=0.27$ $H_r$ |
|---|---|---|---|---|---|---|---|---|---|---|
| HFO-1132(E) | mass% | 50.9 | 35.4 | 24.3 | 48.7 | 32.9 | 21.8 | 47.9 | 32.0 | 20.8 |
| R32 | mass% | 0.0 | 10.0 | 18.1 | 0.0 | 10.0 | 18.0 | 0.0 | 10.0 | 18.0 |
| R1234(ze+yf) | mass% | 49.1 | 54.6 | 57.6 | 51.3 | 57.1 | 60.2 | 52.1 | 58.0 | 61.2 |
| x=HFO-1132(E) approximate | | | x | | | x | | | x | |
| y=R32 approximate express | | | 100-x-z | | | 100-x-z | | | 100-x-z | |
| z=R1234(ze+yf) approximate | | $-0.00319x^2-0.0805x+61.433$ | | | $-0.00328x^2-0.1007x+63.947$ | | | $-0.00313x^2-0.1194x+65.046$ | | |

Panel 2

| Item | Unit | $r=0.27$ $G_r$ | $r=0.27$ $G'_r$ | $r=0.27$ $H_r$ | $r=0.5$ $G_r$ | $r=0.5$ $G'_r$ | $r=0.5$ $H_r$ | $r=0.64$ $G_r$ | $r=0.64$ $G'_r$ | $r=0.64$ $H_r$ |
|---|---|---|---|---|---|---|---|---|---|---|
| HFO-1132(E) | mass% | 47.9 | 32.0 | 20.8 | 45.2 | 29.0 | 17.8 | 43.7 | 27.3 | 15.7 |
| R32 | mass% | 0.0 | 10.0 | 18.0 | 0.0 | 10.0 | 18.0 | 0.0 | 10.0 | 18.0 |
| R1234ze | mass% | 52.1 | 58.0 | 61.2 | 54.8 | 61.0 | 64.2 | 56.3 | 62.7 | 66.2 |
| x=HFO-1132(E) approximate | | | x | | | x | | | x | |
| y=R32 approximate express | | | 100-x-z | | | 100-x-z | | | 100-x-z | |
| z=R1234(ze+yf) approximate | | $-0.00313x^2-0.1194x+65.046$ | | | $-0.00352x^2-0.12x+67.458$ | | | $-0.00318x^2-0.1658x+69.582$ | | |

Panel 3

| Item | Unit | $r=0.64$ $G_r$ | $r=0.64$ $G'_r$ | $r=0.64$ $H_r$ | $r=0.82$ $G_r$ | $r=0.82$ $G'_r$ | $r=0.82$ $H_r$ | $r=1$ $G_r$ | $r=1$ $G'_r$ | $r=1$ $H_r$ |
|---|---|---|---|---|---|---|---|---|---|---|
| HFO-1132(E) | mass% | 43.7 | 27.3 | 15.7 | 41.6 | 25.0 | 13.3 | 39.6 | 22.8 | 11.0 |
| R32 | mass% | 0.0 | 10.0 | 18.1 | 0.0 | 10.0 | 18.1 | 0.0 | 10.0 | 18.1 |
| R1234ze | mass% | 56.3 | 62.7 | 66.2 | 58.4 | 65.0 | 68.6 | 60.4 | 67.2 | 70.9 |
| x=HFO-1132(E) approximate | | | x | | | x | | | x | |
| y=R32 approximate express | | | 100-x-z | | | 100-x-z | | | 100-x-z | |
| z=R1234(ze+yf) approximate | | $-0.00318x^2-0.1658x+69.582$ | | | $-0.0032x^2-0.186x+71.636$ | | | $-0.0032x^2-0.2058x+73.549$ | | |

(continued)

| Line segment GrHr | | | | | | | | | | | | | |
| --- | --- | --- | --- | --- | --- | --- | --- | --- | --- | --- | --- | --- | --- |
| Item | Unit | r | $G_r$ | $G'_r$ | $H_r$ | r | $G_r$ | $G'_r$ | $H_r$ | r | $G_r$ | $G'_r$ | $H_r$ |
| R1234(ze+yf) approximate expression when x=HFO-1132 (E) and r=yf/(rf+ze) | | r | a | b | c | r | a | b | c | r | a | b | c |
| | | 0 | -0.00319 | -0.0805 | 61.433 | 0.27 | -0.00313 | -0.1194 | 65.046 | 0.64 | -0.00318 | -0.1658 | 69.582 |
| | | 0.2 | -0.00328 | -0.1007 | 63.947 | 0.5 | -0.00352 | -0.12 | 67.458 | 0.82 | -0.0032 | -0.186 | 71.636 |
| | | 0.27 | -0.00313 | -0.1194 | 65.046 | 0.64 | -0.00318 | -0.1658 | 69.582 | 1 | -0.0032 | -0.2058 | 73.549 |
| | | $(0.00965r^2-0.0024r-0.00319)x^2+ (-06153r^2+0.0221r-0.0805)x+ (11.593r^2+10.251r+61.433)$ | | | | $(0.011147r^2-0.010278r-0.00111674)x^2+ (-0.8771r^2+0.6728r-0.2371)x+$ | | | | $(0.0003r^2-0.0006r-0.0029)x^2+ (0.0062r^2-0.1212r-0.0907)x+ (2.1759r^2+15.588r+61.137)$ | | | |

Table 22

| Line segment KrLr | | | | | | | | | | | | | |
|---|---|---|---|---|---|---|---|---|---|---|---|---|---|
| Item | Unit | r | $K_r$ | $K'_r$ | $L_r$ | r | $K_r$ | $K'_r$ | $L_r$ | r | $K_r$ | $K'_r$ | $L_r$ |
| HFO-1132 (E) | mass% | 0 | 72.0 | 57.2 | 48.6 | 0.27 | 72.0 | 57.2 | 48.6 | 0.64 | 72.0 | 57.2 | 48.5 |
| R32 | mass% | | 0.0 | 10.0 | 18.1 | | 0.0 | 10.0 | 18.1 | | 0.0 | 10.0 | 18.2 |
| R1234 (ze+yf) | mass% | | 28.0 | 32.8 | 33.3 | | 28.0 | 32.8 | 33.3 | | 28.0 | 32.8 | 33.3 |
| x=HFO-1132(E) approximat | | | x | | | | x | | | | x | | |
| y=R32 approximate express | | | 100-x-z | | | | 100-x-z | | | | 100-x-z | | |
| z=R1234(ze+yf) approximat | | | $-0.0114x^2+1.1454x+4.503$ | | | | $-0.0114x^2+1.1454x+4.603$ | | | | $-0.01138x2+1.1428x+4.685$ | | |
| HFO-1132 (E) | mass% | 0.2 | 72.0 | 57.2 | 48.6 | 0.5 | 72.0 | 57.2 | 48.6 | 0.82 | 72.0 | 57.2 | 48.5 |
| R32 | mass% | | 0.0 | 10.0 | 18.1 | | 0.0 | 10.0 | 18.1 | | 0.0 | 10.0 | 18.2 |
| R1234ze | mass% | | 28.0 | 32.8 | 33.3 | | 28.0 | 32.8 | 33.3 | | 28.0 | 32.8 | 33.3 |
| x=HFO-1132(E) approximat | | | x | | | | x | | | | x | | |
| y=R32 approximate express | | | 100-x-z | | | | 100-x-z | | | | 100-x-z | | |
| z=R1234(ze+yf) approximat | | | $-0.0114x^2+1.1454x+4.603$ | | | | $-0.0114x^2+1.1454x+4.603$ | | | | $-0.01138x2+1.1428x+4.685$ | | |

EP 3 978 830 A1

| Line segment KrLr | | | | | | | | | | | | | |
|---|---|---|---|---|---|---|---|---|---|---|---|---|---|
| Item | Unit | r | $K_r$ | $K'_r$ | $L_r$ | r | $K_r$ | $K'_r$ | $L_r$ | r | $K_r$ | $K'_r$ | $L_r$ |
| HFO-1132 (E) | mass% | | 72.0 | 57.2 | 48.6 | | 72.0 | 57.2 | 48.5 | | 72.0 | 57.2 | 48.5 |
| R32 | mass% | | 0.0 | 10.0 | 18.1 | | 0.0 | 10.0 | 18.2 | | 0.0 | 10.0 | 18.2 |
| R1234ze | mass% | | 28.0 | 32.8 | 33.3 | | 28.0 | 32.8 | 33.3 | | 28.0 | 32.8 | 33.3 |
| x=HFO-1132(E) approximat | | 0.27 | x | | | 0.64 | x | | | 1 | x | | |
| y=R32 approximate express | | | 100-x-z | | | | 100-x-z | | | | 100-x-z | | |
| z=R1234(ze+yf) approximat | | | $-0.0114x^2+1.1454x+4.503$ | | | | $-0.01138x2+1.1428x+4.685$ | | | | $-0.01138x2+1.1428x+4.685$ | | |

| R1234(ze+yf) approximate expression when x=HFO-1132(E) and r=yf/(rf+ze) | r | a | b | c | r | a | b | c | r | a | b | c |
|---|---|---|---|---|---|---|---|---|---|---|---|---|
| | 0 | -0.0114 | 1.1454 | 4.503 | 0.27 | -0.0114 | 1.1454 | 4.603 | 0.64 | -0.01138 | 1.1428 | 4.685 |
| | 0.2 | -0.0114 | 1.1454 | 4.503 | 0.5 | -0.0114 | 1.1454 | 4.603 | 0.82 | -0.01138 | 1.1428 | 4.685 |
| | 0.27 | -0.0114 | 1.1454 | 4.503 | 0.64 | -0.01138 | 1.1428 | 4.685 | 1 | -0.01138 | 1.1428 | 4.685 |
| | $-0.0114x2+1.1454x+4.503$ | | | | $(0.0003861r2-0.0002973r-0.011348)x2+ (-0.050193r2+0.038649r+1.1386)x+$ | | | | $-0.01138x2+1.1428x+4.685$ | | | |

EP 3 978 830 A1

EP 3 978 830 A1

Table 23

| Item | Unit | r | $O_r$ | $O'_r$ | $P_r$ | r | $O_r$ | $O'_r$ | $P_r$ | r | $O_r$ | $O'_r$ | $P_r$ |
|---|---|---|---|---|---|---|---|---|---|---|---|---|---|
| Line segment OrPr | | | | | | | | | | | | | |
| HFO-1132 (E) | mass% | 0 | 38.4 | 30.3 | 25.4 | 0.27 | 43.5 | 35.5 | 30.2 | 0.64 | 48.8 | 40.8 | 35.2 |
| R32 | mass% | | 0.0 | 2.5 | 5.0 | | 0.0 | 2.5 | 5.0 | | 0.0 | 2.5 | 5.0 |
| R1234 (ze+yf) | mass% | | 61.6 | 67.2 | 69.6 | | 56.5 | 62.0 | 64.8 | | 51.2 | 56.7 | 59.8 |
| x=HFO-1132(E) approximat | | | x | | | | x | | | | x | | |
| y=R32 approximate express | | | 100-x-z | | | | 100-x-z | | | | 100-x-z | | |
| z=R1234(ze+yf) approximat | | | $-0.0155x^2+0.3738x+70.108$ | | | | $-0.01195x^2+0.2581x+67.922$ | | | | $-0.0098x^2+0.1949x+65.043$ | | |
| HFO-1132 (E) | mass% | 0.2 | 42.3 | 34.3 | 29.1 | 0.5 | 45.6 | 38.9 | 33.6 | 0.82 | 50.8 | 42.9 | 37.4 |
| R32 | mass% | | 0.0 | 2.5 | 5.0 | | 0.0 | 2.5 | 5.0 | | 0.0 | 2.5 | 5.0 |
| R1234ze | mass% | | 57.7 | 63.2 | 65.9 | | 54.4 | 58.6 | 61.4 | | 49.2 | 54.6 | 57.6 |
| x=HFO-1132(E) approximat | | | x | | | | x | | | | x | | |
| y=R32 approximate express | | | 100-x-z | | | | 100-x-z | | | | 100-x-z | | |
| z=R1234(ze+yf) approximat | | | $-0.01273+0.289x+68.286$ | | | | $-0.0082x^2+0.0672x+68.415$ | | | | $-0.0103x^2+0.2821x+61.466$ | | |

(continued)

| Line segment OrPr | | | | | | | | | | | | | |
|---|---|---|---|---|---|---|---|---|---|---|---|---|---|
| Item | Unit | r | $O_r$ | $O'_r$ | $P_r$ | r | $O_r$ | $O'_r$ | $P_r$ | r | $O_r$ | $O'_r$ | $P_r$ |
| HFO-1132 (E) | mass% | | 43.5 | 35.5 | 30.2 | | 48.8 | 40.8 | 35.2 | | 52.6 | 44.7 | 39.2 |
| R32 | mass% | | 0.0 | 2.5 | 5.0 | | 0.0 | 2.5 | 5.0 | | 0.0 | 2.5 | 5.0 |
| R1234ze | mass% | 0.27 | 56.5 | 62.0 | 64.8 | 0.64 | 51.2 | 56.7 | 59.8 | 1 | 47.4 | 52.8 | 55.8 |
| x=HFO-1132(E) approximat | | | x | | | | x | | | | x | | |
| y=R32 approximate express | | | 100-x-z | | | | 100-x-z | | | | 100-x-z | | |
| z=R1234(ze+yf) approximat | | | $-0.01195x^2+0.2581x+67.922$ | | | | $-0.0098x^2+0.1949x+65.043$ | | | | $-0.0103x^2+0.3192x+59.125$ | | |
| | | r | a | b | c | r | a | b | c | r | a | b | c |
| R1234(ze+yf) approximate expression when x=HFO-1132(E) and r=yf/(rf+ze) | | 0 | -0.0155 | 0.3738 | 70.108 | 0.27 | -0.01195 | 0.2581 | 67.922 | 0.64 | -0.0098 | 0.1949 | 65.043 |
| | | 0.2 | -0.01273 | 0.289 | 68.286 | 0.5 | -0.0082 | 0.0672 | 68.415 | 0.82 | -0.0103 | 0.2821 | 61.466 |
| | | 0.27 | -0.01195 | 0.2581 | 67.922 | 0.64 | -0.0098 | 0.1949 | 65.043 | 1 | -0.0103 | 0.3192 | 59.125 |
| | | $(-0.0102r^2+0.0159r-0.0155)x^2+ (-0.0646r^2-0.4111r+0.3738)x+ (14.481r^2-12.006r+70.108)$ | | | | $(-0.07485r^2+0.074r-0.0265)x^2+ (4.7085r^2-4.4555r+1.1178)x+ (-70.89r^2+56.729r+57.773)$ | | | | $(0.0077r^2-0.014r-0.004)x^2+ (-0.7731r^2+1.6132r-0.5209)x+ (19.074r^2-47.72r+87.771)$ | | | |

EP 3 978 830 A1

Table 24

| Line segment PrQr | | | | | | | | | | | | | |
|---|---|---|---|---|---|---|---|---|---|---|---|---|---|
| Item | Unit | r | $P_r$ | $P'_r$ | $Q_r$ | r | $P_r$ | $P'_r$ | $Q_r$ | r | $P_r$ | $P'_r$ | $Q_r$ |
| HFO-1132 (E) | mass% | 0 | 25.4 | 20.4 | 17.6 | 0.27 | 30.2 | 24.5 | 20.1 | 0.64 | 35.2 | 29.1 | 24.5 |
| R32 | mass% | | 5.0 | 10.0 | 17.9 | | 5.0 | 10.0 | 18.0 | | 5.0 | 10.0 | 18.2 |
| R1234 (ze+yf) | mass% | | 69.6 | 69.6 | 64.5 | | 64.8 | 65.5 | 61.9 | | 59.8 | 60.9 | 57.3 |
| x=HFO-1132(E) approximat | | | x | | | | x | | | | x | | |
| y=R32 approximate express | | | 100-x-z | | | | 100-x-z | | | | 100-x-z | | |
| z=R1234(ze+yf) approximat | | | $-0.2335x^2+10.695x2-51.4$ | | | | $-0.0932x^2+4.9734x-0.43$ | | | | $-0.09x^2+5.6063x-26.04$ | | |
| HFO-1132 (E) | mass% | 0.2 | 29.1 | 23.5 | 20.1 | 0.5 | 33.6 | 27.4 | 23.3 | 0.82 | 37.4 | 30.9 | 26.1 |
| R32 | mass% | | 5.0 | 10.0 | 18.0 | | 5.0 | 10.0 | 18.1 | | 5.0 | 10.0 | 18.2 |
| R1234ze | mass% | | 65.9 | 66.5 | 61.9 | | 61.4 | 62.6 | 58.6 | | 57.6 | 59.1 | 55.7 |
| x=HFO-1132(E) approximat | | | x | | | | x | | | | x | | |
| y=R32 approximate express | | | 100-x-z | | | | 100-x-z | | | | 100-x-z | | |
| z=R1234(ze+yf) approximat | | | $-0.1622x^2+8.4262x2-41.92$ | | | | $-0.1135x^2+6.7306x2-36.6$ | | | | $-0.0831x^2+5.4454x-29.81$ | | |
| HFO-1132 (E) | mass% | 0.27 | 30.2 | 24.5 | 20.1 | 0.64 | 35.2 | 29.1 | 24.5 | 1 | 39.2 | 32.4 | 27.7 |
| R32 | mass% | | 5.0 | 10.0 | 18.0 | | 5.0 | 10.0 | 18.2 | | 5.0 | 10.0 | 18.2 |
| R1234ze | mass% | | 64.8 | 65.5 | 61.9 | | 59.8 | 60.9 | 57.3 | | 55.8 | 57.6 | 54.1 |
| x=HFO-1132(E) approximat | | | x | | | | x | | | | x | | |
| y=R32 approximate express | | | 100-x-z | | | | 100-x-z | | | | 100-x-z | | |
| z=R1234(ze+yf) approximat | | | $-0.0932x^2+4.9734x-0.43$ | | | | $-0.09x^2+5.6063x-26.04$ | | | | $-0.0878x^2+6.0198x-45.3$ | | |

| Line segment PrQr | | | | | | | | | | | | |
|---|---|---|---|---|---|---|---|---|---|---|---|---|
| Item | Unit | r | $P_r$ | $P'_r$ | $Q_r$ | r | $P_r$ | $P'_r$ | $Q_r$ | r | $P_r$ | $P'_r$ | $Q_r$ |
| R1234(ze+yf) approximate expression when x=HFO-1132 (E) and r=yf/(rf+ze) | | r | a | b | c | r | a | b | c | r | a | b | c |
| | | 0 | -0.2335 | 10.695 | -51.4 | 0.27 | -0.0932 | 4.9734 | -0.43 | 0.64 | -0.09 | 5.6063 | -26.04 |
| | | 0.2 | -0.1622 | 8.4262 | -41.92 | 0.5 | -0.1135 | 6.7306 | -36.6 | 0.82 | -0.0831 | 5.4454 | -29.81 |
| | | 0.27 | -0.0932 | 4.9734 | -0.43 | 0.64 | -0.09 | 5.6063 | -26.04 | 1 | -0.0878 | 6.0198 | -45.3 |
| | | $(2.3304r^2-0.1096r-0.2335)x^2+ (-140.67r^2+16.791r+10.695)x+ (2019.7r^2-356.54r-51.4)$ | | | | $(0.6922r^2-0.6213r+0.0241)x^2+ (-42.353r^2+40.252r-2.8071)x+ (628.89r^2-641.51r+126.93)$ | | | | $(-0.179r^2+0.2997r-0.2085)x^2+ (11.347r^2-17.461r+12.133)x+ (-180.86r^2+243.12r-107.55)$ | | | |

Description of Reference Numerals

1: Sample cell
2: High-speed camera
3: Xenon lamp
4: Collimating lens
5: Collimating lens
6: Ring filter

**Claims**

1. A composition comprising a refrigerant,
   the refrigerant comprising trans-1,2-difluoroethylene (HFO-1132(E)), difluoromethane (R32), and 1,3,3,3-tetrafluoropropene (R1234ze).

2. The composition according to claim 1,
   wherein
   when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LM, MN, NB", B"J, JI, IH, HG, and GK that connect the following 9 points:

   point K (72.0, 0.0, 28.0),
   point L (48.6, 18.1, 33.3),
   point M (35.7, 36.7, 27.6),
   point N (28.9, 51.6, 19.5),
   point B" (0.0, 51.4, 48.6),
   point J (0.0, 39.1, 60.9),
   point I (2.7, 36.5, 60.8),
   point H (24.3, 18.0, 57.7), and
   point G (50.9, 0.0, 49.1),
   or on the line segments KL, LM, MN, NB", JI, IH, and HG (excluding point B", point J, point G, and point K),

   the line segments LM, MN, NB", B"J, JI, IH, and GK are straight lines,
   coordinates (x,y,z) of the points on the line segment KL are represented by (x, $0.0114x^2$-2.1454x+95.397, $-0.0114x^2$+1.1454x+4.603), and
   coordinates (x,y,z) of the points on the line segment HG are represented by (x, $0.00319x^2$-0.9195x+38.567, $-0.00319x^2$-0.0805x+61.433).

3. The composition according to claim 1,
   wherein
   when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LM, MI, IH, HG, and GK that connect the following 6 points:

   point K (72.0, 0.0, 28.0),
   point L (48.6, 18.1, 33.3),
   point M (35.7, 36.7, 27.6),
   point I (2.7, 36.5, 60.8),
   point H (24.3, 18.0, 57.7), and
   point G (50.9, 0.0, 49.1),
   or on the line segments KL, LM, MI, IH, and HG (excluding point G and point K),

   the line segments LM, MI, IH, and GK are straight lines,

coordinates (x,y,z) of the points on the line segment KL are represented by (x, $0.0114x^2$-2.1454x+95.397, - $0.0114x^2$+1.1454x+4.603), and

coordinates (x,y,z) of the points on the line segment HG are represented by(x, $0.00319x^2$-0.9195x+38.567, -$0.00319x^2$-0.0805x+61.433).

4. The composition according to claim 1,
wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LH, HG, and GK that connect the following 4 points:

point K (72.0, 0.0, 28.0),
point L (48.6, 18.1, 33.3),
point H (24.3, 18.0, 57.7), and
point G (50.9, 0.0, 49.1),
or on the line segments KL, LH, and HG (excluding point G and point K),

the line segments LH and GK are straight lines,
coordinates (x,y,z) of the points on the line segment KL are represented by (x, $0.0114x^2$-2.1454x+95.397, - $0.0114x^2$+1.1454x+4.603), and
coordinates (x,y,z) of the points on the line segment HG are represented by (x, $0.00319x^2$-0.9195x+38.567, -$0.00319x^2$-0.0805x+61.433).

5. The composition according to claim 1,
wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LM, MN, NF, FE, ED, DC, and CK that connect the following 8 points:

point K (72.0, 0.0, 28.0),
point L (48.6, 18.1, 33.3),
point M (35.7, 36.7, 27.6),
point N (28.9, 51.6, 19.5),
point F (1.0, 51.5, 47.5),
point E (16.7, 36.5, 46.8),
point D (39.8, 18.1, 42.1), and
point C (67.6, 0.0, 32.4),
or on the line segments KL, LM, MN, NF, FE, ED, and DC (excluding point C and point K),

the line segments LM, MN, NF, FE, ED, and CK are straight lines,
coordinates (x,y,z) of the points on the line segment KL are represented by (x, $0.0114x^2$-2.1454x+95.397, - $0.0114x^2$+1.1454x+4.603), and
coordinates (x,y,z) of the points on the line segment DC are represented by (x, $0.00257x^2$-0.9261x+50.903, -$0.00257x^2$-0.0739x+49.097).

6. The composition according to claim 1,
wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LM, ME, ED, DC, and CK that connect the following 6 points:

point K (72.0, 0.0, 28.0),
point L (48.6, 18.1, 33.3),
point M (35.7, 36.7, 27.6),
point E (16.7, 36.5, 46.8),

point D (39.8, 18.1, 42.1), and
point C (67.6, 0.0, 32.4),
or on the line segments KL, LM, ME, ED, and DC (excluding point C and point K),

    the line segments LM, ME, ED, and CK are straight lines,
coordinates (x,y,z) of the points on the line segment KL are represented by (x, $0.0114x^2-2.1454x+95.397$, $-0.0114x^2+1.1454x+4.603$), and
coordinates (x,y,z) of the points on the line segment DC are represented by (x, $0.00257x^2-0.9261x+50.903$, $-0.00257x^2-0.0739x+49.097$).

7.  The composition according to claim 1,
wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by line segments KL, LD, DC, and CK that connect the following 4 points:

    point K (72.0, 0.0, 28.0),
point L (48.6, 18.1, 33.3),
point D (39.8, 18.1, 42.1), and
point C (67.6, 0.0, 32.4),
or on the line segments KL, LD, and DC (excluding point C and point K),

    the line segments LD and CK are straight lines,
coordinates (x,y,z) of the points on the line segment KL are represented by (x, $0.0114x^2-2.1454x+95.397$, $-0.0114x^2+1.1454x+4.603$), and
coordinates (x,y,z) of the points on the line segment DC are represented by (x, $0.00257x^2-0.9261x+50.903$, $-0.00257x^2-0.0739x+49.097$).

8.  The composition according to claim 1,
wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by straight lines VR, RS, SB'', B''J, JI, and IV that connect the following 6 points:

    point V (17.1, 24.2, 58.7),
point R (16.1, 36.6, 47.3),
point S (15.9, 51.4, 32.7),
point B'' (0.0, 51.4, 48.6),
point J (0.0, 39.1, 60.9), and
point I (2.7, 36.5, 60.8),
or on the straight lines VR, RS, SB'', JI, and IV (excluding point B" and point J).

9.  The composition according to claim 1,
wherein
when the mass% of HFO-1132(E), R32, and R1234ze based on their sum in the refrigerant is respectively represented by x, y, and z, coordinates (x,y,z) in a ternary composition diagram in which the sum of HFO-1132(E), R32, and R1234ze is 100 mass% are within the range of a figure surrounded by straight lines US, SF, and FU that connect the following 3 points:

    point U (16.1, 37.1, 46.8),
point S (15.9, 51.4, 32.7), and
point F (1.0, 51.5, 47.5),
or on the straight lines US, SF, and FU.

10.  The composition according to claim 1,
wherein the refrigerant further comprises R1234yf.

**11.** The composition according to claim 10, wherein

when the mass% of HFO-1132(E) is x, the mass% of R32 is y, and the mass% of the sum of R1234ze and R1234yf is z, based on the sum of HFO-1132(E), R32, R1234ze, and R1234yf in the refrigerant, and when r=R1234yf/(R1234ze+R1234yf),

(1) if $0.2 \geq r > 0$, coordinates (x,y,z) in a ternary composition diagram whose first vertex represents HFO-1132(E), second vertex represents R32, and third vertex represents the sum of 1234ze and R1234yf are within the range of a figure surrounded by line segments $K_rL_r$, $L_rM_r$, $M_rN_r$, $N_rB_r''$ , $Br''J_r$, $J_rI_r$, $I_rH_r$, $H_rG_r$, and $G_rK_r$ that connect the following 9 points:

point $K_r$ (72.0, 0.0, 28.0),
point $L_r$ ($-0.0618r^2-0.0675r+48.612$, $0.0618r^2+0.0675r+18.088$, 33.3),
point $M_r$ ($-0.0618r^2-0.0675r+35.712$, $0.0618r^2+0.0675r+36.688$, 27.6),
point $N_r$ ($-0.0618r^2-0.0675r+28.912$, $0.0618r^2+0.0675r+51.588$, 19.5),
point $B_r''$ (0, $-0.2268r^2+0.2922r+51.422$, $0.0083r^2-0.1392r+82.165$),
point $J_r$ (0, $0.9705r^2-13.268r+39.105$, $-0.9705r^2+13.268r+60.895$),
point $I_r$ ($-13.5r+2.7$, 36.5, $13.5r+60.8$),
point $H_r$ ($-0.4195r^2-12.988r+24.311$, $0.0618r^2+0.0675r+17.988$, $0.3577r^2+12.9205r+57.701$), and
point $G_r$ ($-0.1892r^2-11.155r+50.918$, 0.0, $0.1892r^2+11.155r+49.082$), or on the line segments $K_rL_r$, $L_rM_r$, $M_rN_r$, $N_rB_r''$, $J_rI_r$, $I_rH_r$, and $H_rG_r$ (excluding point $B_r''$, point $J_r$, point $G_r$, and point $K_r$),

the line segments $L_rM_r$, $M_rN_r$, $N_rB_r''$, $B_r''J_r$, $J_rI_r$, $I_rH_r$, and $G_rK_r$ are straight lines,
coordinates (x,y,z) of the points on the line segment $K_rL_r$ are represented by (x, 100-x-z, $-0.0114x^2+1.1454x+4.503$), and
coordinates (x,y,z) of the points on the line segment $H_rG_r$ are represented by (x, 100-x-z, $(0.00965r^2-0.0024r-0.00319)x^2+(-0.6153r^2+0.0221r-0.0805)x+(11.593r^2+10.251r+61.433)$),

(2) if $1>r>0.2$, coordinates (x,y,z) in the ternary composition diagram are within the range of a figure surrounded by line segments $K_rL_r$, $L_rM_r$, $M_rN_r$, $N_rB_r''$, $B_r''J_r$, $J_rH_r$, $H_rG_r$, and $G_rK_r$ that connect the following 8 points:

point $K_r$ (72.0, 0.0, 28.0),
point $L_r$ ($-0.0618r^2-0.0675r+48.612$, $0.0618r^2+0.0675r+18.088$, 33.3),
point $M_r$ ($-0.0618r^2-0.0675r+35.712$, $0.0618r^2+0.0675r+36.688$, 27.6),
point $N_r$ ($-0.0618r^2-0.0675r+28.912$, $0.0618r^2+0.0675r+51.588$, 19.5),
point $B_r''$ (0, $-0.2268r^2+0.2922r+51.422$, $0.0083r^2-0.1392r+82.165$),
point $J_r$ (0, $0.9705r^2-13.268r+39.105$, $-0.9705r^2+13.268r+60.895$),
point $H_r$ ($-0.4195r^2-12.988r+24.311$, $0.0618r^2+0.0675r+17.988$, $0.3577r^2+12.9205r+57.701$), and
point $G_r$ ($-0.1892r^2-11.155r+50.918$, 0.0, $0.1892r^2+11.155r+49.082$), or on the line segments $K_rL_r$, $L_rM_r$, $M_rN_r$, $N_rB_r''$, $J_rH_r$, and $H_rG_r$ (excluding point $B_r''$, point $J_r$, point $G_r$, and point $K_r$), and

the line segments $L_rM_r$, $M_rN_r$, $N_rB_r''$, , $B_r''J_r$, $J_rH_r$, and $G_rK_r$ are straight lines,
wherein
(2-1) if $0.27 \geq r > 0.2$,
coordinates (x,y,z) of the points on the line segment $K_rL_r$ are represented by (x, 100-x-z, $-0.0114x^2+1.1454x+4.503$), and
coordinates (x,y,z) of the points on the line segment $H_rG_r$ are represented by (x, 100-x-z, $((0.00965r^2-0.0024r-0.00319)x^2+(-0.6153r^2+0.0221r-0.0805)x+(11.593r^2+10.251r+61.433)$), and
(2-2) if $0.64 \geq r > 0.27$,
coordinates (x,y,z) of the points on the line segment $K_rL_r$ are represented by (x, 100-x-z, $(0.0003861r^2-0.0002973r-0.011348)x^2+(-0.050193r^2+0.038649r+1.1386)x+(1.583r^2-1.2189r+4.8167)$), and
coordinates (x,y,z) of the points on the line segment $H_rG_r$ are represented by (x, 100-x-z, $(0.011147r^2-0.010278r-0.00111674)x^2+(-0.8771r^2+0.6728r-0.2371)x+(12.661r^2+0.7382r+63.924)$), and

(3) if $1>r>0.64$,

coordinates (x,y,z) of the points on the line segment $K_rL_r$ are represented by (x, 100-x-z, $-0.01138x^2+1.1428x+4.685$), and

coordinates (x,y,z) of the points on the line segment $H_rG_r$ are represented by (x, 100-x-z, $(0.0003r^2-0.0006r-0.0029)x^2+(0.0062r^2-0.1212r-0.0907)x+(2.1759r^2+15.588r+61.137)$).

**12.** The composition according to claim 10,
wherein
when the mass% of HFO-1132(E) is x, the mass% of R32 is y, and the mass% of the sum of R1234ze and R1234yf is z, based on the sum of HFO-1132(E), R32, R1234ze, and R1234yf in the refrigerant, and when r=R1234yf/(R1234ze+R1234yf), coordinates (x,y,z) in a ternary composition diagram whose first vertex represents HFO-1132(E), second vertex represents R32, and third vertex represents the sum of 1234ze and R1234yf are within the range of a figure surrounded by line segments $K_rL_r$, $L_rH_r$, $H_rG_r$, and $G_rK_r$ that connect the following 4 points:

point $K_r$ (72.0, 0.0, 28.0),
point $L_r$ ($-0.0618r^2-0.0675r+48.612$, $0.0618r^2+0.0675r+18.088$, 33.3),
point $H_r$ ($-0.4195r^2-12.988r+24.311$, $0.0618r^2+0.0675r+17.988$, $0.3577r^2+12.9205r+57.701$), and
point $G_r$ ($-0.1892r^2-11.155r+50.918$, 0.0, $0.1892r^2+11.155r+49.082$), or on the line segments $K_rL_r$, $L_rH_r$, and $H_rG_r$ (excluding point $G_r$ and point $K_r$), and

the line segments $L_rH_r$ and $G_rK_r$ are straight lines,
wherein
(2-1) if $0.27{\geq}r{>}0.2$,
coordinates (x,y,z) of the points on the line segment $K_rL_r$ are represented by (x, 100-x-z, $-0.0114x^2+1.1454x+4.503$), and
coordinates (x,y,z) of the points on the line segment $H_rG_r$ are represented by (x, 100-x-z, $((0.00965r^2-0.0024r-0.00319)x^2+(-0.6153r^2+0.0221r-0.0805)x+(11.593r^2+10.251r+61.433))$),
(2-2) if $0.64{\geq}r{>}0.27$,
coordinates (x,y,z) of the points on the line segment $K_rL_r$ are represented by (x, 100-x-z, $(0.0003861r^2-0.0002973r-0.011348)x^2+(-0.050193r^2+0.038649r+1.1386)x+(1.583r^2-1.2189r+4.8167)$), and
coordinates (x,y,z) of the points on the line segment $H_rG_r$ are represented by (x, 100-x-z, $(0.011147r^2-0.010278r-0.00111674)x^2+(-0.8771r^2+0.6728r-0.2371)x+(12.661r^2+0.7382r+63.924)$), and
(2-3) if $1{>}r{>}0.64$,
coordinates (x,y,z) of the points on the line segment $K_rL_r$ are represented by (x, 100-x-z, $-0.01138x^2+1.1428x+4.685$), and
coordinates (x,y,z) of the points on the line segment $H_rG_r$ are represented by (x, 100-x-z, $(0.0003r^2-0.0006r-0.0029)x^2+(0.0062r^2-0.1212r-0.0907)x+(2.1759r^2+15.588r+61.137)$).

**13.** The composition according to claim 10,
wherein
when the mass% of HFO-1132(E) is x, the mass% of R32 is y, and the mass% of the sum of R1234ze and R1234yf is z, based on the sum of HFO-1132(E), R32, R1234ze, and R1234yf in the refrigerant, and when r=R1234yf/(R1234ze+R1234yf),

(1) if $0.2{\geq}r{>}0$, coordinates (x,y,z) in a ternary composition diagram whose first vertex represents HFO-1132(E), second vertex represents R32, and third vertex represents the sum of 1234ze and R1234yf are within the range of a figure surrounded by line segments $V_rR_r$, $R_rS_r$, $S_rB_r"$, $B_r"J_r$, $J_rI_r$, and $I_rV_r$ that connect the following 6 points:

point $V_r$ ($-4.2328r^2+14.847r+17.1$, $14.815r^2-26.963r+24.2$, $-10.5822r^2+12.116r+58.7$),
point $R_r$ ($-1.3862r^2+7.8917r+16.089$, $0.0937r^2+0.1466r+36.581$, $1.2925r^2-8.0383r+47.33$),
point $S_r$ ($-0.3578r^2+4.1741r+15.894$, $-0.1332r^2+0.4388r+51.403$, $-0.491r^2-4.6129r+32.703$),
point $B_r"$ (0, $-0.2268r^2+0.2922r+51.422$, $0.0083r^2-0.1392r+82.165$),
point $J_r$ (0, $0.9705r^2-13.268r+39.105$, $-0.9705r^2+13.268r+60.895$), and
point $I_r$ ($-13.5r+2.7$, 36.5, $13.5r+60.8$),
or on the line segments $V_rR_r$, $R_rS_r$, $S_rB_r"$, $J_rI_r$, and $I_rV_r$ (excluding point $B_r"$ and point $J_r$), and
the line segments $V_rR_r$, $R_rS_r$, $S_rB_r"$, $B_r"J_r$, $J_rI_r$, and $I_rV_r$ are straight lines,

(2) if $0.27{\geq}r{>}0.2$, coordinates (x,y,z) in the ternary composition diagram are within the range of a figure surrounded by line segments $V_rR_r$, $R_rS_r$, $S_rB_r"$, $B_r"J_r$, and $J_rV_r$ that connect the following 5 points:

point $V_r$ ($-4.2328r^2+14.847r+17.1$, $14.815r^2-26.963r+24.2$, $-10.5822r^2+12.116r+58.7$),

point $R_r$ (-1.3862$r^2$+7.8917r+16.089, 0.0937$r^2$+0.1466r+36.581, 1.2925$r^2$-8.0383r+47.33),
point $S_r$ (-0.3578$r^2$+4.1741r+15.894, -0.1332$r^2$+0.4388r+51.403, 0.491$r^2$-4.6129r+32.703),
point $B_r$" (0, -0.2268$r^2$+0.2922r+51.422, 0.0083$r^2$-0.1392r+82.165), and
point $J_r$ (0, 0.9705$r^2$-13.268r+39.105, -0.9705$r^2$+13.268r+60.895),
or on the line segments $V_rR_r$, $R_rS_r$, $S_rB_r$", and $J_rV_r$ (excluding point $B_r$" and point $J_r$), and
the line segments $V_rR_r$, $R_rS_r$, $S_rB_r$", $B_r"J_r$, , and $J_rV_r$ are straight lines,

(3) if 0.64≥r>0.27, coordinates (x,y,z) in the ternary composition diagram are within the range of a figure surrounded by line segments $V_rQ_r$, $Q_rR_r$, $R_rS_r$, $S_rB_r$", $B_r"J_r$, $J_rH_r$, and $H_rV_r$ that connect the following 7 points:

point $V_r$(113.4$r^2$-64.271r+29.887, -64.63$r^2$+23.678r+16.318, - 48.77$r^2$+40.5931r +53.795),
point $Q_r$ (-6.2112$r^2$+15.652r+17.027, 0.7554$r^2$-0.1469r+17.985, 5.4558$r^2$-15.5051r+64.988),
point $R_r$ (-1.3862$r^2$+7.8917r+16.089, 0.0937$r^2$+0.1466r+36.581, 1.2925$r^2$-8.0383r+47.33),
point $S_r$ (-0.3578$r^2$+4.1741r+15.894, -0.1332$r^2$+0.4388r+51.403, 0.491$r^2$-4.6129r+32.703),
point $B_r$" (0, -0.2268$r^2$+0.2922r+51.422, 0.0083$r^2$-0.1392r+82.165),
point $J_r$ (0, 0.9705$r^2$-13.268r+39.105, -0.9705$r^2$+13.268r+60.895), and
point $H_r$ (-0.4195$r^2$-12.988r+24.311, 0.0618$r^2$+0.0675r+17.988, 0.3577$r^2$+12.9205r+57.701),
or on the line segments $V_rQ_r$, $Q_rR_r$, $R_rS_r$, $S_rB_r$", $J_rH_r$, and $H_rV_r$ (excluding point $B_r$" and point $J_r$), and
the line segments $V_rR_r$, $Q_rR_r$, $R_rS_r$, $S_rB_r$", $B_r"J_r$, $J_rH_r$, and $H_rV_r$ are straight lines, and

(4) if 1.0>r>0.64, coordinates (x,y,z) in the ternary composition diagram are within the range of a figure surrounded by line segments $O_rP_r$, $P_rQ_r$, $Q_rR_r$, $R_rS_r$, $S_rB_r$", $B_r"J_r$, $J_rH_r$, $H_rG_r$, and $G_rK_r$ that connect the following 9 points:

point $O_r$ (-3.0864$r^2$+15.617r+40.069, 0.0, 3.0864$r^2$-15.617r+59.931),
point $P_r$ (-6.1728$r^2$+21.235r+24.138, 5.0, 6.1728$r^2$-21.235r+70.862),
point $Q_r$ (8.8889r+18.811, 18.2, -8.8889r+62.989),
point $R_r$ (-1.3862$r^2$+7.8917r+16.089, 0.0937$r^2$+0.1466r+36.581, 1.2925$r^2$-8.0383r+47.33),
point $S_r$ (-0.3578$r^2$+4.1741r+15.894, -0.1332$r^2$+0.4388r+51.403, 0.491$r^2$-4.6129r+32.703),
point $B_r$" (0, -0.2268$r^2$+0.2922r+51.422, 0.0083$r^2$-0.1392r+82.165),
point $J_r$ (0, 0.9705$r^2$-13.268r+39.105, -0.9705$r^2$+13.268r+60.895),
point $H_r$ (-0.4195$r^2$-12.988r+24.311, 0.0618$r^2$+0.0675r+17.988, 0.3577$r^2$+12.9205r+57.701), and
point $G_r$ (-0.1892$r^2$-11.155r+50.918, 0.0, 0.1892$r^2$+11.155r+49.082), or on the line segments $O_rP_r$, $P_rQ_r$, $Q_rR_r$, $R_rS_r$, $S_rB_r$", $J_rH_r$, and $H_rG_r$ (excluding point $O_r$, point $B_r$", point $J_r$, and point $G_r$),

the line segments $Q_rR_r$, $R_rS_r$, $S_rB_r$", $B_r"J_r$, and $J_rH_r$ are straight lines,
coordinates (x,y,z) of the points on the line segment $O_rP_r$ are represented by (x, 100-x-z, (0.0077$r^2$-0.014r-0.004)$x^2$+(-0.7731$r^2$+1.6132r-0.5209)x+(19.074$r^2$-47.72r+87.771)),
coordinates (x,y,z) of the points on the line segment $P_rQ_r$ are represented by (x, 100-x-z, (-0.179$r^2$+0.2997r-0.2085)$x^2$+(11.347$r^2$-17.461r+12.133)x+(-180.86$r^2$+243.12r-107.55)), and
coordinates (x,y,z) of the points on the line segment $H_rG_r$ are represented by (x, 100-x-z, (0.0003$r^2$-0.0006r-0.0029)$x^2$+(0.0062$r^2$-0.1212r-0.0907)x+(2.1759$r^2$+15.588r+61.137)).

**14.** The composition according to any one of claims 1 to 13, for use as a working fluid for a refrigerating machine, wherein the composition further comprises a refrigeration oil.

**15.** The composition according to any one of claims 1 to 14, for use as an alternative refrigerant for R410A.

**16.** Use of the composition according to any one of claims 1 to 14 as an alternative refrigerant for R410A.

**17.** A refrigerating machine comprising the composition according to any one of claims 1 to 14 as a working fluid.

**18.** A method for operating a refrigerating machine, comprising the step of circulating the composition according to any one of claims 1 to 14 as a working fluid in a refrigerating machine.

Fig. 1

Fig. 2

Fig. 3

Fig. 4

Fig. 5

Fig. 6

Fig. 7

Fig. 8

## INTERNATIONAL SEARCH REPORT

| International application No. |
| --- |
| PCT/JP2020/024132 |

**A.  CLASSIFICATION OF SUBJECT MATTER**
F25B 1/00(2006.01)i; C09K 5/04(2006.01)i
FI: C09K5/04 F; C09K5/04 E; F25B1/00 396Z

According to International Patent Classification (IPC) or to both national classification and IPC

**B.  FIELDS SEARCHED**

Minimum documentation searched (classification system followed by classification symbols)
F25B1/00; C09K5/04

| Documentation searched other than minimum documentation to the extent that such documents are included in the fields searched | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

**C.  DOCUMENTS CONSIDERED TO BE RELEVANT**

| Category* | Citation of document, with indication, where appropriate, of the relevant passages | Relevant to claim No. |
| --- | --- | --- |
| X | WO 2015/186557 A1 (ASAHI GLASS CO., LTD.) 10.12.2015 (2015-12-10) claims, examples | 1-18 |
| X | WO 2015/186558 A1 (ASAHI GLASS CO., LTD.) 10.12.2015 (2015-12-10) claims, paragraphs [0043]-[0045], examples | 1-18 |
| A | WO 2012/157765 A1 (ASAHI GLASS CO., LTD.) 22.11.2012 (2012-11-22) | 1-18 |
| A | WO 2015/125883 A1 (ASAHI GLASS CO., LTD.) 27.08.2015 (2015-08-27) | 1-18 |

☐  Further documents are listed in the continuation of Box C.   ☒  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 27 August 2020 (27.08.2020) | 08 September 2020 (08.09.2020) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**
Information on patent family members

International application No.

PCT/JP2020/024132

| Patent Documents referred in the Report | Publication Date | Patent Family | Publication Date |
|---|---|---|---|
| WO 2015/186557 A1 | 10 Dec. 2015 | US 2017/0058173 A1 claims, examples EP 3153559 A1 CN 106414654 A | |
| WO 2015/186558 A1 | 10 Dec. 2015 | US 2017/0058171 A1 claims, paragraphs [0050]-[0053] EP 3153560 A1 CN 106414655 A | |
| WO 2012/157765 A1 | 22 Nov. 2012 | US 2014/0077123 A1 EP 2711407 A1 CN 103547652 A | |
| WO 2015/125883 A1 | 27 Aug. 2015 | US 2016/0355717 A1 EP 3109304 A1 CN 106029854 A | |

Form PCT/ISA/210 (patent family annex) (January 2015)

**EP 3 978 830 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015141678 A